# EUROPEAN PATENT APPLICATION

(11) **EP 4 772 082 A1**
(43) Date of publication of application: **08.07.2026**
(21) Application number: 24870211.0
(22) Date of filing: 19.08.2024
(51) Int. Cl.: A47J 31/42, A47J 31/40, A47J 31/44

(54) **EFFICIENT DRIVING MECHANISM, BEVERAGE APPARATUS, AND CONTROL METHOD THEREFOR**

(30) Priority: 26.09.2023 CN 202311252628; 26.09.2023 CN 202322622299 U; 26.09.2023 CN 202322622297 U; 26.09.2023 CN 202322622296 U; 22.12.2023 CN 202311779893; 22.12.2023 CN 202323514593 U; 28.02.2024 CN 202420372119 U; 28.02.2024 CN 202420372113 U
(71) Applicant: CAYE TECHNOLOGY (SUZHOU) CO., LTD., Suzhou, Jiangsu 215000 (CN)
(72) Inventor: WU, Peng, Suzhou, Jiangsu 215000 (CN)
(74) Representative: Michalski Hüttermann & Partner mbB
(86) International application number: PCT/CN2024/112959
(87) International publication number: WO 2025/066665

(57) **Abstract**

A high-efficiency intelligent beverage device includes a grinding device, a brewing device, and a control device. The grinding device includes a grinding portion and a discharge portion. The brewing device includes a brewing container. At least one of the brewing container and the discharge portion is movably arranged relative to the other, enabling a powder-receiving state and a brewing state. Before determining that the brewing container and the discharge portion have moved into the powder-receiving state, the control device pre-forms powder not less than a required weight in the grinding portion. Upon confirming that the brewing container and the discharge portion are in the powder-receiving state, the control device directs the discharge portion to transfer the powder into the brewing container to save time. A control method for the high-efficiency intelligent beverage device is also disclosed.

## Description

### TECHNICAL FIELD

The present invention relates to the field of beverage processing technology, specifically to a high-efficiency driving mechanism, a beverage device, and a control method thereof.

### BACKGROUND

To ensure the taste and quality of coffee extraction, coffee beans are ground just before the extraction process to preserve their flavor. A fully automatic coffee machine is a device that can grind coffee beans into powder and brew coffee with a single button. In the current coffee-making process, the beans are first ground into powder by a grinding device, and the coffee powders is then discharged into a brewing container of a brewing device at a powder collection point. Then, the brewing container is moved to a brewing position, and a compacting mechanism compresses the coffee powders inside into a powder cake. Finally, the pressed powder cake is brewed and extracted to produce coffee. Grinding the coffee beans into powder is one of the more time-consuming steps in the entire coffee extraction process.

In the existing technologies, when the brewing container moves to a powder-receiving position, the grinding device starts and grinds coffee powders. Then, when the brewing container moves away from the powder-receiving position, the grinding device stops grinding coffee powders. When the brewing container returns to the powder-receiving position after moving to the brewing position and completing a first beverage, the grinding device restarts and grinds coffee powders. This cycle repeats, increasing the waiting time of the brewing container at the powder-receiving position, thereby reducing the efficiency of coffee preparation.

Existing beverage preparation devices, such as coffee machines, typically integrates functions like grinding coffee beans, transferring coffee powders, extraction and brewing, and cleaning residue. Among these, coffee machines are equipped with a brewing assembly that includes a brewing container. Ground coffee is poured into the brewing container, where it is pressurized and subjected to high-temperature extraction. After each cup of coffee is prepared, the powder cake inside the brewing container needs to be expelled. Usually, the powder cake is pushed out of the brewing container and cleared away using structures like a scraper. Coffee powders, after undergoing high-temperature extraction, possess a certain degree of adhesion. With prolonged use, coffee residue tends to accumulate on the scraper. During the scraping process, the grounds cake may break apart and stick to the scraper. When the brewing container is used again for brewing, coffee residue can easily be introduced into it, leading to contamination of the brewing container. This, in turn, affects the extraction quality of the beverage, resulting in a deterioration of its taste and overall quality.

Existing beverage preparation devices, such as coffee machines, typically integrates functions like grinding coffee beans, transferring coffee powders, extraction and brewing, and cleaning residue. Among these, coffee machines are equipped with a brewing assembly that includes a brewing container. Ground coffee is poured into the brewing container, where it is pressurized and subjected to high-temperature extraction. After each cup of coffee is prepared, the powder cake inside the brewing container needs to be expelled. Usually, the powder cake is pushed out of the brewing container and cleared away using structures like a scraper. Since existing scum scrapers are typically designed with a rigid structure, they are too hard to fully conform to the cleaning surface of the brewing container. This results in contamination of both the brewing container and a surface of a scum component during scraping, leading to poor scum removal effectiveness.

A coffee machine is a device that grinds coffee beans into powder and brews coffee. In the current coffee-making process, the beans are first ground into powder by a grinding device, and the coffee powders is then discharged into a brewing chamber of a brewing device at a powder collection point. Then, a compacting mechanism compresses the coffee powders in the brewing chamber into a powder cake. Finally, the compressed powder cake is brewed and extracted to produce coffee. However, during the process of the brewing chamber receiving the coffee powders, the concentrated drop point of the powder causes it to accumulate into a conical shape. If the coffee powders fall unevenly into the brewing chamber, it results in an uneven powder cake during subsequent pressing in which some parts denser and others looser. During extraction, the water flow, due to its inert nature, tends to pass through easier paths. That is, the water flows more readily through the looser areas, leading to over-extraction there, while the denser parts remain under-extracted, causing uneven extraction. This directly affects the stability of coffee extraction and the taste of the brewed coffee, often disrupting the balance and force of the pressing process. It can also lead to powder scattering, resulting in poor pressing effects and compromising the quality of the prepared coffee.

### SUMMARY

A main object of the present invention is to propose a beverage device and a control method thereof, aiming to address an issue in existing technologies where a brewing container must wait at a powder-receiving position for a grinding device to grind powder, which reduces the efficiency of coffee preparation.

In the technical solution provided by the present invention, before the control device determines that the brewing container and the grinding device move to the powder-receiving state, the grinding device is preemptively activated to operate, enabling it to grind the granular materials into powder of the required weight. Subsequently, the brewing container and the grinding device move to the powder-receiving state. At this time, the brewing container does not need to wait for the grinding device to complete grinding, allowing it to receive the powder of the required weight immediately. This helps significantly reduce the waiting time of the brewing container in the powder-receiving state, thereby shortening the preparation time of the beverage. Moreover, it ensures that the execution rhythms of various mechanisms in the high-efficiency intelligent beverage device are orderly and compact, contributing to improved beverage preparation efficiency.

In the technical solution provided by the present invention, the first piston component moves vertically in the brewing container under the drive of the first driving mechanism, and simultaneously drives the brewing container to move horizontally, thereby achieving the movement between the powder-receiving position and the brewing position. During the movement, the first piston component remains inside the brewing container without the need to control its entry or exit, which helps improve the efficiency of beverage preparation. Additionally, this simplifies the sealing between the first piston component and the brewing container, thereby extending the service life of the first piston component.

In the technical solution provided by the present invention, the driving device is configured with double groove segments both horizontally and vertically, which helps significantly reduce the reciprocating operation time of the brewing container, thereby shortening the preparation time of beverages. It also ensures that the execution rhythm of each mechanism in the high-efficiency intelligent beverage device is orderly and compact, thereby contributing to improved beverage preparation efficiency.

In the technical solution provided by the present invention, the grinding device is preemptively activated before the control device determines that the brewing container and the grinding device have moved into the powder-receiving state. This allows the grinding device to grind the granular materials into powder of the required weight before the brewing container and the grinding device transition into the powder-receiving state. At this time, the brewing container can receive the powder of the required weight without waiting for the grinding device to complete its grinding process. This helps significantly reduce the waiting time of the brewing container in the powder-receiving state, thereby shortening the preparation time of the beverage. Additionally, it ensures that the execution rhythms of various mechanisms in the high-efficiency intelligent beverage device are orderly and compact, thereby contributing to improved beverage preparation efficiency.

In the technical solution provided by the present invention, under the drive of the first driving mechanism, the first cleaning component and the brewing cylinder undergo a first relative movement stroke. During this process, the first cleaning component can clean the area to be cleaned on the brewing cylinder, scraping out the residue accumulated in that area, thereby completing the cleaning of the brewing cylinder's area to be cleaned. Under the drive of the second driving mechanism, the first cleaning component and the second cleaning component undergo a second relative movement stroke. During this process, the second cleaning component can scrape off residues adhering to the corresponding side surface of the first cleaning component, ensuring that the first cleaning component meets the required cleanliness. This ensures that when the first cleaning component cleans the area to be cleaned on the brewing cylinder again, it does not introduce external contaminants into the brewing cylinder, thereby guaranteeing that each cleaning of the brewing cylinder is simple and efficient.

In the technical solution provided by the present invention, under the drive of the first driving mechanism, the cleaning component and the brewing container undergo a relative movement along the first direction. During this process, both the first cleaning unit and the second cleaning unit slide against the area to be cleaned, providing at least two cleaning operations sequentially. Since the second cleaning unit contacts the area to be cleaned earlier than the first cleaning unit, and has greater softness, it can increase the contact area with the area to be cleaned and enhance surface conformity through elastic deformation during the first cleaning operation, thereby improving the comprehensiveness of cleaning. Subsequently, during the second cleaning operation performed by the first cleaning unit, due to its lower softness and relatively higher stiffness, it can strengthen the contact force with the area to be cleaned, thus enhancing the thoroughness of cleaning. This application contributes to the overall optimization of the cleaning effect on the area to be cleaned in the brewing container.

In the technical solution provided by the present invention, an installation plate is arranged, with both the brewing cylinder and the cleaning component positioned below it, allowing the brewing cylinder to undergo a relative movement relative to the cleaning component. During this process, the area to be cleaned on the brewing cylinder can be cleaned without affecting the area above the installation plate. During cleaning, residue and powder fall downwardly, and with the installation plate shielding the upper area, it prevents any upward contamination that could affect the cleanliness of the structures at a top of the installation plate. This application contributes to the overall optimization of the cleaning effect on the brewing assembly. Driven by the driving mechanism, the cleaning component and the brewing cylinder undergo relative movement, enhancing the contact and pressing force against the area to be cleaned, thereby improving the thoroughness of cleaning. This application aids in the overall optimization of the cleaning effect on the area to be cleaned of the brewing cylinder.

In the technical solution provided by the present invention, after the ground powder discharged by the grinding device enters the brewing chamber through the inlet, it accumulates in a conical shape on the bottom wall of the brewing chamber. During the process of the brewing chamber receiving the powder, and/or after the brewing chamber completes the operation of receiving the required amount of powder, and/or before the tamping operation is performed in the brewing chamber, since the movable component can reciprocate vertically, its vertical movement accelerates the sliding of the powder located at the top of the conical pile. This causes the coffee powders to spread more evenly on the bottom wall of the brewing chamber, forming a relatively flat surface to be tamped, which is more beneficial for the subsequent tamping mechanism to achieve balanced compression. It also helps to stabilize the coffee powders on the bottom wall of the brewing chamber, preventing powder from scattering or falling, thereby enhancing the reliability of the subsequent tamping operation and ultimately improving the quality of coffee preparation.

### BRIEF DESCRIPTION OF DRAWINGS

To provide a clearer explanation of the technical solutions in the embodiments of the present invention, the following will briefly introduce the drawings required for describing the embodiments. Obviously, the drawings in the following description are merely some embodiments of the present invention. It is understandable to those of ordinary skill in the art that other drawings can be obtained based on the structures shown in these drawings without creative effort.
FIG. 1 is a partial perspective schematic view of a beverage preparation device in accordance with an embodiment of the present invention;
FIG. 2 is an assembly schematic view of two brewing devices in FIG. 1;
FIG. 3 is a top schematic view of the two brewing devices in FIG. 2;
FIG. 4 is an exploded assembly schematic view of a single brewing device (including a compacting mechanism) in FIG. 1;
FIG. 5 is an exploded schematic view of a main structure of the single brewing device (excluding the compacting mechanism) in FIG. 4;
FIG. 6 is an enlarged structural schematic view of a guide groove in FIG. 5;
FIG. 7 is a schematic flowchart of a control method for the beverage preparation device in accordance with a first embodiment of the present invention;
FIG. 8 is a schematic flowchart of a control method for the beverage preparation device in accordance with a second embodiment of the present invention;
FIG. 9 is a schematic flowchart of a control method for the beverage preparation device in accordance with a third embodiment of the present invention;
FIG. 10 is a schematic flowchart of a control method for the beverage preparation device in accordance with a fourth embodiment of the present invention;
FIG. 11 is a perspective schematic view of a self-cleaning brewing system for the beverage preparation device in accordance with an embodiment of the present invention, with a brewing container at a powder-receiving position;
FIG. 12 is a structural schematic view of the self-cleaning brewing system in FIG. 11;
FIG. 13 is a top schematic view of the self-cleaning brewing system in FIG. 11;
FIG. 14 is a perspective schematic view of the self-cleaning brewing system in accordance with an embodiment of the present invention, with the brewing container at the brewing position;
FIG. 15 is a longitudinal cross-sectional schematic view of the self-cleaning brewing system in FIG. 14;
FIG. 16 is an assembly schematic view of a first cleaning component, a second cleaning component and a first piston component which are assembled on a base in FIG. 14;
FIG. 17 is an assembly schematic view of the first cleaning component, the second cleaning component and the first piston component in FIG. 14;
FIG. 18 is a perspective schematic view of the brewing device in accordance with an embodiment from a first perspective;
FIG. 19 is a perspective schematic view of the brewing device in FIG. 18 from a second perspective;
FIG. 20 is a top structural schematic view of the brewing device in FIG. 18;
FIG. 21 is a perspective schematic view of the cleaning component in FIG. 18 from a first perspective;
FIG. 22 is a perspective schematic view of the cleaning component in FIG. 18 from a second perspective;
FIG. 23 is a front schematic view of the brewing device in FIG. 18 when the first piston component ejects the coffee ground;
FIG. 24 is a longitudinal cross-sectional schematic view of the brewing device in FIG. 23;
FIG. 25 is a perspective schematic view of the brewing device in FIG. 23 from a first perspective;
FIG. 26 is a perspective schematic view of the brewing device in FIG. 23 from a second perspective;
FIG. 27 is a perspective schematic view of the brewing device in FIG. 23 from a third perspective;
FIG. 28 is an enlarged structural schematic view of area A in FIG. 27;
FIG. 29 is a perspective schematic view a brewing module for a beverage preparation device in accordance with another embodiment;
FIG. 30 is a top schematic view of the brewing module applied to the beverage preparation device in FIG. 29;
FIG. 31 is a partial assembly schematic view of a brewing device and a first driving mechanism in FIG. 29;
FIG. 32 is an exploded schematic view of a main structure of the brewing device and the first driving mechanism in FIG. 31;
FIG. 33 is a partial enlarged schematic view of a guide groove on a drive rod in FIG. 32;
FIG. 34 is an activity schematic view of a first piston component in a brewing container in FIG. 29, where the first piston component is at a low powder-shaking position of a second stroke H2;
FIG. 35 is an activity schematic view of the first piston component in the brewing container in FIG. 29, where the first piston component is at a high powder-shaking position of the second stroke H2;
FIG. 36 is an activity schematic view of the first piston component in the brewing container in FIG. 29, where the first piston component returns to the low powder-shaking position of the second stroke H2; and
FIG. 37 is an activity schematic view of the first piston component in the brewing container in FIG. 29, where the first piston component performs the first stroke H1.

The realization of the objectives, functional features, and advantages of the present invention will be further explained in conjunction with the embodiments and with reference to the accompanying drawings.

### DETAILED DESCRIPTION

The technical solutions in the embodiments of the present invention will be described clearly and completely in conjunction with the accompanying drawings in the embodiments of the present invention. Obviously, the described embodiments are only a part of the embodiments of the present invention, not all of them. Based on the embodiments of the present invention, all other embodiments obtained by those of ordinary skill in the art without creative efforts shall fall within the protection scope of the present invention.

It should be noted that if directional indications (such as top, bottom, left, right, front, back, etc.) are involved in the embodiments of the present invention, these directional indications are only used to explain the relative positional relationships and movements between components in a specific posture (as shown in the accompanying drawings). If the specific posture changes, the directional indications will change accordingly.

Besides, if descriptions such as "first", "second", etc., are involved in the embodiments of the present invention, these terms are used for descriptive purposes only and should not be construed as indicating or implying relative importance or implicitly specifying the quantity of the indicated technical features. Thus, features defined with "first", "second", etc., may explicitly or implicitly include at least one such feature. Furthermore, the meaning of "and/or" appearing throughout the text includes three parallel options. Taking "A and/or B" as an example, it includes option A, option B, and an option where both A and B are satisfied. Additionally, technical solutions from various embodiments may be combined, but this must be based on what can be achieved by those of ordinary skill in the art. When the combination of technical solutions results in contradictions or is unachievable, such a combination should be considered non-existent and not within the scope of protection claimed by the present invention.

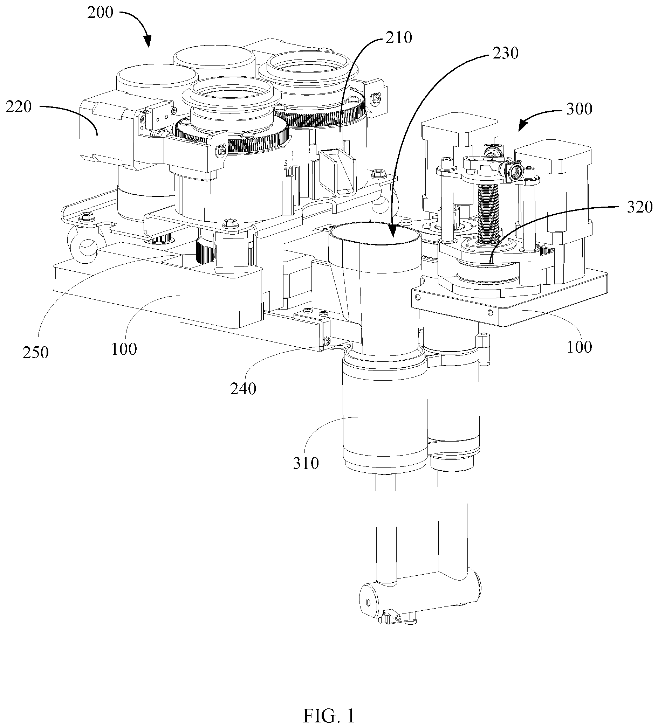

Referring to FIG. 1 to FIG. 3, the high-efficiency intelligent beverage device provided by the present invention includes a grinding device 200, a brewing device 300 and a control device. The grinding device 200 is used to grind granular materials to form a powder. The brewing device 300 includes a brewing container 310. The grinding device 200 and the brewing container 310 are independently arranged, and have a powder-receiving state. The control device is used to control the grinding device 200 to pre-start grinding and form the powder not less than a required brewing weight before determining that the brewing container 310 and the grinding device 200 are in the powder-receiving state. The control device is used to control the grinding device 200 to deliver the powder into the brewing container 310 when it is determined that the brewing container 310 and the grinding device 200 are in the powder-receiving state.

In the technical solution provided by the present invention, before the control device determines that the brewing container 310 and/or a discharge portion moves to a powder-receiving position 110, the grinding device 200 is preemptively activated. This ensures that after the grinding device 200 grinds the granular materials into the required weight of powder, the brewing container 310 and the grinding device 200 move to the powder-receiving position 110. At this time, the brewing container 310 can receive the required weight of powder without waiting for the grinding device 200 to complete its grinding process. This helps significantly reduce the waiting time of the brewing container 310 at the powder-receiving position 110, thereby shortening the preparation time of beverages. Additionally, it ensures that the execution rhythm of each mechanism in the high-efficiency intelligent beverage device is orderly and compact, thereby contributing to improved beverage preparation efficiency.

It should be noted that the present invention does not impose restrictions on the specific forms and uses of high-efficiency intelligent beverage device, which may include but are not limited to coffee machines, soymilk makers, and high-speed blenders. Correspondingly, the granular materials mentioned in the present invention may include but are not limited to coffee beans, soybeans, and various grains. The powdered materials referred to in the present invention may include but are not limited to coffee powders, soybean powder, and various grain powders.

Given the above, the present invention further includes a base 100. The base 100 primarily refers to a plate-like structure, a block-like structure, a box structure, a frame structure, etc., used for installing the grinding device 200, the brewing device 300 and the control device. The base 100 may be integrally formed, such as a casing of a high-efficiency intelligent beverage device. And/or, the base 100 may include multiple structural units, each of which can be used for fixed installation of the grinding device 200, the brewing device 300 and the control device, respectively. The structural units remain relatively fixed to each other, or some structural units are designed to have relative movement relative to others based on actual needs, to achieve changes and adjustments in the relative positions of functional components such as the grinding device 200, the brewing device 300, and the control device.

In the present invention, there is a powder-receiving state between the grinding device 200 and the brewing container 310. The powder-receiving state is defined as a positional state when the brewing container 310 and the discharge portion are close to each other. At this time, the positions of both the brewing container 310 and the discharge portion are at the powder-receiving position 110. Additionally, the brewing device 300 further includes a brewing mechanism. There is also a brewing state between the brewing container 310 and the brewing mechanism, and the position when both the brewing container 310 and the brewing mechanism are switched to the brewing state is a brewing position 120.

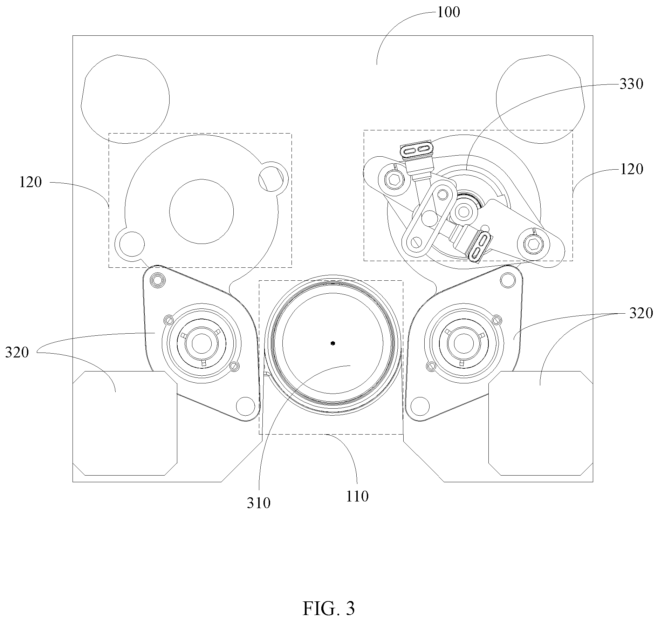

The base 100 defines the powder-receiving position 110 and the brewing position 120, which are spaced approximately horizontally. The powder-receiving position 110 and/or the brewing position 120 may be defined by visual structures or markings. For example, as shown in FIG. 3, a partially hollowed-out area on the base 100 defines the powder-receiving position 110. Of course, the powder-receiving position 110 and/or the brewing position 120 may also be defined by installation positions of related functional components. For example, as shown in FIG. 3, the installation position of the compacting mechanism 330 coincides with and is shared with the brewing position 120.

In one embodiment, the grinding device 200 includes a grinding portion and the discharge portion. The grinding portion is used to grind the granular materials into the powder. The discharge portion is used to discharge the powder outward. At least one of the discharge portion and the brewing container 310 is movably arranged relative to a remaining one of the discharge portion and the brewing container 310.

In practical application, typically, at least the discharge portion of the grinding device 200 is positioned at the powder-receiving position 110 and above an inlet of the brewing container 310, allowing the coffee ground processed by the grinding portion and discharged through an outlet to fall into the brewing chamber of the brewing container 310 under the force of gravity.

In light of the above, at least one of the brewing container 310 and the discharge portion is movably arranged relative to the base 100. Specifically, it can be configured such that the brewing container 310 is fixed relative to the base 100, and the discharge portion is movably arranged to approach and move away from the brewing container 310. Alternatively, it can be configured such that the discharge portion is fixed relative to the base 100, and the brewing container 310 is movably arranged to approach and move away from the discharge portion. Alternatively, both the discharge portion and the brewing container 310 are movably arranged relative to the base 100, and they can move toward and away from each other. For ease of understanding, in the following embodiments, it is described with the example where the discharge portion is fixed relative to the base 100, and the brewing container 310 is movably arranged to approach and move away from the discharge portion.

Furthermore, it is understandable that a driving force for the movement of the brewing container 310 and/or the discharge portion can come from manual operation by a user or can be automatically performed by utilizing gravity. Alternatively, in one embodiment, the high-efficiency intelligent beverage device further includes a first driving mechanism 320. The first driving mechanism 320 is connected to the movably arranged brewing container 310 and/or the discharge portion to drive the brewing container 310 and the discharge portion to move and switch between the powder-receiving position 110 and the brewing position 120. The control device is also electrically connected to the first driving mechanism 320 to control the grinding portion to pre-form the powder not less than the required weight before the first driving mechanism 320 drives the brewing container 310 and the discharge portion to move to the powder-receiving position 110. When the first driving mechanism 320 drives the brewing container 310 and the discharge portion to move to the powder-receiving position 110, the control device controls the discharge portion to feed the powder into the brewing container 310. In this way, by actively controlling the first driving mechanism 320 through the control device, the timing of switching the relative positions of the brewing container 310 and the discharge portion can be accurately determined without the need for additional components such as sensors to detect whether the brewing container 310 and the discharge portion have moved to the powder-receiving position 110 or the brewing position 120.

When the discharge portion is fixed relative to the base 100 as described above, and the brewing container 310 is movable in directions toward and away from the discharge portion, the first driving mechanism 320 is drivingly connected to the brewing container 310.

Given the above, in one embodiment, the grinding device 200 further includes a grinding container 210, a grinding mechanism 220, and a transfer container 230. The grinding container 210 forms a grinding chamber which is provided with a grinding discharge outlet. The grinding mechanism 220 is used to grind the granular materials entering the grinding chamber to form the powder. The transfer container 230 forms a transfer chamber which is provided with a transfer inlet and a transfer outlet. The transfer inlet is in communication with the grinding discharge outlet to store the powder discharged from the grinding chamber. The grinding container 210 and the grinding mechanism 220 together constitute the grinding portion. The transfer container 230 constitutes the discharge portion. In this way, under the control of the control device, the grinding mechanism 220 can be pre-started to grind and form a sufficient amount of powder in the grinding chamber of the grinding container 210. The powder formed in the grinding chamber can enter the transfer chamber immediately or after a certain delay, and be well contained and stored. When the brewing container 310 moves to the powder-receiving position 110, the transfer outlet of the transfer chamber can be in communication with the brewing inlet of the brewing container 310, directly and promptly transferring the pre-stored powder from the transfer chamber to the brewing chamber without additional waiting for the grinding portion to produce the powder.

In another embodiment, the grinding device 200 further includes a grinding container 210, a grinding mechanism 220, a transfer container 230, an opening-closing component 240, and a second driving mechanism 250. The specific configurations of the grinding container 210, the grinding mechanism 220 and the transfer container 230 can be referred to as described above. Furthermore, the opening-closing component 240 is movably disposed at the transfer outlet to open and close it as needed. The second driving mechanism 250 is drivingly connected to the opening-closing component 240. The control device is electrically connected to both the grinding mechanism 220 and the second driving mechanism 250. The control device activates the grinding mechanism 220. Before the brewing container 310 and the transfer container 230 move to the powder-receiving position 110, the control device controls the second driving mechanism 250 to drive the opening-closing component 240 to close the transfer outlet. When the brewing container 310 and the transfer container 230 move to the powder-receiving position 110, the control device controls the second driving mechanism 250 to drive the opening-closing component 240 to open the transfer outlet.

Specifically, the specific manifestation of the grinding container 210 is not limited and can be set to the desired shape, size, material, and quantity according to actual needs. The grinding mechanism 220 includes a cutting tool movably arranged in the grinding chamber. The cutting tool may be, but is not limited to, one or several of blade discs, blades, piercing knives, etc. The movement method of the tool is associated with its specific type, aiming to grind the coffee beans into the coffee powders of the desired coarseness through its own movement. The grinding mechanism 220 further includes a driving component used to drive the movement of the tool, such as a motor, a gear set, etc., which is not limited in the present invention. When the control device controls the grinding mechanism 220 to start operation, it can be understood that it also controls the driving component in the grinding mechanism 220 to be energized and run.

The relative orientation between the transfer container 230 and the grinding container 210 is not limited. In the following embodiments, the grinding container 210 is described as being vertically above the transfer container 230, meaning it is positioned above it. That is, the grinding discharge outlet is located above the transfer inlet, allowing the powder produced in the grinding chamber to be transferred downwardly into the transfer chamber by gravity.

The transfer container 230 can be integrally formed with the grinding container 210. In this case, the transfer container 230 and the grinding container 210 appear as a single shell structure. An inner chamber of the entire shell structure has an inlet and an outlet, with the inner chamber near the inlet forming the grinding chamber, and the inner chamber near the outlet forming the transfer chamber.

Alternatively, the transfer container 230 can be configured separately from the grinding container 210. In this case, the transfer container 230 and the grinding container 210 appear as two independent shell structures. The inlet of the transfer container 230 is connected and in communication with the outlet of the grinding container 210. The inlet of the transfer container 230 and the outlet of the grinding container 210 can be seamlessly aligned and connected, aligned and connected with a certain distance in between, or connected with a vertical offset. In such configurations, an additional chute may be provided between the inlet of the transfer container 230 and the outlet of the grinding container 210. The chute serves to guide the coffee ground discharged from the outlet of the grinding container 210 into the transfer container 230.

The positional relationship between the transfer container 230 and the brewing container 310 can be similarly referenced as described above, without being described in detail for each.

The opening-closing component 240 is movably arranged in a lower area of the transfer container 230, so that when the opening-closing component 240 closes a discharge port of the transfer container 230, there is sufficient space inside the transfer container 230 to store at least the preset required weight of coffee powders for transfer.

The movement method of the opening-closing component 240 is not limited. In one embodiment, the opening-closing component 240 may be translationally arranged at the discharge port of the transfer container 230, for example, positioned on a lower side of the transfer container 230. Besides, the opening-closing component 240 is translationally movable in a horizontal direction toward and away from the discharge port of the transfer container 230, enabling it to cover the discharge port of the transfer container 230 when moved horizontally toward it, and to open the discharge port of the transfer container 230 when moved horizontally away from it. In another embodiment, the opening-closing component 240 may be pivotally arranged at the discharge port of the transfer container 230, for example, configured in a plate-like shape. One end of the opening-closing component 240 is rotatably mounted to one rim of the discharge port of the transfer container 230 via a structure such as a rotating shaft, allowing another end of the opening-closing component 240 to pivot toward and away from another rim of the discharge port of the transfer container 230.

The specific composition of the second driving mechanism 250 is associated with movement modes of the opening-closing component 240. For example, when the opening-closing component 240 performs a linear translational movement, the second driving mechanism 250 may be, but is not limited to, configured as a linear cylinder, or as a combination of a motor and a reversing transmission assembly. The reversing transmission assembly may include, but is not limited to, a rack and pinion assembly, a screw-nut mechanism, a rocker mechanism, etc. When the opening-closing component 240 performs a rotational movement, the second driving mechanism 250 may be, but is not limited to, configured as a motor, or as a combination of a linear cylinder and a reversing transmission assembly, which is not limited in the prevent invention.

The control device is electrically connected to the grinding mechanism 220 and the second driving mechanism 250, respectively. The control device activates the grinding mechanism 220. Before the brewing container 310 moves to the powder-receiving position 110, the control device controls the second driving mechanism 250 to drive the opening-closing component 240 to close the discharge port of the transfer container 230. When the brewing container 310 moves to the powder-receiving position 110, the control device controls the second driving mechanism 250 to drive the opening-closing component 240 to open the discharge port of the transfer container 230. As a result, after the grinding mechanism 220 is activated, it operates in the grinding chamber, grinding the coffee beans into the coffee powders and continuously feeding it into the transfer container 230. When it is confirmed that the brewing container 310 has not yet moved to the powder-receiving position 110, the control device controls the opening-closing component 240 to cover the discharge port of the transfer container 230, allowing the coffee powders pre-ground by the grinding device 200 to be effectively pre-stored in the transfer chamber, with the pre-stored amount of coffee powders at least meeting the required weight for one brewing container 310. When it is confirmed that the brewing container 310 has moved to the powder-receiving position 110, the control device controls the opening-closing component 240 to open the discharge port of the transfer container 230, enabling the pre-stored coffee powders in the transfer chamber to directly and immediately enter the brewing container 310 without any waiting.

Of course, in other embodiments, the transfer container 230 is provided with an opening. The transfer container 230 is sealed except for the opening. The transfer container 230 is rotatably arranged relative to the grinding container 210 and the brewing container 310, allowing it to rotate into a feeding state where the opening faces and is in communication with the discharge port of the grinding container 210, and a discharging state where the opening faces and is in communication with the feeding port of the brewing container 310. The grinding device 200 further includes a third driving mechanism, which is connected to and drives the transfer container 230. The control device is electrically connected to the third driving structure, so that before the brewing container 310 and the transfer container 230 move to the powder-receiving position 110, the control device activates the grinding mechanism 220 and rotates the transfer container 230 into the feeding state. When the brewing container 310 and the transfer container 230 move to the powder-receiving position 110, the control device rotates the transfer container 230 into the discharging state. As a result, the transfer container 230 only needs to have one opening, which can serve as both the transfer inlet and the transfer outlet. Besides, there is no need to install the opening-closing component 240 at the transfer outlet or the second driving mechanism 250 to drive the opening-closing component 240, enabling controlled, intermittent discharging of the transfer container 230.

Given the above, the transfer container 230 and the brewing container 310 can move relative to each other; this movement could involve the brewing container 310 moving towards the transfer container 230, or the transfer container 230 moving towards the brewing container 310 to deliver the powder.

In a specific application, multiple brewing containers 310 can share the same preset powder-receiving position 110 and brewing position 120, taking turns moving to receive materials from the transfer container 230 and then returning to the brewing position 120 for brewing extraction. The paths of multiple brewing containers 310 from the powder-receiving position 110 to the brewing position 120 may have overlapping sections to reduce the overall size of the machine.

In another specific application, multiple brewing containers 310 remain stationary at their respective brewing positions 120. The brewing containers 310 move the materials to an empty brewing container 310 and transfer the materials into the empty brewing container 310 for brewing extraction.

The above embodiments can be applied to scenarios where the brewing container 310 intermittently appears at the powder-receiving position 110, as well as to scenarios where the brewing container 310 continuously appears at the powder-receiving position 110. For example, in the scenario where the brewing container 310 intermittently appears at the powder-receiving position 110, the brewing device 300 as a whole or the brewing container 310 in the brewing device 300 is set as one unit. This brewing container 310 needs to move between the powder-receiving position 110 and the brewing position 120. Therefore, when the brewing container 310 moves from the powder-receiving position 110 to the brewing position 120, is at the brewing position 120, or moves from the brewing position 120 back to the powder-receiving position 110, the powder-receiving position 110 remains idle. Alternatively, when the brewing device 300 as a whole or the brewing container 310 in the brewing device 300 is set as at least two units, and the movement of each brewing container 310 between the powder-receiving position 110 and the brewing position 120 cannot be seamlessly coordinated, the powder-receiving position 110 becomes idle when one brewing container 310 moves away from the powder-receiving position 110 and another brewing container 310 has not yet arrived at the powder-receiving position 110. In such cases, the opening-closing component 240 covers the outlet of the intermediate container 230, ensuring that the coffee powders do not leak from an outlet of the intermediate container 230 when the powder-receiving position 110 is idle, thereby preventing waste of the coffee powders.

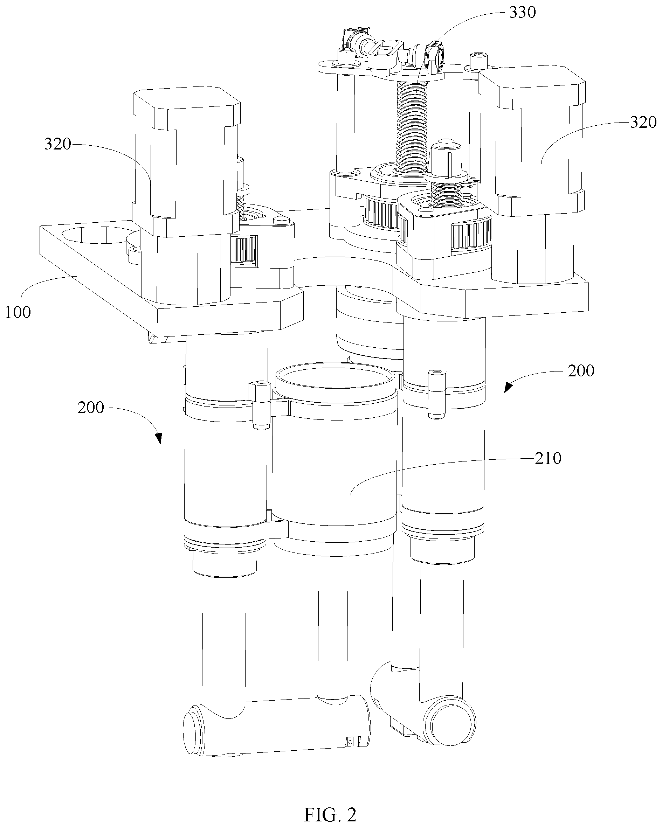

Of course, in the application scenario where the brewing container 310 is continuously active at the powder-receiving position 110, as shown in FIG. 2 and FIG. 3, in one embodiment, at least two brewing containers 310 are provided. Each brewing container 310 can move relative to the discharge portion. The positions of the multiple brewing containers 310 when in the powder-receiving state are the same, meaning the powder-receiving position 110 for the multiple brewing containers 310 is identical. The control device controls the brewing containers 310 in each brewing device 300 to alternately move to the powder-receiving position 110 in sequence. The control device keeps the grinding portion activated to ensure it continuously supplies the powder to the discharge portion in the powder-receiving state. At this time, by appropriately setting the relationships among parameters such as the overall number of brewing devices 300 or the number of brewing containers 310 within them, the number of powder-receiving positions 110, the time for switching the brewing container 310 between the powder-receiving position 110 and the brewing position 120, the time of powder reception at the powder-receiving position 110, and the time required to complete extraction and brewing at the brewing position 120, it can be ensured that when one brewing container 310 moves away from the powder-receiving position 110, another brewing container 310 seamlessly moves into the powder-receiving position 110. This ensures that the powder-receiving position 110 is never idle, which helps improve the operational coordination, continuity, and compactness of the entire device.

Specifically, in one embodiment, the high-efficiency intelligent beverage device further includes a grinding container 210 and a grinding mechanism 220. The grinding container 210 is formed with a grinding chamber and a grinding discharge outlet. The grinding mechanism 220 is disposed in the grinding chamber and is used for grinding the granular materials entering the grinding chamber to form the powder. A portion of the grinding container 210 that at least includes the grinding discharge outlet constitutes the discharge portion, and the grinding mechanism 220 constitutes the grinding portion.

Alternatively, in one embodiment, the high-efficiency intelligent beverage device further includes a grinding container 210, a transfer container 230 and a grinding mechanism 220. The grinding container 210 is formed with a grinding chamber and a grinding discharge outlet. The grinding mechanism 220 is disposed in the grinding chamber and is used to grind the granular materials entering the grinding chamber to form the powder. The transfer container 230 is formed with a transfer chamber. The transfer chamber is in communication with the grinding chamber to store the powder discharged from the grinding chamber. At least a portion of the grinding container 210 with the grinding discharge outlet and the transfer container 230 constitute the discharge portion, and the grinding mechanism 220 constitutes the grinding portion.

In the above, the grinding discharge outlet is set to be normally open, and the control device controls the grinding mechanism 220 to remain activated, thereby continuously supplying the powder to each of the brewing containers 310 positioned at the powder-receiving position 110.

The specific configuration of the grinding container 210 and the grinding mechanism 220 can be referred to the above description, which is not limited in the present invention. The discharge port of the grinding container 210 is set to be normally open. The control device controls the grinding mechanism 220 to remain activated, ensuring that the discharge port of the grinding container 210 continuously supplies the powder to each brewing container 310 positioned at the powder-receiving position 110. As a result, the grinding mechanism 220 can operate continuously, ensuring that the coffee powders is consistently formed in the grinding chamber and continuously discharged outward. The first driving mechanism 320 can also run continuously, ensuring that when one brewing container 310 moves away from the powder-receiving position 110, another brewing container 310 seamlessly moves into the powder-receiving position 110 without interruption.

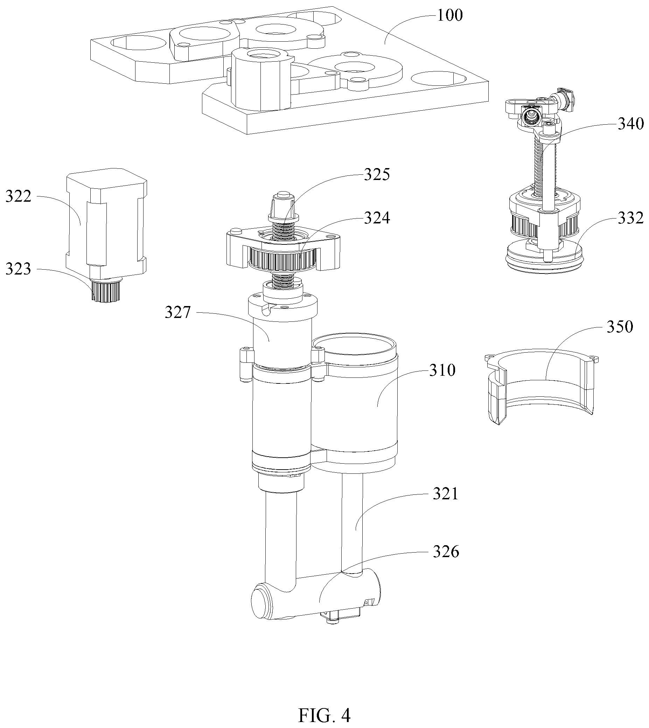

Given any of the above embodiments, the specific form of the brewing container 310 is not limited and can be set, for example, as a hollow cylinder extending along a top-bottom direction according to actual needs. Referring to FIG. 2 to FIG. 4, in the present invention, the brewing container 310 is provided with a material-receiving channel that runs therethrough in the top-bottom direction. The brewing device 300 further includes a first piston component 331. The first piston component 331 is sealedly connected to the brewing container 310, and is movably installed in the material-receiving channel in the top-bottom direction. An upper surface of the first piston component 331 is used to receive the powder entering the material-receiving channel.

Furthermore, during the process of the brewing container 310 receiving the coffee powders, and/or when the brewing container 310 has completed the operation of receiving the required weight of the coffee powders, the control device can control the first piston component 331 to move up and down. The first piston component 331 drives the powder to move up and down, allowing the powder, which is piled in a conical shape at the upper surface of the first piston component 331, to be stirred and spread evenly across the upper surface of the first piston component 331.

Furthermore, as mentioned above, the brewing device 300 further includes a compacting mechanism 330, which may include the aforementioned first piston component 331. Additionally, the compacting mechanism 330 may also include a second piston component 332. The second piston component 332 is positioned corresponding to the brewing position 120, and is movably installed on the base 100 along the top-bottom direction. When the brewing container 310 moves to the brewing position 120, the second piston component 332 moves downwardly to extend into the material-receiving channel and, together with the first piston component 331, presses the powder. As the brewing container 310 moves from the powder-receiving position 110 to the brewing position 120, the first piston component 331 is simultaneously driven to the brewing position 120. The second piston component 332 moves downwardly to extend into the material-receiving channel. Moreover, the second piston component 332 and/or the first piston component 331 move towards each other to compress the powder therebetween, forming a powder cake. By compacting the dispersed powder into the cake, on one hand, it prevents the formation of channeling effects during subsequent brewing, ensuring that the coffee powders is fully and completely brewed; on the other hand, it ensures sufficient brewing pressure is generated during the process, thereby enhancing the quality of the brew.

Besides, the driving force for the aforementioned first piston component 331 and the second piston component 332 may come from separately configured additional driving components. Alternatively, in one embodiment, the first driving mechanism 320 is also connected to the first piston component 331 to drive it to move in the top-bottom direction. The brewing device 300 further includes a fourth driving mechanism 340. The fourth driving mechanism 340 is located on the base 100, and is connected to the second piston component 332 to drive it to move in the top-bottom direction. As a result, the movement of the first piston component 331 can directly rely on the existing first driving mechanism 320, requiring only the additional setup of the fourth driving mechanism 340 for the second piston component 332. This not only enables independent driving of both piston components but also contributes to simplifying the overall structure and enhancing operational convenience of the machine.

Additionally, referring to FIG. 3 to FIG. 5, in one embodiment, the brewing container 310 has a feeding end. The feeding end is an end of the brewing container 310 where the feeding port is located. The brewing device 300 further includes a residue scraper 350. The residue scraper 350 is arranged on the base 100, and positioned between the powder-receiving position 110 and the brewing position 120. As the brewing container 310 moves from the brewing position 120 to the powder-receiving position 110, the residue scraper 350 interferes with the passing feeding end of the brewing container 310 to remove the residual material at the feeding end. The residue scraper 350 can interact with the feeding end of the brewing container 310 as it moves past. Under this interaction, any residue left at the feeding end of the brewing container 310 can be carried away, allowing the brewing container 310 to return to the powder-receiving position 110 relatively clean. In practical applications, the residue scraper 350 may be block-shaped and extend circumferentially around the brewing container 310, either forming a complete annular shape or an arc shape. The residue scraper 350 is designed to slide against the feeding end of the moving brewing container 310, thereby scraping off any residue at the feeding end during the sliding contact.

Besides, in one embodiment, the brewing device 300 further includes a liquid supply component (not shown in the drawings) and a liquid discharge component (not shown in the drawings). The liquid supply component is located on the base 100 and is used to introduce brewing liquid into the brewing container 310. The liquid discharge component is located on the brewing container 310 and is used to discharge the finished beverage from the brewing container 310 to the outside. The liquid supply component and/or the liquid discharge component may form a liquid passage connected to the brewing chamber of the brewing container 310, allowing the brewing liquid (such as hot water) from outside the brewing chamber to be introduced into the brewing chamber through the liquid passage, and/or allowing the finished beverage inside the brewing chamber to be discharged outside the brewing chamber. The liquid passage may be an additional pipeline structure. Alternatively, the liquid passage of the liquid supply component may be directly arranged at the first piston component 331, and the liquid passage of the liquid discharge component may be directly arranged at the second piston component 332. By providing the liquid passage through the first piston component 331 and/or the second piston component 332, the overall structure of the device can be simplified and made more compact. Furthermore, the liquid supply component and/or the liquid discharge component also includes driving components such as pumps, which enable directional flow of the brewing liquid and/or beverage through the liquid passage.

Then, in one embodiment, the control device is electrically connected to the liquid supply component and the liquid discharge component respectively, so as to control the liquid supply component to start when the brewing container 310 moves to the brewing position 120, control the liquid discharge component to start when it is determined that brewing in the brewing container 310 is completed, and control the first piston component 331 to move upwardly to the feeding end of the brewing container 310 after the liquid discharge component discharges the beverage from the brewing container 310 outward. As a result, when it is determined that brewing in the brewing container 310 is completed and the beverage has been fully discharged, the first piston component 331 can interfere with an inner chamber wall of the brewing chamber, scraping off the residual dirt on the inner chamber wall through interference, and carrying the dirt upwardly to be exposed at the feeding end of the brewing container 310, thereby facilitating removal by the aforementioned residue scraper 350.

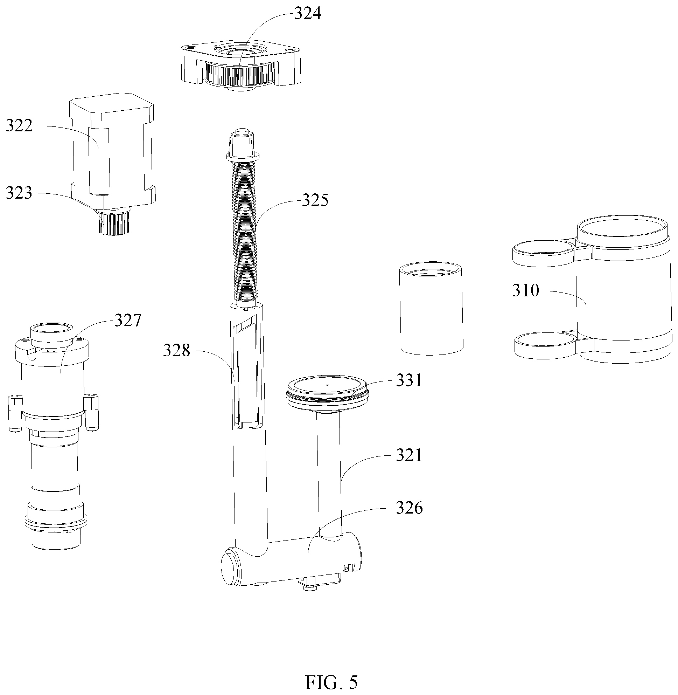

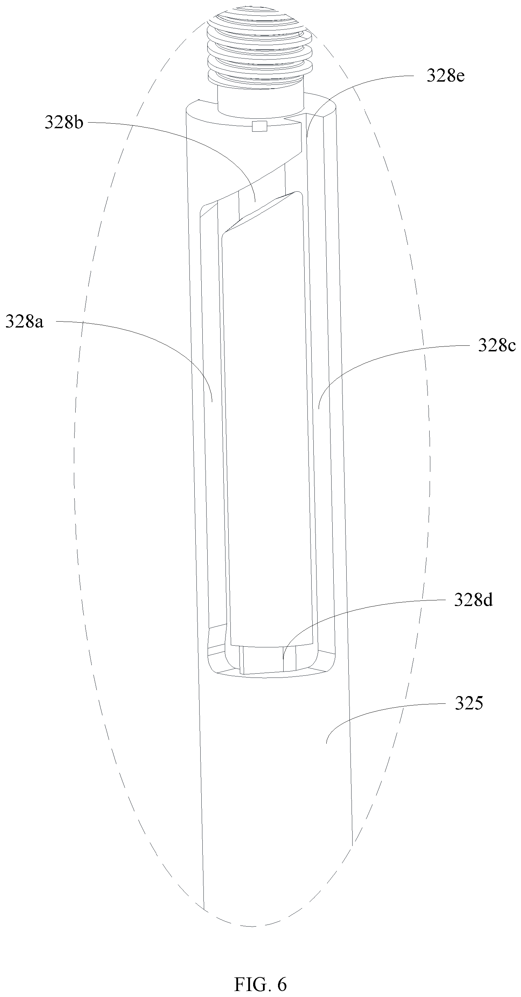

Specifically, referring to FIG. 5 and FIG. 6, in one embodiment, to achieve the aforementioned functions, the first driving mechanism 320 includes a piston rod 321, a driver 322, a driving gear 323, a driven gear 324, a drive rod 325, a linkage component 326, and a guide component 327. The piston rod 321 is connected to the first piston component 331. The driver 322 is mounted on the base 100 and has a rotation output shaft that is rotatable about a vertical axis. The rotation output shaft is located beside the piston rod 321 and extends parallel to the piston rod 321. The driving gear 323 is coaxially mounted on the rotation output shaft. The driven gear 324 is positioned adjacent to the driving gear 323 and meshes with the driving gear 323. The driven gear 324 is provided with internal threads. The drive rod 325 is provided with external threads. The external threads engage with the internal threads of the driven gear 324, allowing the drive rod 325 to be driven by the driver 322 to rotate about the vertical axis and translate vertically. The linkage component 326 connects the piston rod 321 and the drive rod 325 in a coordinated manner. The guide component 327 is fixed relative to the brewing container 310 and is connected to the drive rod 325.

At a junction of the guide component 327 and the drive rod 325, one of the guide component 327 and the drive rod 325 is provided with a guide groove 328, while a remaining one of the guide component 327 and the drive rod 325 is provided with a guide protrusion that slidingly engages with the guide groove 328. The guide groove 328 includes a first groove segment 328a extending along the vertical direction, which converts a rotational motion of the drive rod 325 about its vertical axis into a translational motion of the first piston component 331 along the vertical direction when the guide protrusion slides along the first groove segment 328a. The first groove segment 328a can be configured to extend spirally along both the vertical direction and the circumferential direction of the drive rod 325, achieving the purpose of converting the rotational motion of the drive rod 325 into the up-and-down translational motion of the first piston component 331. The guide groove 328 further includes a second groove segment 328b arranged along the circumferential direction of the drive rod 325, and a third groove segment 328c extending along the vertical direction. The second groove segment 328b has a first end and a second end that are oppositely positioned in the circumferential direction of the drive rod 325. The first end is connected to the third groove segment 328c, and the second end is connected to the first groove segment 328a, such that when the guide protrusion is at the first end, it drives the brewing container 310 to the brewing position 120, and when the guide protrusion is at the second end, the brewing container 310 is at the powder-receiving position 110.

Specifically, the guide groove 328 further includes an entry groove segment 328e. The entry groove segment 328e is connected to the first end of the second groove segment 328b. When the guiding protrusion enters from the entry groove segment 328e and slides to the first end of the second groove segment 328b, the brewing container 310 is at the brewing position 110.

When the guide protrusion moves in the second groove segment 328b and slides from the second end to the first end, the brewing container 310 rotates from the powder-receiving position 110 to the brewing position 120. Furthermore, in the circumferential direction of the drive rod 325, the second groove segment 328b gradually extends obliquely toward one axial end of the drive rod 325. This helps to decelerate the rotational speed of the brewing container 310 as it moves from the powder-receiving position 110 to the brewing position 120, thereby making the rotation process of the brewing container 310 smoother.

When the guide protrusion moves in the first groove segment 328a, its up-and-down reciprocating sliding motion in the first groove segment 328a can drive the first piston component 331 to move vertically in the brewing chamber.

The guide groove 328 further includes a fourth groove segment 328d. The fourth groove segment 328d extends circumferentially around the drive rod 325 and connects the ends of the first groove segment 328a and the third groove segment 328c that are away from the second groove segment 328b. The first groove segment 328a, the second groove segment 328b, the third groove segment 328c, and the fourth groove segment 328d are essentially enclosed to form an annular shape. Accordingly, when the guiding protrusion slides from the second groove segment 328d along the fourth groove segment 328d, and finally moves to the first groove segment 328a, the brewing container 310 resets from the brewing position 120 back to the powder-receiving position 110.

When the guide protrusion moves in the third groove segment 328c, the brewing container 310 is at the brewing position 120. Besides, by sliding the guide protrusion up and down in the third groove segment 328c, the first piston component 331 can be driven to move vertically in the brewing chamber, adjusting its position. This allows the first piston component 331 to cooperate with the second piston component 332 to perform a pressing stroke or push the coffee ground upwardly out of the brewing chamber.

In the present invention, at a connection of the second groove segment 328b and the third groove segment 328c, a through hole is provided from an upper end of the third groove segment 328c, extending upwardly through the drive rod 325, to facilitate a downward installation of the guiding protrusion of the guide component 327 into the guide groove 328 via the through hole. In other embodiments, the through hole may not be provided. In such cases, it is necessary to first fit the guide component 327 around an outer periphery of the drive rod 325, and then press the guiding protrusion from the outer periphery of the guide component 327 inwardly into the guide groove 328.

The first groove segment 328a and the third groove segment 328c are approximately parallel along the vertical direction. The fourth groove segment 328, connecting the lower ends of the first groove segment 328a and the third groove segment 328c, is perpendicularly connected between the first groove segment 328a and the third groove segment 328c. The second groove segment 328b, connecting the upper ends of the first groove segment 328a and the third groove segment 328c, is connected at an inclined angle between the first groove segment 328a and the third groove segment 328c. Moreover, a top end of the third groove segment 328c is higher than that of the first groove segment 328a. The inclined arrangement of the second groove segment 328b provides a certain cushioning effect when the guiding protrusion of the guide component 327 slides in the second groove segment 328b.

Specifically, the drive device 322 is, for example, a motor, which can be positioned on an upper side, a lower side, or a lateral side of the brewing container 310. The rotary output shaft of the motor extends vertically, enabling it to rotate along its own axis when activated. The drive rod 325 also extends vertically, and is directly or indirectly connected to the rotary output shaft, allowing the rotation of the output shaft to be converted into its own rotation. A connection between the drive rod 325 and the first piston component 331 can similarly be direct or indirect. The guide component 327 is fixed relative to the brewing container 310, so that when the guide protrusion slides along the guide groove 328 and is guided, it drives the drive rod 325 to move relative to the brewing container 310. The first groove segment 328a is arranged to extend vertically, enabling the vertical rotation of the drive rod 325 to be converted into a vertical translation as the guide protrusion slides along the first groove segment 328a, ultimately achieving the purpose of driving the vertical translation of the first piston component 331.

The guide protrusion is fixedly set in the guide component 327. The guide component 327 is fixed relative to the base 100. The driver 322 is used to drive the drive rod 325, causing the guide groove 328 of the drive rod 325 to slide along the guide protrusion. The guide protrusion moves from the first end of the second groove segment 328b along the third groove segment 328c to the fourth groove segment 328d until it reaches a junction of the fourth groove segment 328d and the first groove segment 328a. At this time, the driver 322 rotates the drive rod 325 in the first rotation direction. When moving from the junction of the fourth groove segment 328d and the first groove segment 328a to the second end of the second groove segment 328b, and further to the first end of 328b, the driver 322 rotates the drive rod 325 in a second rotation direction opposite to the first rotation direction. To prevent the driver 322 from reversing direction at the first end of the second groove segment 328b and at the junction of the fourth groove segment 328d and the first groove segment 328a, causing the second groove segment 328b to reverse towards its second end, and the guide protrusion to move in the opposite direction towards the third groove segment 328c when located at the junction of the fourth groove segment 328d and the first groove segment 328a, limit stops are set at the second groove segment 328b and at the junction of the fourth groove segment 328d and the first groove segment 328a. This ensures that even if the driver 322 reverses its rotation direction at these two positions, it will not retrace its original path.

The third groove segment 328c is provided with a brewing position point along its stroke. When the guide protrusion is at this brewing position point, the first piston component 331 and the second piston component 332 are positioned in the brewing container 310 for extraction. As the third groove segment 328c continues to move upwardly, and the guide protrusion reaches a junction of the third groove segment 328c and the fourth groove segment 328d, the first piston component 331 moves upwardly to push the extracted coffee ground out of the brewing container 310.

By adjusting the gear ratio between the driving gear 323 and the driven gear 324, rotational deceleration or acceleration from the rotary output shaft to the drive rod 325 can be achieved accordingly. The arrangement of the internal threads and the external threads facilitates, under the drive of the first drive 322, the driving gear 323 and the driven gear 324, the drive rod 325 achieves a composite conversion of two motion forms of the drive rod 325, namely rotation about a vertical axis and translation along the vertical direction, into a helical translation of the drive rod 325. At this time, the first groove segment 328a can be set to extend approximately parallel to an axial direction of the drive rod 325, making it easier to process and form.

Besides, in one embodiment, the driver 322 and the drive rod 325 are positioned beside the brewing container 310, which can reduce the space occupied by the driver 322 and the drive rod 325 in the top-bottom direction of the brewing container 310. Under this circumstance, the driving mechanism further includes a piston rod 321 and a linkage component 326. The piston rod 321 is fixedly connected to the first piston component 331, and is arranged parallel to and spaced apart from the drive rod 325. The linkage component 326 connects the drive rod 325 and the piston rod 321 in a coordinated manner. The linkage component 326 may be a connecting rod extending horizontally, fixedly connected to both the piston rod 321 and the drive rod 325, so as to accurately transmit the vertical movement of the drive rod 325 to the piston rod 321, thereby driving the piston rod 321 to move up and down, ultimately achieving the driving of the vertical movement of the first piston component 331.

Besides, in one embodiment, the brewing container 310 is made of ceramic material. The ceramic material offers good stiffness and hardness, as well as enhanced wear resistance, which helps to prolong the service life of the brewing container 310. Moreover, the ceramic material has excellent thermal insulation properties, which can reduce heat exchange between the coffee beverage in the brewing chamber and the external environment during the extraction process, preventing the coffee beverage from cooling down and thus preserving its flavor.

Given the above, in a preferred embodiment of the present invention, the time T1 required to grind coffee beans for extracting each cup of coffee liquid is typically around 6-8 seconds. After a single brewing container 310 returns to the brewing position 120, the time T2 for brewing and extraction until the coffee ground is discharged usually takes 25 seconds. These times can also be preset and adjusted according to the machine's requirements. That is, the time required to extract each batch of coffee liquid can roughly grind enough coffee powders for 3-4 cups. The maximum number of brewing containers 310 that a grinding mechanism 220 and a transfer container 230 can match is three, allowing the brewing container 310 to switch to new coffee powders with minimal waiting time after each extraction is completed. This enables the grinding mechanism 220 and the brewing container 310 to work almost continuously under continuous cup output conditions, maximizing brewing efficiency.

An efficient beverage preparation method allows the coffee machine to be set to single-brew mode and multi-brew mode to meet production needs at different times. An operator can independently choose to activate the single-brew container 310 mode or the multi-brew container 310 mode. If the operator continuously inputs the number of beverage cups to be made, reaching a preset value after activation, the machine automatically switches to the multi-brew container 310 mode, thereby maximizing the coffee machine' s work efficiency. Among these, the multi-brew container 310 also accommodates the use of the single-brew container 310.

In the single-brew mode matching multiple-brew modes, except for the initial state, during normal operation, only one brewing container 310 requires the addition of new ground coffee after extraction within a given time period. Moreover, the new ground coffee has been pre-ground by the grinding device 200 and placed inside the brewing container 310. As a result, whether the brewing container 310 moves to the coffee loading position 110 to receive the grounds or to the brewing position 120 to deliver the grounds, there will be no confusion or errors.

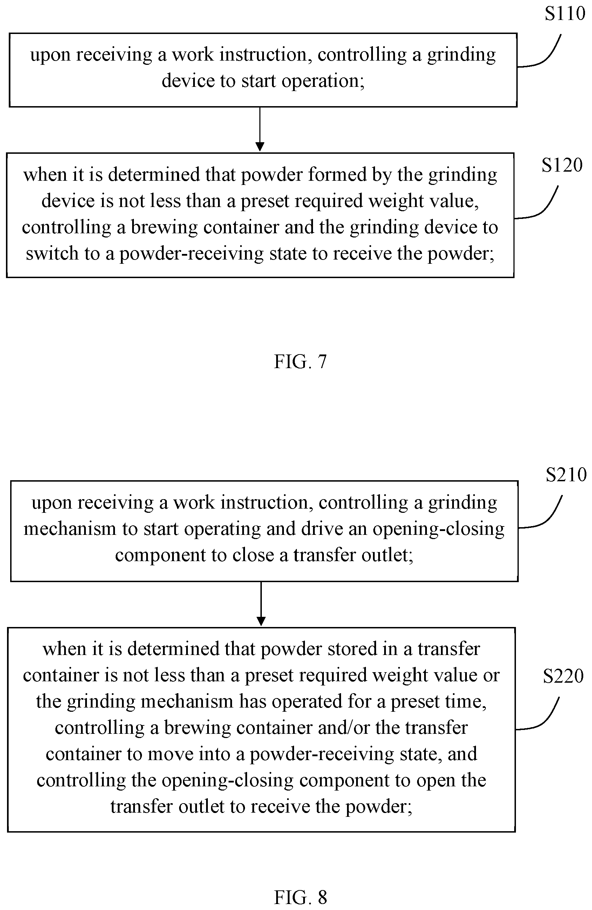

Based on any of the aforementioned embodiments related to beverage processing machines, referring to FIG. 7 to FIG. 9, the present invention further provides a control method for the high-efficiency intelligent beverage device, including:
step S110: upon receiving a work instruction, controlling the grinding device 200 to start operation.

In this embodiment, the work instruction can be manually triggered by a user or periodically triggered by the control device according to a preset schedule. The method of manual triggering by the user is not limited. It can be triggered by pressing physical buttons and/or virtual buttons located on an external surface of a device body, or through a mobile terminal wirelessly connected to the control device, or, if the device body is additionally equipped with a voice recognition module or an image recognition module, by outputting a set voice or performing a set action.

After the work instruction is triggered, the control device initiates the operation of the grinding device 200, which includes the pre-set feeding mechanism within the grinding device 200 retrieving and transferring coffee beans into the grinding chamber; the grinding mechanism 220 grinding the coffee beans in the chamber to the desired degree; and the pre-set discharging mechanism of the grinding device 200 transferring the resulting coffee powders out of the grinding chamber.

When the grinding device 200 includes the grinding container 210, the grinding mechanism 220, the transfer container 230, the opening-closing component 240, and the second driving mechanism 250 as described above, referring to FIG. 8, step S110 may specifically be step S210: upon receiving the work instruction, controlling the grinding mechanism 220 to start operation, and controlling the second driving mechanism 250 to drive the opening-closing component 240 to close the transfer outlet.
step S120: when it is determined that the powder formed by the grinding device 200 is not less than a preset required weight value, controlling the brewing container 310 and the grinding device 200 to switch to a powder-receiving state to receive the powder.

Optionally, after the step S120, there is a step S130: controlling the brewing container 310 to move to the brewing position 120.

In this embodiment, it is first determined whether the weight of the coffee powders formed by the grinding mechanism 220 is at least greater than a preset required weight value. The method of determination is not limited. For example, the grinding amount of coffee powders can be estimated based on the operating time of the grinding mechanism 220, or it can be accurately measured using additional sensors. The sensors may include, but are not limited to, weighing sensors such as weight sensors or pressure sensors, as well as imaging sensors that can capture image information of the coffee powders during the discharge process and/or when piled up. The required weight value can be preset according to user needs and should at least meet the user's single brewing requirement.

Then, upon confirming that the powder produced by the grinding device 200 meets or exceeds the preset required weight, the first driving mechanism 320 can be controlled to move the brewing container 310 to the powder-receiving position 110.

In specific applications, referring to FIG. 8, when the grinding device 200 includes the grinding container 210, the grinding mechanism 220, the transfer container 230, the opening-closing component 240 and the second driving mechanism 250 as described above, steps S110 to S120 can be specifically manifested as:
step S210: upon receiving the work instruction, controlling the grinding mechanism 220 to start operating and drive the opening-closing component 240 to close the transfer outlet;
step S220: when it is determined that the powder stored in the transfer container 230 is not less than the preset required weight value or the grinding mechanism 220 has operated for the preset time, controlling the brewing container 310 and/or the transfer container 230 to move into the powder-receiving state, and controlling the opening-closing component 240 to open the transfer outlet to receive the powder.

After the grinding mechanism 220 is activated, it operates in the grinding chamber, grinding the coffee beans into the coffee powders and continuously feeding it into the transfer container 230. When it is confirmed that the brewing container 310 has not yet moved to the powder-receiving position 110, the control device controls the opening-closing component 240 to cover the discharge port of the transfer container 230, allowing the coffee powders pre-ground by the grinding device 200 to be effectively pre-stored in the transfer chamber, with the pre-stored amount of coffee powders at least meeting the required weight for one brewing container 310. When it is confirmed that the brewing container 310 has moved to the powder-receiving position 110, the control device controls the opening-closing component 240 to open the discharge port of the transfer container 230, enabling the pre-stored coffee powders in the transfer chamber to directly and immediately enter the brewing container 310 without any waiting.

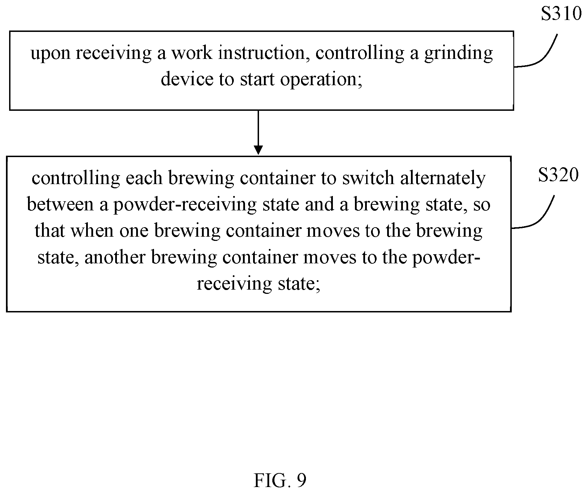

Referring to FIG. 9, as mentioned above, there are at least two brewing containers 310. The number of powder-receiving positions 110 is less than the number of brewing devices 300. The grinding device 200 includes the grinding container 210, the grinding mechanism 220, the transfer container 230, the opening-closing component 240 and the second driving mechanism 250. When the control device controls each brewing container 310 in the brewing devices 300 to move alternately to the powder-receiving position 110, step S120 can be specifically implemented as follows:
step S320: controlling each brewing container 310 to switch alternately between the powder-receiving state and the brewing state, so that when one brewing container 310 moves to the brewing state, another brewing container 310 moves to the powder-receiving state.

In this embodiment, the discharge outlet of the grinding container 210 is set to be normally open. The control device keeps the grinding mechanism 220 activated, allowing the discharge outlet of the grinding container 210 to continuously supply the powder to each brewing container 310 at the powder-receiving position 110. As a result, the grinding mechanism 220 can operate continuously, ensuring that coffee powders is consistently formed in the grinding chamber and continuously discharged outward. The first driving mechanism 320 can also operate continuously, ensuring that when one brewing container 310 moves away from the powder-receiving position 110, another brewing container 310 seamlessly moves to the powder-receiving position 110. This contributes to improving the operational coordination, continuity, and compactness of the entire device.

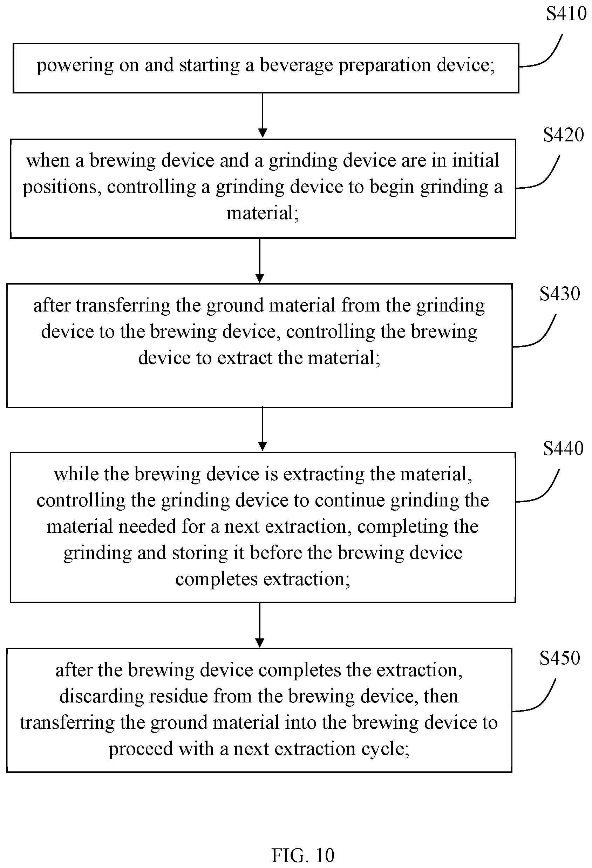

Additionally, the present invention provides a control method for the high-efficiency intelligent beverage device. The high-efficiency intelligent beverage device may be as described above, specifically including the grinding device 200 and the brewing device 300. Referring to FIG. 10, the control method for the high-efficiency intelligent beverage device includes the following steps:
step S410: powering on and starting the high-efficiency intelligent beverage device;
step S420: when the brewing device 300 and the grinding device 200 are in their initial positions, controlling the grinding device 200 to begin grinding the material;
step S430: after transferring the ground material from the grinding device 200 to the brewing device 300, controlling the brewing device 300 to extract the material;
step S440: while the brewing device 300 is extracting the material, controlling the grinding device 200 to continue grinding the material needed for the next extraction, completing the grinding and storing it before the brewing device 300 completes extraction; and
step S450: after the brewing device 300 completes extraction, discarding the residue from the brewing device 300, then transferring the ground material into the brewing device 300 to proceed with a next extraction cycle.

In this embodiment, upon receiving a user-triggered startup instruction, the control device activates the high-efficiency intelligent beverage device. The brewing device 300 and the grinding device 200 can be controlled to move to their initial positions. After confirming that both the brewing device 300 and the grinding device 200 are at their initial positions, the control device instructs the grinding device 200 to begin grinding the material. Subsequently, the grinding device 200 and the brewing device 300 switch to the powder-receiving state, transferring the ground material from the grinding device 200 to the brewing device 300, thereby loading the brewing container 310 and extracting the material within the brewing container 310. Utilizing the extraction time of the brewing container 310, the control device can direct the grinding device 200 to continue grinding, preparing the next batch of material for extraction. This ensures that when the brewing container 310 returns to the powder-receiving position 110, there is no waiting time, as the grinding device 200 can immediately supply the required material to the brewing container 310.

Specifically, in one embodiment, the extraction time of the brewing device 300 is T1 per cycle, and the time required for the grinding device 200 to grind the powder for a single brewing is T2, where T1 is greater than or equal to twice T2. This arrangement ensures that the grinding device 200 has sufficient intervals to perform grinding tasks, preparing the powder needed for the next extraction.

Additionally, in one embodiment, the high-efficiency intelligent beverage device further includes a transfer container 230 positioned between the grinding device 200 and the brewing device 300. The specific setup of the transfer container 230 can be referenced as described above. In the grinding device 200, the powder ground by the grinding mechanism 220 inside the grinding container 210 is first stored in the transfer container 230 before being transferred to the brewing device 300. This facilitates pre-reception of the powder pre-ground by the grinding mechanism 220, which neither occupies the space of the grinding container 210 nor enables the transfer and transition of the powder. Once the brewing container 310 moves into the powder-receiving state, the required powder can be directly supplied to the brewing container 310 via the transfer container 230.

In practical application, considering the above, the transfer container 230 is positioned in the grinding device 200, meaning it is integrally formed with the grinding container 210. Alternatively, the transfer container 230 is set up independently from the grinding device 200, indicating that the transfer container 230 and the grinding container 210 are separate and independent units. Besides, as needed, the transfer container 230 can undergo relative movement with respect to the brewing device 300.

When the brewing device 300 is set to two as described above, before performing the extraction work, the brewing device 300 maintains ground powder in the transfer container 230 by controlling the operating time of the grinding mechanism 220. This ensures that when the brewing device 300 moves to the powder-receiving position 110, the transfer container 230 directly delivers the required powder into the brewing device 300.

Given the above, in one embodiment, a system of the high-efficiency intelligent beverage device is preset with a single-brew mode and a multi-brew mode. The single-brew mode involves controlling one brewing container 310 to switch activities between the powder-receiving position 110 and the brewing position 120, with related mechanisms such as the grinding device 200 operating in coordination. The multi-brew mode involves controlling at least two brewing containers 310 to switch activities between the powder-receiving position 110 and the brewing position 120, with related mechanisms such as the grinding device 200 operating in coordination. In practical application, users can independently choose to activate either the single-brew mode or the multi-brew mode. The high-efficiency intelligent beverage device can switch to the single-brew mode or the multi-brew mode in response to the user's selection.

Furthermore, in one embodiment, after the step S410 of powering on and starting the high-efficiency intelligent beverage device, the method further includes:
step S411: when it is determined that the number of beverage cups input by the user reaches a preset number, controlling the high-efficiency intelligent beverage device to automatically initiate the multi-brew mode.

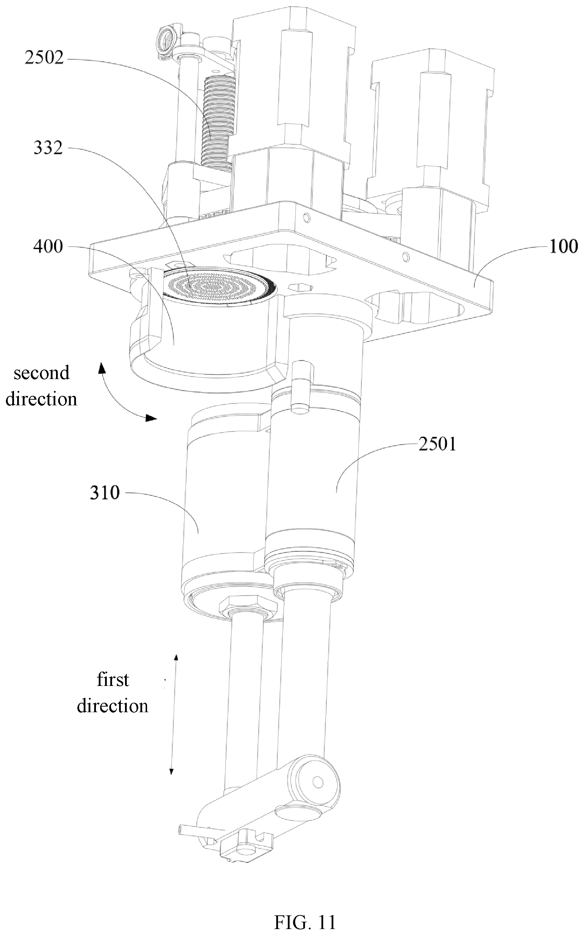

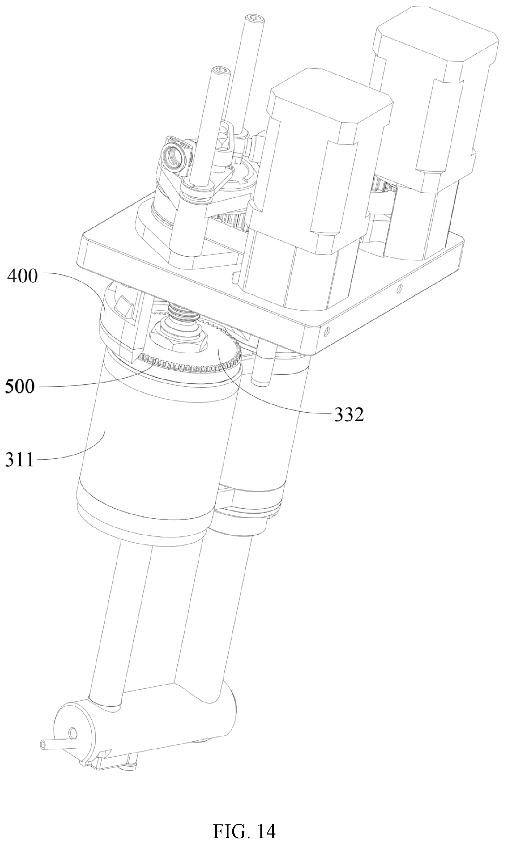

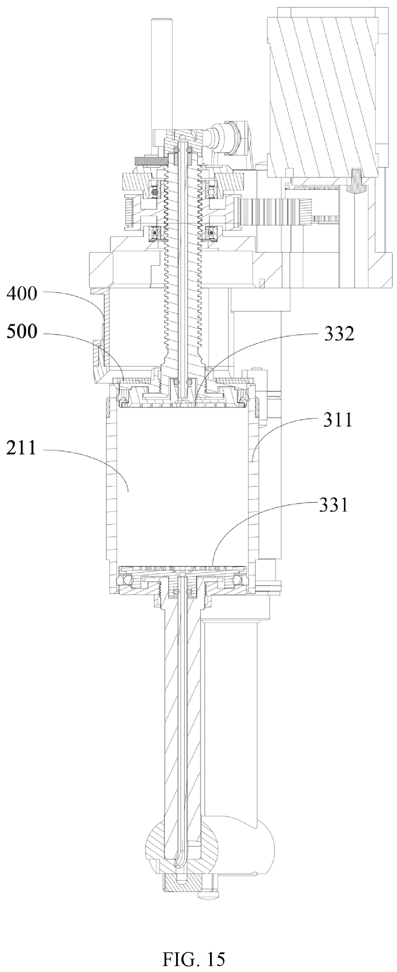

Referring to FIG. 11 to FIG. 17, a beverage preparation device is shown. The beverage preparation device includes a device body and a self-cleaning brewing system installed on the device body. It is understandable that the beverage preparation device may be, but is not limited to, electrical appliances such as a coffee machine, a soymilk maker, or a multi-grain blender. Taking the beverage preparation device as the coffee machine as an example, when the beverage preparation device directly processes coffee powders, the self-cleaning brewing system directly receives external coffee powders, and extracts and brews the external coffee powders. The external powder can be, for example, coffee capsules, small cans of coffee powders, or bagged coffee powders. When the beverage preparation device directly processes the coffee beans, the beverage preparation device may also include a grinding device, which receives the coffee beans and grinds the coffee beans into the coffee powders of the desired coarseness. The outlet of the grinding device is connected to and in communication with the inlet of the self-cleaning brewing system, allowing the coffee powders obtained from grinding to be fed into the self-cleaning brewing system for extraction and brewing.

Since the main inventive aspect of the present application lies in the improvement of the self-cleaning brewing system, the following embodiments will primarily illustrate the self-cleaning brewing system in conjunction with the accompanying drawings.

Referring to FIG. 11 to FIG. 17, the present invention provides the self-cleaning brewing system, which has a first direction and a second direction arranged in a cross configuration. The self-cleaning brewing system includes a brewing container 310, a first cleaning component 400, and a second cleaning component 500. The brewing container 310 is formed with a brewing chamber. One end of the brewing chamber is open along the first direction. The brewing container 310 defines a cleaning area at least at an open end. The first cleaning component 400 is located on one side of the cleaning area along the first direction. At least one of the first cleaning component 400 and the brewing container 310 is movable relative to a remaining one of the first cleaning component 400 and the brewing container 310 along the second direction, such that the first cleaning component 400 and the brewing container 310 have a first relative movement stroke. During the first relative movement stroke, an end surface of the first cleaning component 400 slides against the cleaning area to remove contaminants from the cleaning area. The second cleaning component 500 is disposed adjacent to one side of the first cleaning component 400 along the second direction. At least one of the second cleaning component 500 and the first cleaning component 400 is movable relative to a remaining one of the second cleaning component 500 and the first cleaning component 400 along the first direction, such that the second cleaning component 500 and the first cleaning component 400 have a second relative movement stroke. During the second relative movement stroke, the second cleaning component 500 slides against a side surface of the first cleaning component 400 to remove contaminants from the side surface of the first cleaning component 400.

In the technical solution provided by the present invention, under the drive of the lower driving mechanism 2501, the first cleaning component 400 and the brewing container 310 undergo a first relative movement stroke. During this process, the first cleaning component 400 is capable of cleaning an area to be cleaned on the brewing container 310, scraping out residues accumulated in that area, thereby completing the cleaning of the area to be cleaned on the brewing container 310. Under the drive of the upper driving mechanism 2502, the first cleaning component 400 and the second cleaning component 500 undergo a second relative movement stroke. During this process, the second cleaning component 500 can scrape off residues adhering to the corresponding side surface of the first cleaning component 400, ensuring that the first cleaning component 400 meets the required cleanliness. This ensures that when the first cleaning component 400 cleans the area to be cleaned on the brewing container 310 again, it does not introduce external contaminants into the brewing container 310, guaranteeing that each cleaning of the brewing container 310 is simple and efficient.

Referring to FIG. 11 to FIG. 13, in the present invention, the self-cleaning brewing system further includes a base 100. The base 100 primarily serves as an installation carrier for functional components such as the brewing container 310, the first cleaning component 400, and the second cleaning component 500. The base 100 may be, but is not limited to, one or a combination of structures such as a plate-like structure, a block-like structure, a box structure, or a frame structure. The base 100 can be a structure specifically designed for the self-cleaning brewing system, and when the self-cleaning brewing system is applied to the beverage preparation device, the base 100 is fixedly or movably installed with the device body of the beverage preparation device. Of course, the base 100 can also directly utilize a fixed portion of the beverage preparation device, such as the device body, which helps integrate the aforementioned functional components of the self-cleaning brewing system, including the brewing container 310, the first cleaning component 400, and the second cleaning component 500, to the device body.

For ease of understanding, in the following embodiments, the self-cleaning brewing system is placed horizontally on a platform as an example, thus having a horizontal plane and a top-bottom direction. Here, the first direction is the top-bottom direction, and the second direction is a direction on the horizontal plane. However, it should be noted that the above does not limit the specific application of the first direction and the second direction. In other applications, the first direction and the second direction may be other directions besides the horizontal plane and the top-bottom direction. Given the above, a relative movement direction between the first cleaning component 400 and the second cleaning component 500 is the first direction. A relative movement direction between the first cleaning component 400 and the brewing container 310 is the second direction. The first direction and the second direction are not parallel to each other.

Given the above, the brewing container 310 can be specifically arranged on a lower side of the base 100, while the aforementioned grinding device can be specifically placed on an upper side of the base 100. As a result, the coffee powders obtained from the grinding device can be transferred into the brewing container 310 by gravity. The brewing container 310 is suspended below the base 100. The first cleaning component 400 can be positioned between the base 100 and the brewing container 310, that is, above the brewing container 310.

Then, the first relative movement stroke can be formed by one of the first cleaning component 400 and the brewing container 310 being movably arranged along the second direction, or by both the first cleaning component 400 and the brewing container 310 being movably arranged along the second direction, allowing the first cleaning component 400 and the brewing container 310 to move towards each other and away from each other. For ease of understanding, in the following embodiments, it is assumed that the first cleaning component 400 is fixed relative to the base 100, and the brewing container 310 is movably arranged relative to the base 100 along the second direction for illustrative purposes.

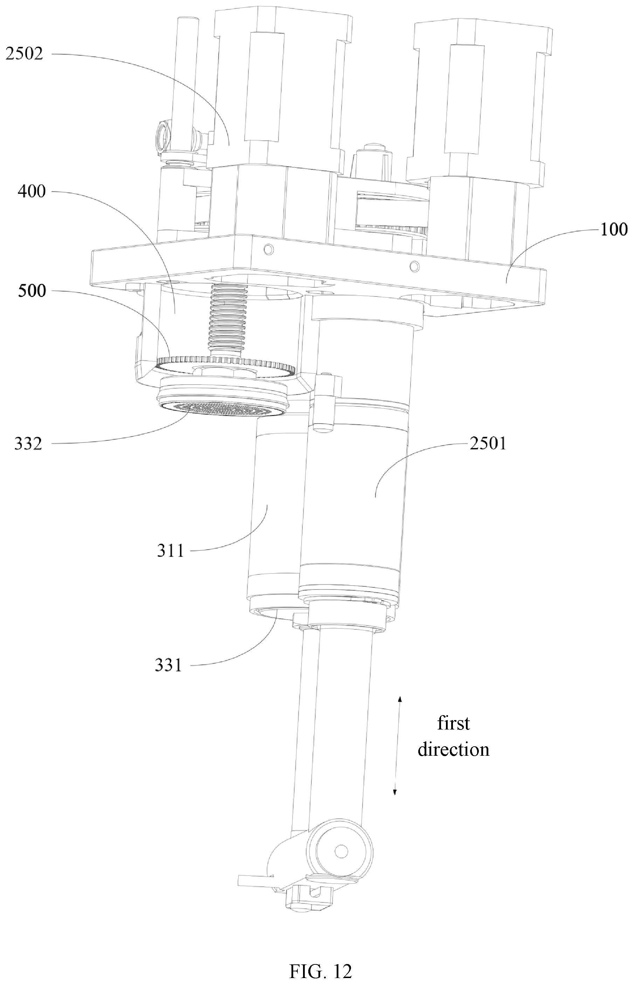

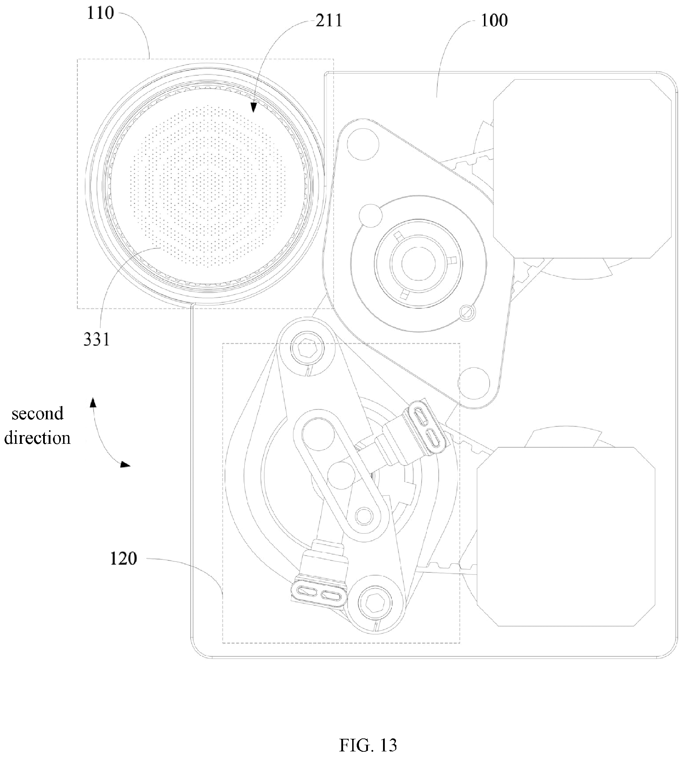

Specifically, as shown in FIG. 12 and FIG. 13, the base 100 is configured in a plate-like shape and extends approximately along the horizontal plane. The base 100 defines a powder-receiving position 110 and a brewing position 120 that are spaced apart from each other. The second direction is defined between the powder-receiving position 110 and the brewing position 120.

Besides, the source of driving force for the aforementioned first relative movement stroke is not limited. The source of driving force can be achieved, for example, through manual operation by the user or driven by gravity. Alternatively, in one embodiment, the self-cleaning brewing system further includes a lower driving mechanism 2501. The lower driving mechanism 2501 is drivingly connected to the movably arranged first cleaning component 400 and/or the brewing container 310. Similarly, the source of driving force for the aforementioned second relative movement stroke is not limited. The source of driving force can be achieved, for example, through manual operation by the user or driven by gravity. Alternatively, in one embodiment, the self-cleaning brewing system further includes an upper driving mechanism 2502. The upper driving mechanism 2502 is arranged on the base 100 and is drivingly connected to the movably arranged first cleaning component 400 and/or the second cleaning component 500.

Under the drive of the lower driving mechanism 2501, the brewing container 310 moves and switches between the powder-receiving position 110 and the brewing position 120. The lower driving mechanism 2501 can drive the brewing container 310 to perform a linear translation between the powder-receiving position 110 and the brewing position 120. In this case, a straight-line connection direction between the powder-receiving position 110 and the brewing position 120 constitutes the second direction. Of course, the lower driving mechanism 2501 can also drive the brewing container 310 to perform a curved translation or a rotational motion between the powder-receiving position 110 and the brewing position 120. In this case, the curved connection direction between the powder-receiving position 110 and the brewing position 120 constitutes the second direction.

The composition of the lower driving mechanism 2501 is specifically configured to match the motion form of the brewing container 310. When the brewing container 310 undergoes the linear translation, the lower driving mechanism 2501 can be directly set as a drive unit such as a linear cylinder, a motor, or a combination of a drive unit and transmission components. The transmission components may include gear sets, screw-nut mechanisms, pulley assemblies, rack- and-pinion assemblies, etc. Of course, when the brewing container 310 performs the curved translation or the rotational motion at a certain angle, the lower driving mechanism 2501 can similarly be directly set as a drive unit, or a combination of a drive unit and transmission components.

Referring to FIG. 12 to FIG. 14, based on the above, regarding the specific configuration of the first cleaning component 400, the first cleaning component 400 can be fixedly positioned along the movement path of the brewing container 310. That is, the first cleaning component 400 is located on either side of the powder-receiving position 110 and/or the brewing position 120 in the second direction. This allows the brewing container 310 to pass by the first cleaning component 400 under the drive of the lower driving mechanism 2501, without requiring additional changes to the movement path of the brewing container 310 or the installation of other driving mechanisms.

Furthermore, in one embodiment, the first cleaning component 400 is fixedly positioned between the powder-receiving position 110 and the brewing position 120. As a result, when the lower driving mechanism 2501 drives the brewing container 310 to move back and forth between the powder-receiving position 110 and the brewing position 120, the brewing container 310 can pass by the first cleaning component 400 without the need to extend the movement path of the brewing container 310. Besides, when moving from the powder-receiving position 110 to the brewing position 120, the first cleaning component 400 can scrape any coffee powders that may remain in the cleaning area of the brewing container 310, sweeping it into the brewing chamber of the container. When returning from the brewing position 120 to the powder-receiving position 110, the first cleaning component 400 can scrape off any coffee residue left in the cleaning area of the brewing container 310.

And/or in one embodiment, the first cleaning component 400 is positioned closer to the brewing position 120 than to the powder-receiving position 110. Due to the need for extracting and brewing coffee powders at the brewing position 120, hot water or hot milk is introduced into the brewing chamber of the brewing container 310, resulting in a high temperature inside the chamber and softened coffee residues. By positioning the first cleaning component 400 close to the brewing position 120, the softened coffee residues can be cleaned immediately, preventing the difficulty of cleaning that arises when the residues cool and harden.

Inside the brewing container 310, a brewing chamber is formed to hold the coffee powders. It can be understood that the brewing container 310 can be configured as a semi-enclosed container with an inlet and a discharge outlet. Alternatively, in one embodiment, the brewing container 310 includes a cylinder body 311 and a first piston component 331. The cylinder body 311 defines a channel 211 that runs through the cylinder body 311 in the first direction. The first piston component 331 is arranged to be reciprocally movable along the first direction in the channel 211. The first piston component 331 is sealedly connected to an inner wall of the channel 211 to seal a lower section of the channel 211, thereby enclosing and forming the aforementioned brewing chamber.

The first piston component 331 is provided with multiple water inlet holes, which are used to connect external liquid bodies into the channel 211. The external liquid bodies, for example, can be hot water, hot milk, etc. These external liquid bodies can be connected and in communication with the water inlet holes through structures such as pipelines.

In practical application, an end surface of the cylinder body 311 along the first direction and close to the first cleaning component 400 is defined as a first end surface. This first end surface delineates the area to be cleaned. As a result, the coffee powders that fall onto the first end surface, or the coffee residues that are expelled from the brewing chamber and remain on the first end surface can be removed by the first cleaning component 400. Additionally, when the first piston component 331 moves to extend beyond the first end surface, the end surface of the first piston component 331 defines the area to be cleaned. After the brewing container 310 completes a single brewing cycle and outputs the coffee beverage, the third driving mechanism can drive the first piston component 331 toward the first end surface, pushing out the coffee residues left on the inner wall of the channel 211 and accumulating the coffee residues on the end surface of the first piston component 331 and/or the first end surface, ready for removal by the first cleaning component 400.

The third driving mechanism is arranged on the base 100 and is drivingly connected to the first piston component 331. It is understandable that the third driving mechanism and the lower driving mechanism 2501 can be set separately. Alternatively, the lower driving mechanism 2501 and the third driving mechanism are shared, meaning the lower driving mechanism 2501 is reused as the third driving mechanism. Specifically, for example, the lower driving mechanism 2501 includes a driver and a switching component connected to the driver. The switching component can convert the power output of the driver into driving the brewing container 310 to move along the second direction, and switch to driving the first piston component 331 to move along the first direction. The driver is, for example, a motor. The switching component may include a nut directly or indirectly coaxially connected to the motor, a screw rod threaded with the nut, and a sleeve fitted outside the screw rod, with the sleeve fixedly connected to the brewing container 310. The screw rod is fixedly connected to the first piston component 331. One of the sleeve and the screw rod is provided with a guide groove extending along the second direction and the first direction, respectively, while a remaining one of the sleeve and the screw rod is provided with a guide protrusion that slidably engages with the guide groove.

Furthermore, in light of the above, regarding a configuration scheme for the second cleaning component 500, first, similarly to the above, the second relative movement stroke can be formed by either the first cleaning component 400 or the second cleaning component 500 being movably arranged along the first direction, or by both the first cleaning component 400 and the second cleaning component 500 being movably arranged along the first direction. Additionally, the first cleaning component 400 and the second cleaning component 500 can move toward each other and away from each other. For ease of understanding, in the following embodiments, it will be assumed that the first cleaning component 400 is fixed relative to the base 100, and the second cleaning component 500 is movably arranged along the first direction relative to the base 100. In this case, the upper driving mechanism 2502 is connected to drive the second cleaning component 500.

Based on any of the above embodiments, the second cleaning component 500 can move independently along the first direction, and is directly connected to the upper driving mechanism 2502. Alternatively, in one embodiment, the self-cleaning brewing system further includes a second piston component 332. The second piston component 332 is positioned at the brewing position 120, and is arranged to be movable along the second direction. During its movement, the second piston component 332 extends from the opening into the brewing chamber to compress the powder inside. The second cleaning component 500 is fixedly positioned on the side of the second piston component 332 close to the first cleaning component 400. The upper driving mechanism 2502 is drivingly connected to the second piston component 332. It is understandable that when the second piston component 332 moves along the first direction into the brewing container 310, it can compress the dispersed coffee powders in the brewing chamber to form a coffee cake. This helps reduce the channeling effect during subsequent brewing, making the coffee extraction process more thorough. It also aids in increasing brewing pressure and optimizing brewing results. Since the movement paths of the second piston component 332 and the second cleaning component 500 are essentially the same when the first cleaning component 400 is positioned near the brewing position 120, linking the second cleaning component 500 with the second piston component 332 allows the upper driving mechanism 2502 to drive the movement of the second piston component 332. Simultaneously, this drives the movement of the second cleaning component 500, effectively simplifying the setup of the driving mechanism for the second cleaning component 500, which contributes to structural simplification and cost reduction.

In practical application, a shape of the second piston component 332 is adapted to a shape of the inner chamber at a corresponding position of the brewing container 310. When the cross-sectional shape of the brewing container 310 is approximately circular, the second piston component 332 is configured as a disc-shaped structure of the same shape. Similarly to the aforementioned lower driving mechanism 2501, the upper driving mechanism 2502 can be set to include only linear cylinders or other drivers as needed, or it can be configured to include motors, linear cylinders, rotary cylinders, and corresponding transmission components such as gear sets, rack and pinion sets, and lead screw nut mechanisms, which is not described in detail in the present invention.

In practical application, the second cleaning component 500 is arranged around a periphery of the second piston component 332. This ensures that, regardless of how the first cleaning component 400 is positioned relative to the brewing container 310, at least a portion of the second cleaning component 500 always remains adjacent to the side surface of the first cleaning component 400. This allows it to scrape off residues such as the coffee powders from that side surface during its movement along the first direction.

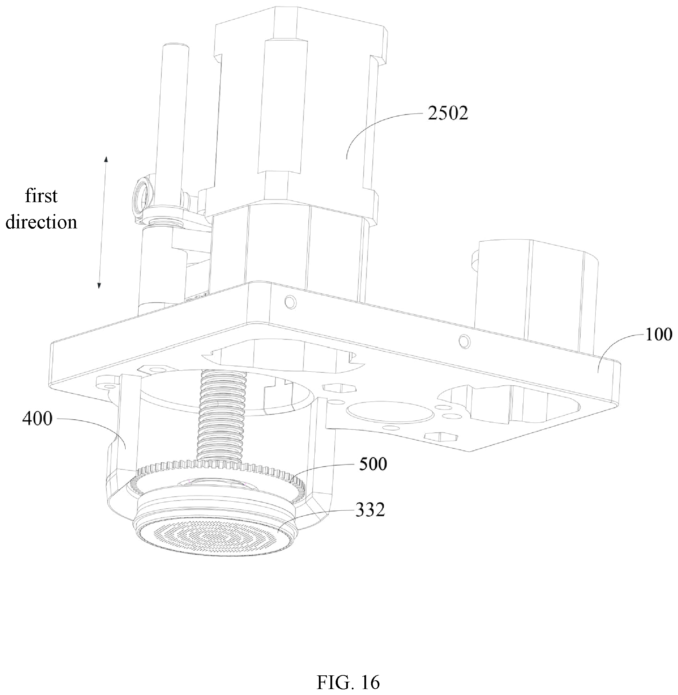

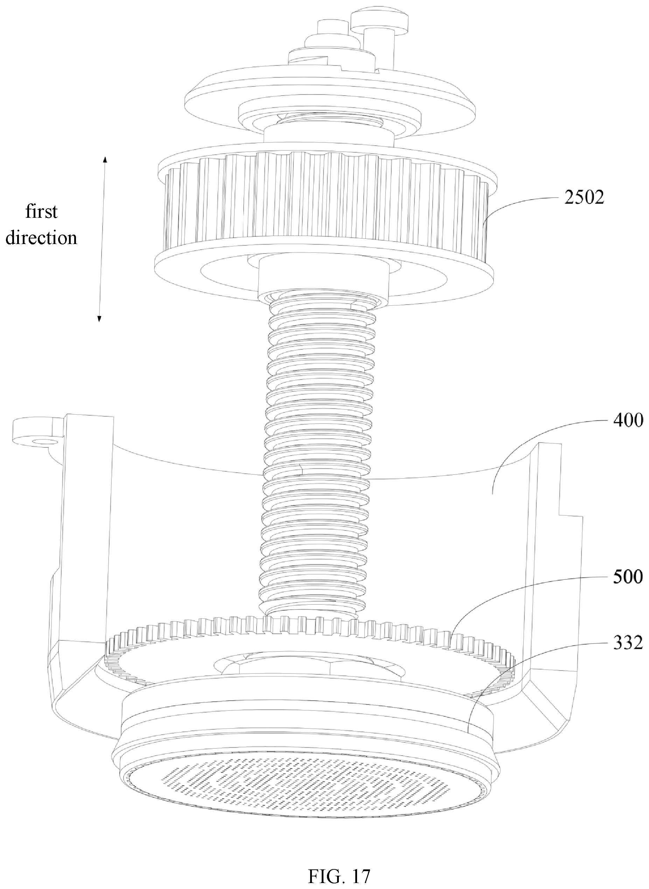

Specifically, when the external dimensions of the second piston component 332 are essentially the same as the dimensions of the inner chamber at the corresponding position of the brewing container 310, referring to FIG. 16 and FIG. 17, in one embodiment, the second cleaning component 500 may be offset to either side of the second piston component 332 in the first direction, for example, offset to an upper side of the second piston component 332 or offset to a lower side of the second piston component 332. As a result, while ensuring the functional effectiveness of the second cleaning component 500, the adverse impact of the second cleaning component 500 on the pressing operation of the second piston component 332 can be reduced.

Or, in one embodiment, the second cleaning component 500 may still surround the outer circumference of the second piston component 332 but is movably arranged relative to the second piston component 332 along the first direction. As a result, as the second piston component 332 drives the second cleaning component 500 to move closer to the first end face of the cylinder body 311, the second cleaning component 500 first slides into contact with the corresponding side surface of the first cleaning component 400, completing the cleaning of that side surface. Subsequently, when the second piston component 332 continues to move into the channel 211, the second piston component 332 is blocked by the first end face located around the port of the channel 211, causing relative movement along the first direction with the second piston component 332. This results in only the second piston component 332 entering the channel 211 to perform the pressing operation, while the second cleaning component 500 is blocked outside the channel 211, reducing any adverse effects the second cleaning component 500 might have on the pressing operation of the second piston component 332.

The second piston component 332 is driven by the upper driving mechanism 2502. The second piston component 332 can also be set to rotate on its own while moving up and down. As a result, during the movement of the second piston component 332, it can synchronously drive the second cleaning component 500 to move up and down and rotate itself. The second cleaning component 700 is preferably arranged in a circular surrounding form, or it can be arranged with multiple cleaning arms surrounding it, with an angle between adjacent cleaning arms being less than 120 degrees. The number of cleaning arms can be set to at least three.

Of course, when the external dimensions of the second piston component 332 are slightly smaller than the dimensions of the inner chamber at the corresponding position of the brewing container 310, the second cleaning component 500 can be made of an elastic material, capable of elastic deformation in the second direction. As a result, as the second piston component 332 moves the second cleaning component 500 closer to the first end face of the cylinder body 311, the second cleaning component 500 first slides against and contacts the corresponding side surface of the first cleaning component 400, completing the cleaning of that side surface. Subsequently, when the second piston component 332 continues to move into the channel 211, the second cleaning component 500 simultaneously enters the channel 211 but is compressed and deformed by the inner wall of the channel 211. This compression deformation helps enhance the sealing strength between the second piston component 332 and the inner wall of the channel 211.

Based on any of the aforementioned embodiments, in a further solution, the softness of the second cleaning component 500 is not greater than that of the first cleaning component 400. As a result, when the second cleaning component 500 and the first cleaning component 400 undergo a second relative movement stroke, the second cleaning component 500 increases the sliding contact force with the first cleaning component 400 through its own elastic deformation, thereby enhancing the cleaning effect of the second cleaning component 500 on the first cleaning component 400. The first cleaning component 400 does not undergo significant deformation, ensuring its structural integrity and accurate installation orientation, thereby maintaining the effective cleaning effect of the first cleaning component 400 on the brewing container 310.

Besides, in a further solution, it can be arranged that as the second cleaning component 500 approaches the brewing container 310 along the first direction, an increasing interference amount is formed between the second cleaning component 500 and the first cleaning component 400. This results in a gradually enhanced cleaning effect of the second cleaning component 500 on the first cleaning component 400, which is particularly suitable for situations where the residues on the first cleaning component 400 primarily accumulate in its lower region.

To achieve the aforementioned object, it is possible to specifically configure the first cleaning component 400 and/or the second cleaning component 500 such that their sliding contact surfaces gradually approach each other in a direction moving closer to the brewing container 310 along the first direction. Alternatively, an upper driving mechanism 2502 can be set to drive the second cleaning component 500 to move along the aforementioned inclined trajectory.

In practical applications, the first cleaning component 400 may be configured in a plate-like shape. The first cleaning component 400 is made of an elastic material, specifically such as a rubber block or a rubber plate. And/or the second cleaning component 500 is designed as a brush body. At least a bristle portion of the second cleaning component 500 is made of a flexible material. During the second relative movement stroke, the bristles of the second cleaning component 500 face the adjacent side surface of the first cleaning component 400, and are in interference contact with the corresponding side surface of the first cleaning component 400. The bristle portion of the brush body can be made of a flexible material such as fabric, or further made of an elastic material such as a rubber strip. This allows the bristle portion of the second cleaning component 500 to deform under force. While the second cleaning component 500 flexibly contacts the corresponding side surface of the first cleaning component 400, it helps to enhance the adaptability to the unevenness of the corresponding side surface of the first cleaning component 400 and increase the contact area with that surface through deformation.

Additionally, in one embodiment, the first cleaning component 400 is positioned adjacent to the brewing position 120. The first cleaning component 400 is adapted to the shape of the brewing container 310 and extends circumferentially around the brewing container 310. The second cleaning component 500 is arranged to extend in accordance with the shape of the adjacent side surface of the first cleaning component 400.

A plane where the area to be cleaned is located serves as a reference plane. In light of the above, the reference plane can be the plane of the first end face or the plane of the end surface of the first piston component 331 that extends movably from the first end face. The first cleaning component 400 has a projected area on the reference plane. In a third direction perpendicular to the second direction, the projected area at least covers the area to be cleaned. As a result, during the relative movement stroke between the first cleaning component 400 and the brewing container 310, the first cleaning component 400 is able to clean the entire area to be cleaned in one go.

Specifically, when the brewing container 310 is configured to be cylindrical, the first cleaning component 400 can be designed to extend in an arc shape along the circumference of the brewing container 310, with an arc length being no less than half the circumference of the brewing container 310. Alternatively, the first cleaning component 400 can be designed in a straight line extending along the third direction, with its length being no less than a maximum width of the brewing container 310 in the third direction. The shape of the second cleaning component 500 is adapted to match the shape of the adjacent side surface of the first cleaning component 400, and its extension length in the third direction is no less than the corresponding length of the first cleaning component 400.

Referring to FIG. 12 to FIG. 15, the preferred embodiment of the present invention includes, after the coffee extraction in the brewing container 310 is completed, the first piston component 331 inside the cylinder 311 pushes the coffee powders upwardly out of the cylinder 311, followed by the brewing container 310 rotating in the second direction. During this rotation process, the powder cake is scraped off by the first cleaning component 400. After the brewing container 310 continues to rotate until it completely moves out of the brewing position 120 (it is not necessary to rotate to the coffee receiving position 100), the second cleaning component 500 can then begin to work, preventing the coffee powders on the first cleaning component 400 from falling into the brewing container 310 and causing contamination.

Preferably, in the case of continuous brewing, when the brewing container 310 moves to the powder-receiving position 110, the upper driving mechanism 2502 drives the second piston component 332 and the second cleaning component 500 to move along the first direction, moving downwardly to clean the first cleaning component 400. To ensure cleanliness, the number of up-and-down reciprocations of the second cleaning component 500 can be preset based on factors such as the degree of dirtiness of the first cleaning component 400 and cleaning requirements. Finally, the second piston component 332 is kept near the lower end of the stroke of the second cleaning component 500. When the brewing container 310 moves to the brewing position 120, the second piston component 332 continues to press downwardly into the brewing container 310 to perform lower brewing work. This reduces the travel distance of the second piston component 332, saves time, and improves brewing efficiency. At the same time, it prevents the second cleaning component 500 from continuously scraping the first cleaning component 400 during its downward movement when the brewing container 310 is located below the first cleaning component 400, which could cause dirt from a first cleaning surface of the first cleaning component 400 to fall into the brewing container 310, thereby affecting brewing quality and leading to a decrease in the quality of the extracted coffee liquid.

The present invention provides a beverage preparation device. The beverage preparation device includes a device body and a brewing device arranged on the device body. It is understandable that the beverage preparation device may be, but is not limited to, electrical appliances such as a coffee machine, a soymilk maker, or a multi-grain blender. Taking the beverage preparation device as the coffee machine as an example, when the beverage preparation device directly processes the coffee powders, the brewing device directly receives the external coffee powders, and extracts and brews the external coffee powders. The external powder may be, for example, coffee capsules, small cans of coffee powders, or bagged coffee powders. When the beverage preparation device directly processes the coffee beans, the beverage preparation device may further include a grinding device. The grinding device receives the coffee beans and grinds the coffee beans into the coffee powders of the desired coarseness. The outlet of the grinding device is connected to and in communication with the inlet of the brewing device, allowing the coffee powders obtained from grinding to be fed into the brewing device for extraction and brewing.

Since the main inventive aspect of the present application lies in the improvement of the brewing device, the following embodiments primarily describe the brewing device in conjunction with the accompanying drawings.

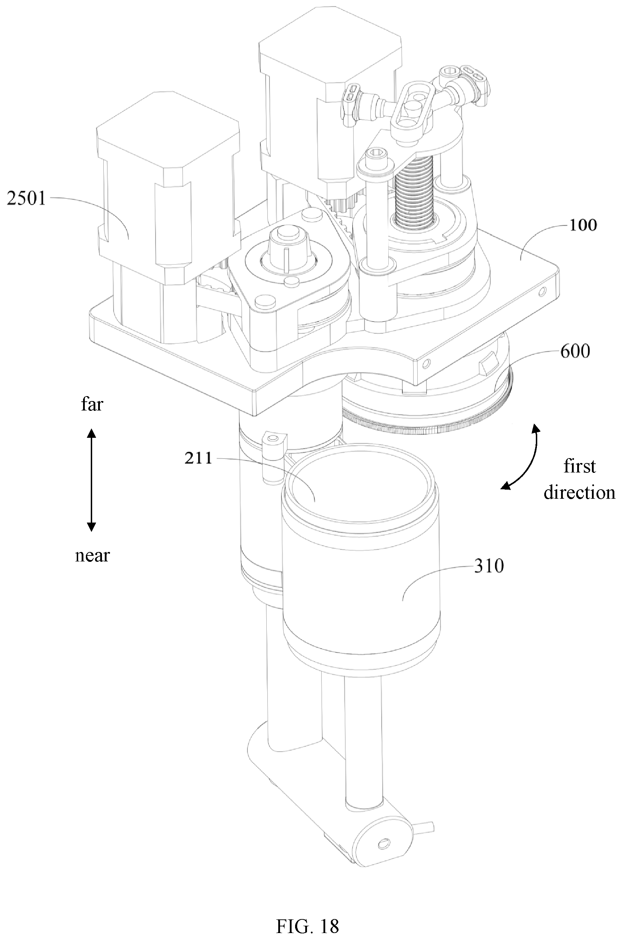

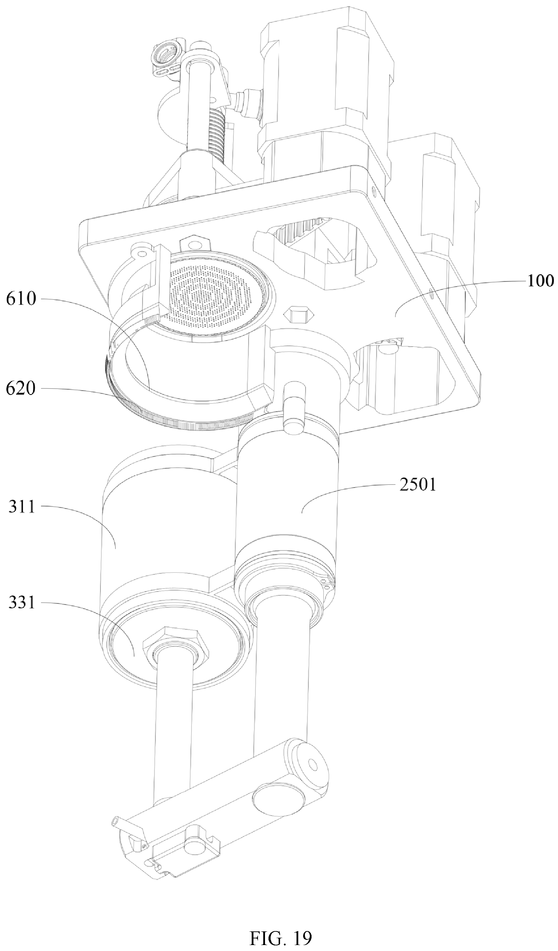

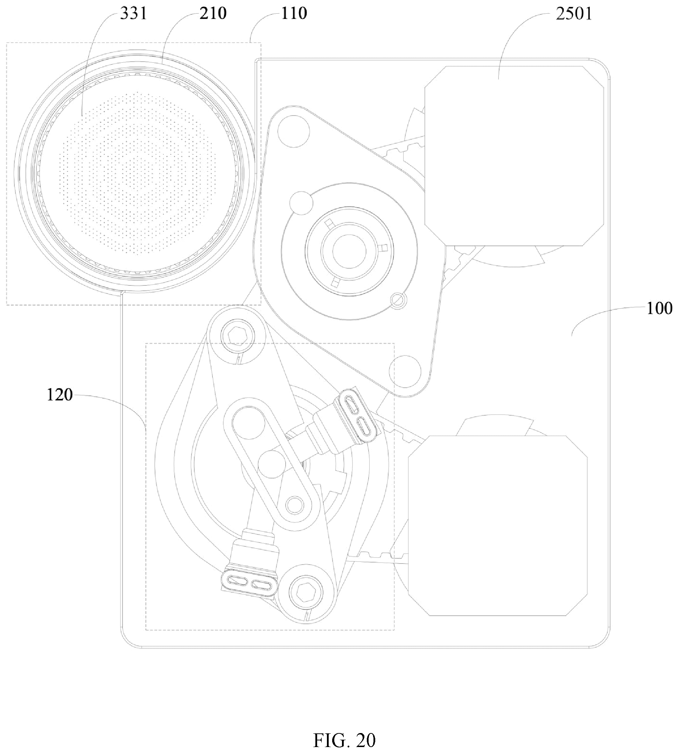

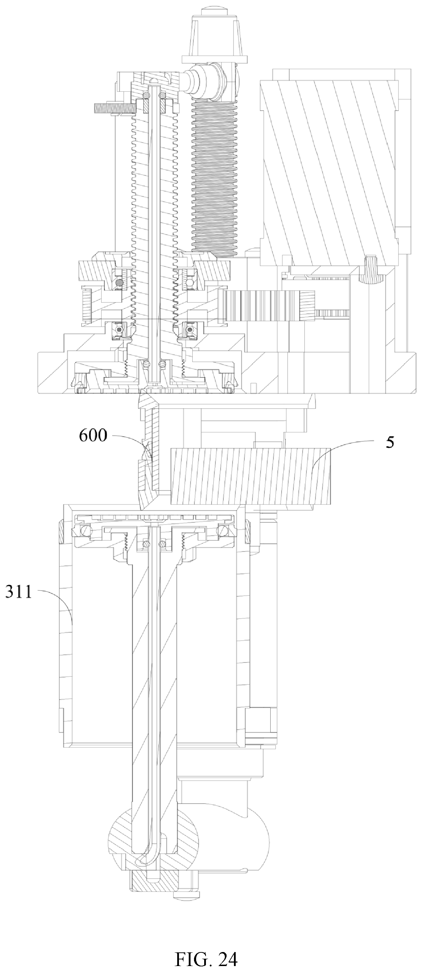

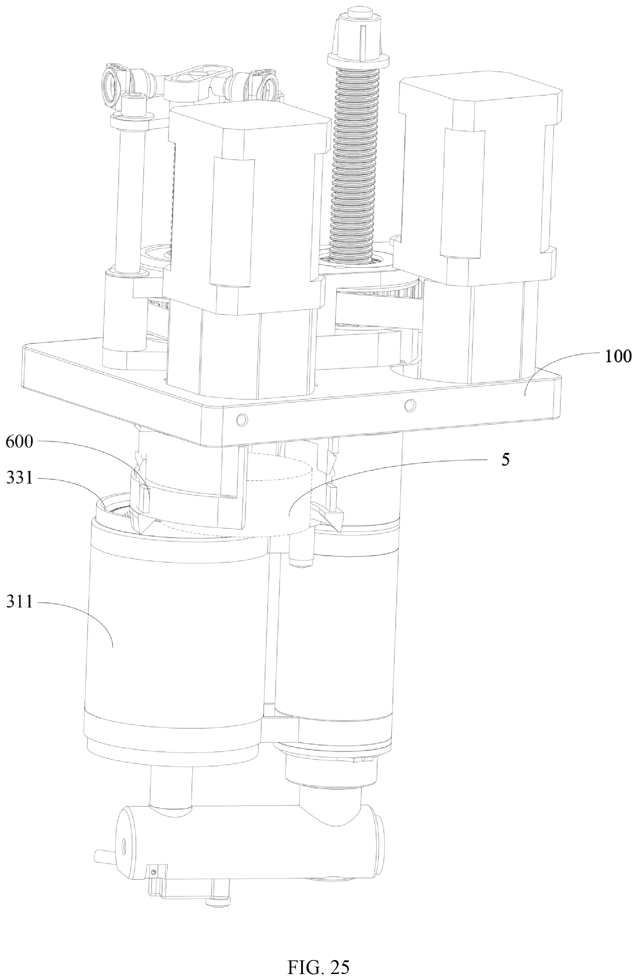

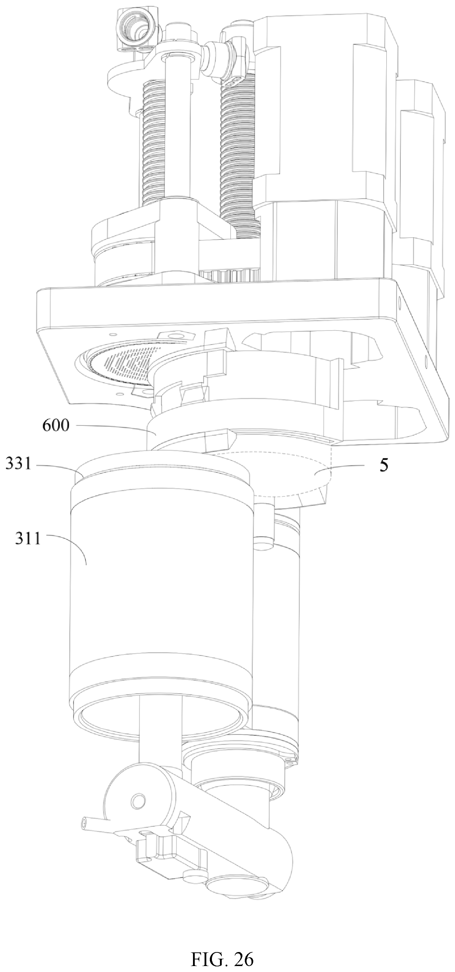

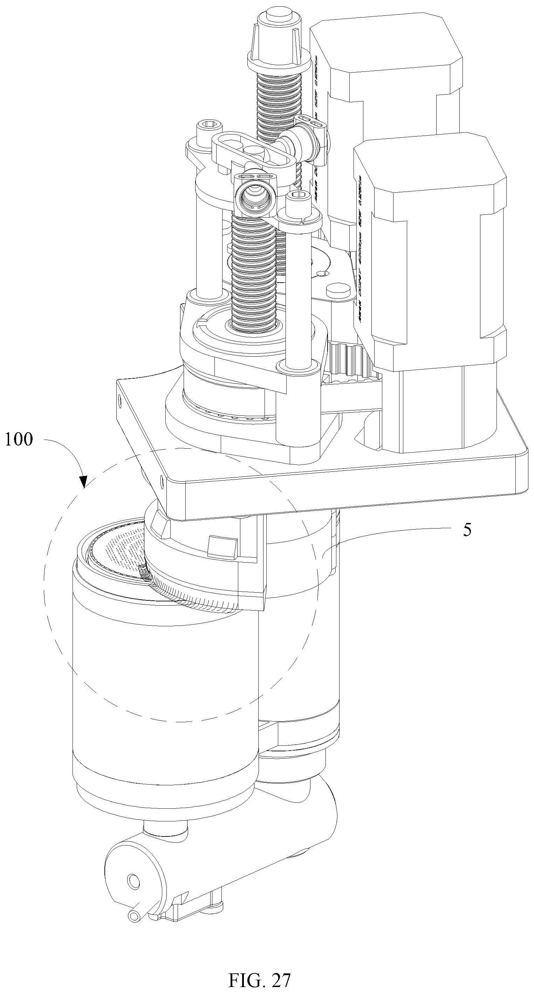

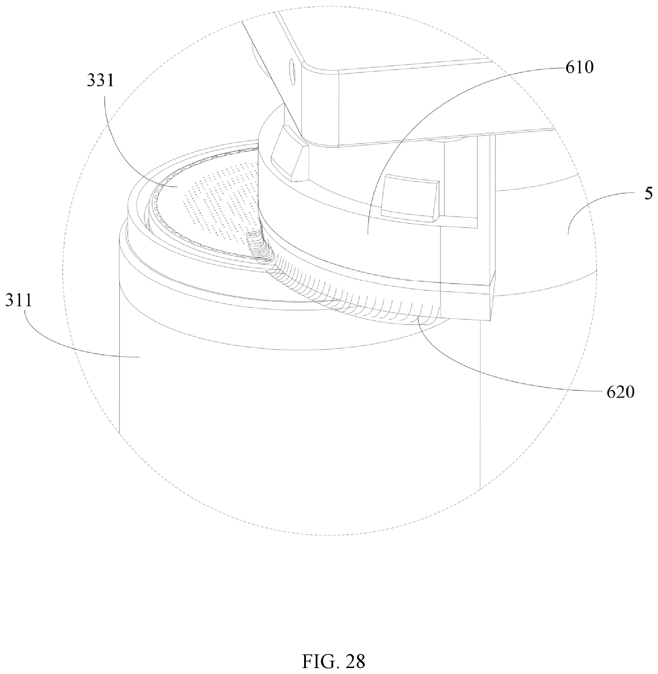

Referring to FIG. 18 to FIG. 28, the present invention provides a brewing device, which includes a brewing container 200, a cleaning component 600, and a driving mechanism. The brewing container 200 forms an area to be cleaned. The cleaning component 600 includes a first cleaning unit 610 and a second cleaning unit 620. At least one of the cleaning component 600 and the brewing container 200 is movably arranged relative to a remaining one of the cleaning component 600 and the brewing container 200, so that the cleaning component 600 and the brewing container 200 have a relative movement stroke. During this relative movement stroke, both the first cleaning unit 610 and the second cleaning unit 620 slide against the area to be cleaned to remove contaminants therefrom. The driving mechanism is connected to the movably arranged cleaning component 600 and/or the brewing container 200. During the relative movement stroke, the cleaning component 600 has a proximal end close to the area to be cleaned and a distal end away from it. The proximal end of the second cleaning unit 620 is positioned closer to the area to be cleaned than that of the first cleaning unit 610, and the flexibility of the second cleaning unit 620 is greater than that of the first cleaning unit 610.

In the technical solution provided by the present invention, driven by the driving mechanism, the cleaning component 600 and the brewing container 200 undergo a relative movement along the first direction. During this process, both the first cleaning unit 610 and the second cleaning unit 620 slide against the area to be cleaned, providing at least two cleaning operations sequentially. Since the second cleaning unit 620 contacts the area to be cleaned earlier than the first cleaning unit 610 and has greater softness, it can increase the contact area with the area to be cleaned and enhance surface conformity through elastic deformation during the first cleaning operation, thereby improving the comprehensiveness of cleaning. Subsequently, during the second cleaning operation by the first cleaning unit 610, due to its lower softness and relatively higher stiffness, it can strengthen the contact force with the area to be cleaned, thus enhancing the thoroughness of cleaning. The present application contributes to the overall optimization of the cleaning effect on the area to be cleaned in the brewing container 200.

Besides, in the present invention, the brewing device may also include a base 100. The base 100 primarily serves as a mounting carrier for functional components such as the brewing container 200, the cleaning component 600, and the driving mechanism. The base 100 can be, but is not limited to, one or a combination of a plate-like structure, a block-like structure, a box structure, and a frame structure. It may be specifically designed for the brewing device. When the brewing device is applied in beverage preparation device, the base 100 can be fixedly or movably installed with the device body of the beverage preparation device. Of course, the base 100 can also directly utilize a fixed structure, such as the device body, within the beverage preparation device, facilitating the integration of functional components like the brewing container 200, the cleaning component 600, and the driving mechanism onto the device body.

For ease of understanding, in the following embodiments, the brewing device is placed horizontally on a platform as an example, thus having a horizontal plane and a top-bottom direction. The horizontal plane includes a first direction and a second direction which are arranged in a cross pattern. However, it should be noted that the horizontal plane and the top-bottom direction do not limit the specific applications of the first direction and the second direction. In other applications, the first direction and the second direction may be other directions besides the horizontal plane and the top-bottom direction. In the following embodiments, the first direction mainly refers to a relative movement direction between the cleaning component and the brewing container.

Given the above, the brewing container 200 can be specifically positioned on a lower side of the base 100. The grinding device mentioned above can be specifically located on an upper side of the base 100. As a result, the coffee powders obtained from grinding by the grinding device can be directed into the brewing container 200 by leveraging gravity. The brewing container 200 is suspended below the base 100. The cleaning component 600 can be placed between the base 100 and the brewing container 200, that is, above the brewing container 200. Therefore, the near-far direction referred to in the following embodiments specifically corresponds to the top-bottom direction.

Then, the relative movement trajectory can be formed by either the cleaning component 600 or the brewing container 200 being movably arranged along the first direction, or by both the cleaning component 600 and the brewing container 200 being movably arranged along the first direction. The cleaning component 600 and the brewing container 200 can move towards each other or away from each other. For ease of understanding, in the following embodiments, it is assumed that the cleaning component 600 is fixed relative to the base 100, and the brewing container 200 is movably arranged relative to the base 100 along the first direction.

Specifically, as shown in FIG. 18, the base 100 is configured in a plate-like shape and extends approximately horizontally. On the base 100, a powder-receiving position 110 and a brewing position 120 are defined at intervals along a movement path of the brewing container 200. The first direction is defined between the powder-receiving position 110 and the brewing position 120. The driving mechanism includes a first driving mechanism 400. Under the drive of the first driving mechanism 400, the brewing container 200 moves and switches between the powder-receiving position 110 and the brewing position 120. The first driving mechanism 400 can drive the brewing container 200 to perform a linear translation between the powder-receiving position 110 and the brewing position 120. In this case, the straight-line connection direction between the powder-receiving position 110 and the brewing position 120 constitutes the first direction. Of course, the first driving mechanism 400 can also drive the brewing container 200 to perform a curved translation or a rotational motion between the powder-receiving position 110 and the brewing position 120. In this case, the curved connection direction between the powder-receiving position 110 and the brewing position 120 constitutes the first direction.

A composition of the first driving mechanism 400 is specifically configured to match a motion form of the brewing container 200. When the brewing container 200 undergoes the linear translation, the first driving mechanism 400 can be directly set as a driver such as a linear cylinder, a motor, or a combination of a driver and transmission components. the transmission components can include gear sets, screw-nut mechanisms, pulley assemblies, rack and pinion components, etc.

Given this, the cleaning component 600 can be fixedly positioned along the movement path of the brewing container 200, specifically on either side of the powder-receiving position 110 and/or the brewing position 120 in the first direction. This arrangement allows the brewing container 200 to pass by the cleaning component 600 under the drive of the first driving mechanism 400, without requiring any additional alterations to its movement path or the installation of extra driving mechanisms.

Furthermore, in one embodiment, the cleaning component 600 is fixedly positioned between the powder-receiving position 110 and the brewing position 120. This arrangement allows the brewing container 200 to pass by the cleaning component 600 as it moves back and forth between the powder-receiving position 110 and the brewing position 120 under the drive of the first driving mechanism 400, without requiring additional extension of the movement path of the brewing container 200. Moreover, when moving from the powder-receiving position 110 to the brewing position 120, the cleaning component 600 can scrape any coffee powders that may remain in the area to be cleaned of the brewing container 200, sweeping it into the brewing chamber of the container. Conversely, when returning from the brewing position 120 to the powder-receiving position 110, the cleaning component 600 can scrape off any coffee residue left in the area to be cleaned of the brewing container 200.

And/or, in one embodiment, the cleaning component 600 is positioned closer to the brewing position 120 than to the powder-receiving position 110. Since hot water or hot milk is introduced into the brewing chamber of the brewing container 200 at the brewing position 120 to extract and brew the coffee powders, a temperature inside the brewing chamber is relatively high, and the residual coffee powders remain in a softened state. By positioning the cleaning component 600 near the brewing position 120, the softened coffee powders can be cleaned immediately, avoiding the difficulty of cleaning coffee powders after they have cooled and hardened.

Given the above, a brewing chamber is formed inside the brewing container 200 to hold the coffee powders. It can be understood that the brewing container 200 can be configured as a semi-enclosed container with an inlet and a discharge outlet. Alternatively, in one embodiment, the brewing container 200 includes a cylinder body 311 and a first piston component 220. The cylinder body 311 defines a channel 211 that runs through the cylinder body 311 in a direction (i.e., the top-bottom direction) toward and away from the cleaning component 600. The first piston component 220 is arranged to be reciprocally movable along an extending direction of the channel 211 within the channel 211. The first piston component 220 is sealedly connected to an inner wall of the channel 211 to seal a lower section of the channel 211, thereby enclosing and forming the aforementioned brewing chamber.

The first piston component 220 defines multiple water inlet holes, which are used to introduce external liquid into the channel 211. The external liquid may include, for example, hot water, hot milk, and the like.

The second driving mechanism is arranged on the base 100 and is drivingly connected to the first piston component 220.

In practical application, a surface of the cylinder 311 near the cleaning component 600 is defined as a first end face, which delineates the area to be cleaned. This allows the cleaning component 600 to remove the coffee powders that have fallen onto the first end face, or the coffee residue that has been expelled from the brewing chamber and remains on the first end face. Additionally, when the first piston component 220 moves to extend beyond the first end face, its end surface defines the area to be cleaned. After the brewing container 200 completes a single brewing cycle and outputs the coffee beverage, the second driving mechanism can drive the first piston component 220 toward the first end face, pushing out any coffee residue adhering to the inner wall of the channel 211, accumulating it on the end surface of the first piston component 220 and/or the first end face, ready for removal by the cleaning component 600.

It is understandable that the second driving mechanism and the first driving mechanism 400 can be individually arranged separately. Alternatively, the first driving mechanism 400 and the second driving mechanism can be shared, meaning the first driving mechanism 400 is reused for the second driving mechanism. Specifically, for example, the first driving mechanism 400 includes a driver and a switching component connected to the driver. The switching component can convert the power output of the driver into driving the brewing container 200 to move along the first direction, and switch to driving the first piston component 220 to move along the vertical direction. The driver, for instance, is a motor. The switching component may include a nut directly or indirectly connected to the motor, a lead screw threaded with the nut, and a sleeve fitted over the outside of the lead screw. The sleeve is fixedly connected to the brewing container 200. The lead screw is fixedly connected to the first piston component 220. One of the sleeve and the lead screw is provided with a guide groove extending along the first direction and the top-bottom direction respectively, while a remaining one of the sleeve and the lead screw is provided with a guide protrusion that slidably engages with the guide groove.

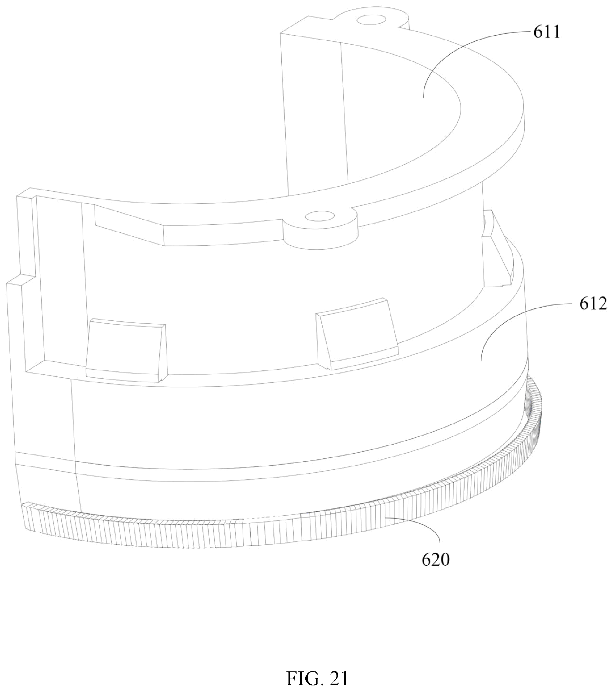

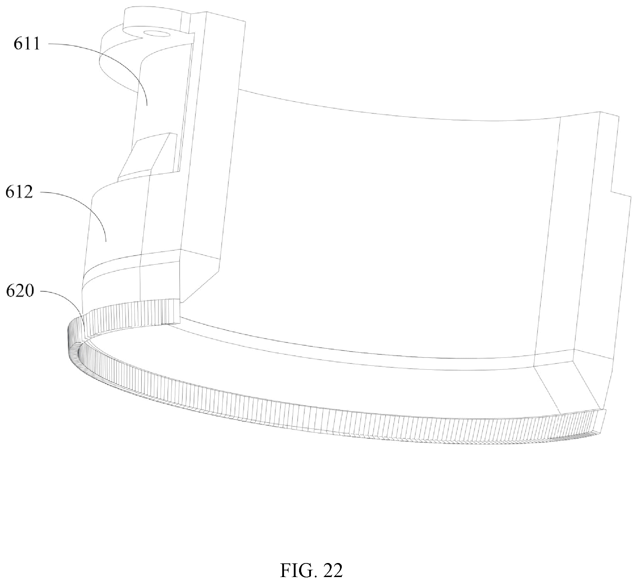

Given the above, regarding an arrangement scheme of the cleaning component 600, referring to FIG. 21 and FIG. 22, in one embodiment, the first cleaning unit 610 and the second cleaning unit 620 are arranged sequentially from far to near. That is, the first cleaning unit 610 is positioned directly above the second cleaning unit 620. As a result, during the relative movement stroke, the second cleaning unit 620 first slides into contact with the area to be cleaned, performing an initial cleaning. Since the second cleaning unit 620 is softer, it bends and deforms during its sliding contact with the area to be cleaned, allowing the first cleaning unit 610 to subsequently slide into contact with the area to be cleaned, performing the secondary cleaning.

Or, in one embodiment, the first cleaning unit 610 and the second cleaning unit 620 are arranged sequentially along a direction from the brewing position 120 to the powder-receiving position 110. As a result, when the first driving mechanism 400 drives the brewing container 200 to move and switch between the powder-receiving position 110 and the brewing position 120, the first cleaning unit 610 and the second cleaning unit 620 sequentially slide and abut against the area to be cleaned. Since a proximal end of the second cleaning unit 620 is positioned closer to the first cleaning unit 610 than to the area to be cleaned, the portion of the second cleaning unit 620 protruding from the first cleaning unit 610 allows the second cleaning unit 620 to deform under force.

In practical applications, the first cleaning unit 610 is configured in a plate-like shape and is made of elastic material, such as a rubber block or rubber plate. During the relative movement stroke, at least the proximal surface of the first cleaning unit 610 slides against the area to be cleaned. That is, when the brewing container 200 moves past the cleaning component 600, the proximal surface of the first cleaning unit 610 precisely slides against the surface of the area to be cleaned. Alternatively, when the brewing container 200 moves past the cleaning component 600, at least the proximal segment of the first cleaning unit 610 slides against the surface of the area to be cleaned, meaning it engages with the surface in an interference fit, causing at least the proximal segment of the first cleaning unit 610 to deform under force during the relative movement process.

Furthermore, in one embodiment, the flexibility of the first cleaning unit 610 is configured to increase from the distal end to the proximal end. This arrangement allows the proximal segment of the first cleaning unit 610 to be more flexible, making it easier to elastically deform. While flexibly abutting against the surface of the area to be cleaned, it helps enhance the adaptability to the surface irregularities and increase the contact area with the surface of the area to be cleaned through elastic deformation. Additionally, it ensures that the distal end of the first cleaning unit 610 has lower flexibility and greater stiffness, which helps provide sufficient structural strength for the entire first cleaning unit 610, preventing overall deformation failure due to insufficient stiffness.

It should be noted that the increase in settings can be either linearly continuous or stepwise incremental.

There are multiple schemes to achieve the flexibility variation of the first cleaning unit 610.

In one embodiment, the difference in flexibility can be realized by distinguishing the materials of different plate segments of the first cleaning unit 610 from far to near. Specifically, the first cleaning unit 610 may include a fixed plate segment 611 and a deformable plate segment 612 which are connected sequentially from far to near. The fixed plate segment 611 and the deformable plate segment 612 are detachably connected. There are various methods for detachable connection, such as one or several of screw fastening, snap fastening, adhesive bonding, and magnetic adsorption.

And/or, in one embodiment, the difference in flexibility between the two can be achieved by structuring the first cleaning unit 610 with varying plate segments from far to near. Specifically, a thickness of at least the near segment of the first cleaning unit 610 is reduced along the direction from far to near. By thinning the thickness of the near segment of the first cleaning unit 610, the flexibility of the near segment is greater than that of the far end, making it more prone to deformation under force.

Besides, in one embodiment, the second cleaning unit 620 is configured as a brush body. At least a bristle portion of the second cleaning unit 620 is made of a flexible material. During the relative movement stroke, the bristles of the second cleaning unit 620 are in interference contact with the area to be cleaned. The bristle portion of the brush body can be made of a flexible material such as a fabric, or further made of an elastic material like a rubber strip. When the brewing container 200 moves past the cleaning component 600, at least the bristles of the second cleaning unit 620 slide into contact with the surface of the area to be cleaned, meaning they are in interference contact with that surface, causing at least the proximal segment of the second cleaning unit 620 to deform under force during the relative movement. This allows the bristle portion of the second cleaning unit 620 to deform under force, enabling flexible contact with the surface of the area to be cleaned, while also helping to increase the adaptability to the unevenness of the surface and expand the contact area with the surface.

Furthermore, based on any of the aforementioned embodiments, in a further solution, a plane where the area to be cleaned is located serves as a reference plane. In light of the above, the reference plane can be a plane where the first end face is located, or a plane where the end surface of the first piston component 220, which extends movably from the first end face, is situated. The cleaning component 600 has an orthographic projection area on this reference plane. Along a second direction perpendicular to the first direction, the orthographic projection area is arranged to at least cover the area to be cleaned. As a result, during the relative movement stroke between the cleaning component 600 and the brewing container 200, the cleaning component 600 can clean the entire area to be cleaned in one go.

Specifically, when the brewing container 200 is configured in a cylindrical shape, the cleaning component 600 can be designed to extend in an arc along the circumference of the brewing container 200. An arc length of this shape is not less than half the circumference of the brewing container 200. Alternatively, the cleaning component 600 can be configured in a straight line extending along the second direction, with its length not less than a maximum width of the brewing container 200 in the second direction.

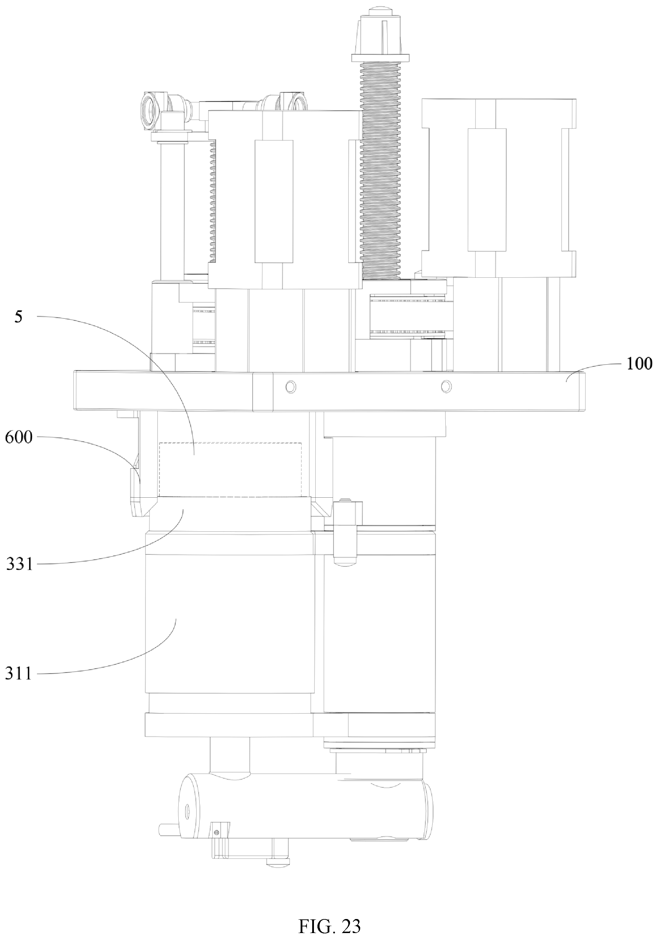

In practical applications, referring to FIG. 23 to FIG. 28, when the brewing container 200 moves to the brewing position 120 and completes the preparation of the coffee beverage, which is then dispensed externally, the first piston component 220 moves along the top-bottom direction toward a direction of the cleaning component 600, that is, toward the opening of the cylinder body 311. During its movement, it scrapes off the coffee powders 5 remaining on the inner wall of the channel 211 and carries them to the opening of the cylinder body 311. At this time, an upper surface of the first piston component 220 defines the area to be cleaned. Subsequently, relative movement occurs between the cleaning component 600 and the brewing container 200 along the first direction, allowing the first cleaning unit 610 and the second cleaning unit 620 to clean the area to be cleaned separately. During this movement, the coffee powders 5 on the first piston component 220 are scraped off, achieving effective cleaning of the coffee powders 5 inside the brewing container 200.

Besides, in one embodiment, the cleaning component 600 is rotatably arranged relative to the base 100. In this case, the distal end of the cleaning component 600 is pivotally connected to the base 200, enabling the proximal end of the cleaning component 600 to flip along the first direction. Based on this, when the brewing container 200 moves to the brewing position 120 and completes the preparation of the coffee beverage, which is then dispensed, the first piston component 220 moves along the top-bottom direction toward the cleaning component 600, that is, toward the opening of the cylinder 311. During its movement, it scrapes off the coffee powders 5 remaining on the inner wall of the channel 211 and carries them to near the opening of the cylinder 311. At this time, the upper surface of the first piston component 220 defines an area to be cleaned. Subsequently, the cleaning component 600 can flip toward the direction of the cylinder 311 and at least partially extend into the cylinder 311. As the cleaning component 600 continues to flip, it scoops out the coffee powders 5 from within the cylinder 311, aiding in simultaneously cleaning the inner wall of the cylinder 311 and the end surface of the first piston component 220.

Besides, in another embodiment, when the brewing device further includes a compacting mechanism, the compacting mechanism is used to press the coffee powders in the brewing container 200 when it moves to the brewing position 120, causing the coffee powders to be compacted into a cake shape. Specifically, the compacting mechanism may include a second piston component that is movable in the top-bottom direction. The second piston component can extend into the channel 211 to perform the pressing operation. Based on this, the cleaning component 600 may further include a third cleaning unit located at the upper end of the first cleaning unit 610. An arrangement structure between the third cleaning unit and the upper end of the first cleaning unit 610 is essentially the same as that between the second cleaning unit 620 and the lower end of the first cleaning unit 610. As a result, while the second cleaning unit 620 and the lower end of the first cleaning unit 610 jointly clean the coffee powders 5 at the first piston component 220, the third cleaning unit and the upper end of the first cleaning unit 610 can similarly clean the lower surface of the second piston component.

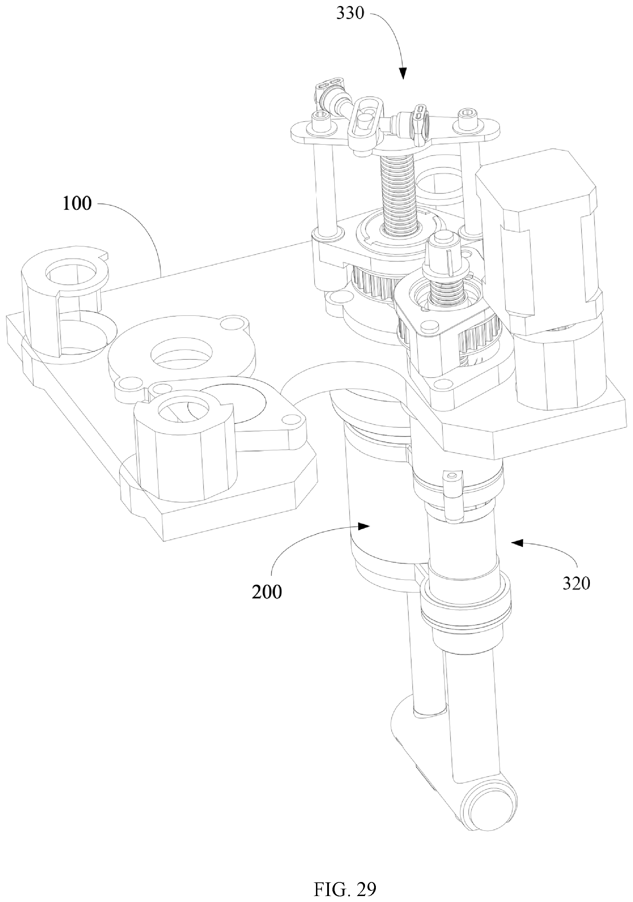

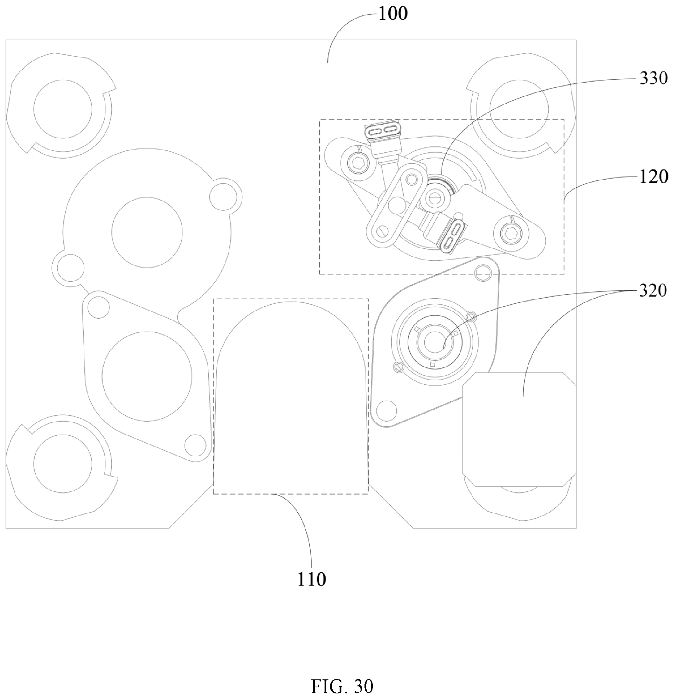

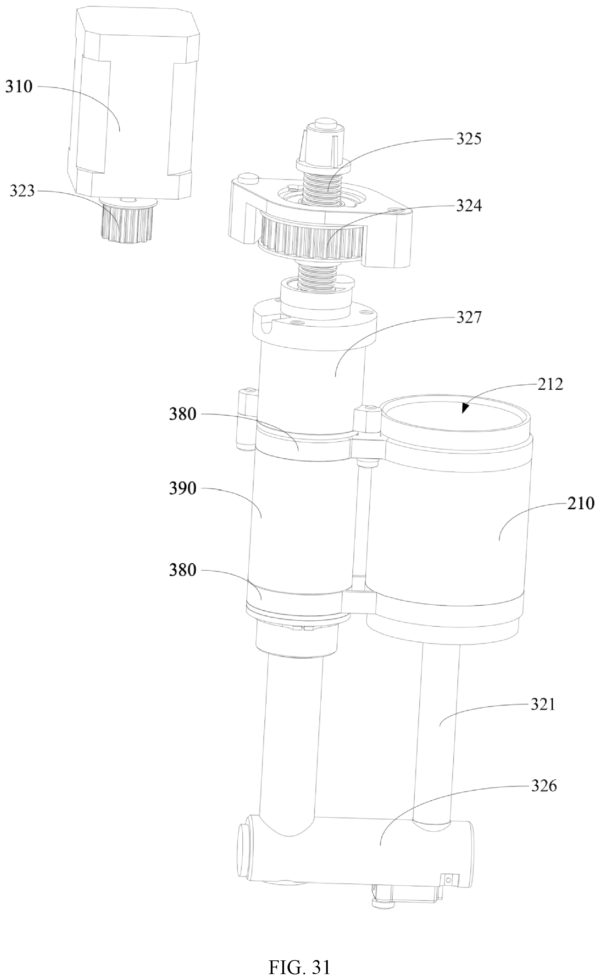

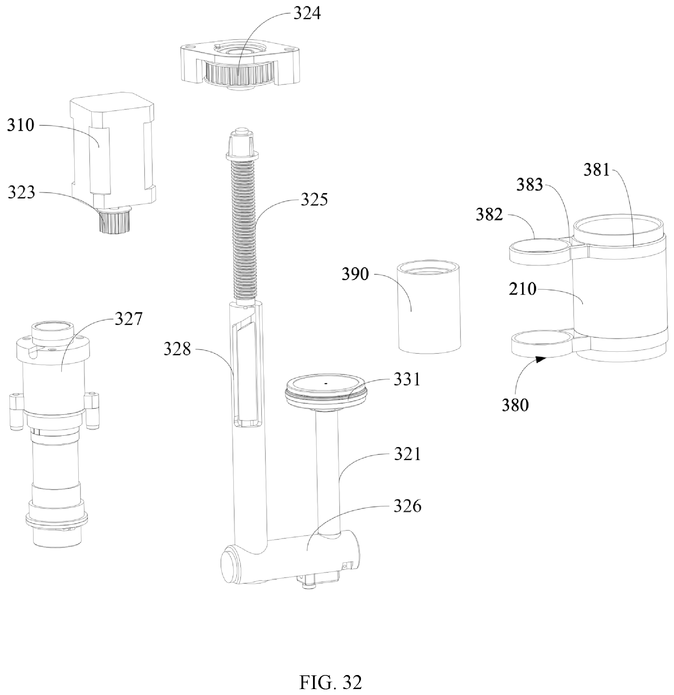

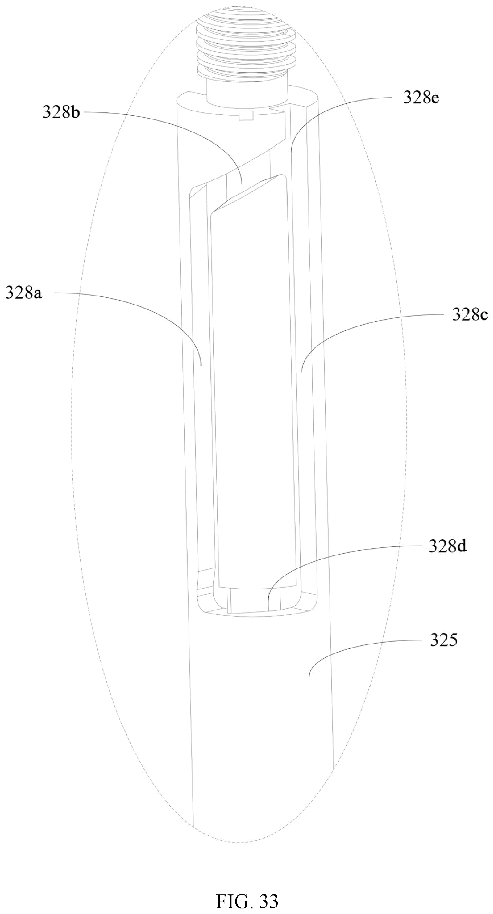

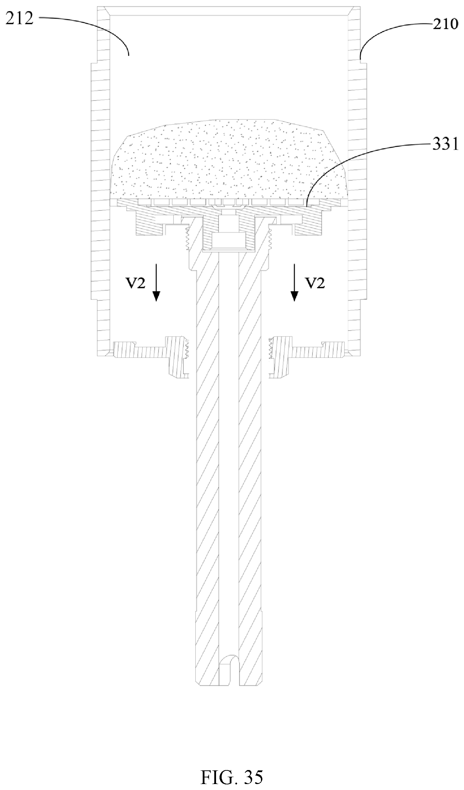

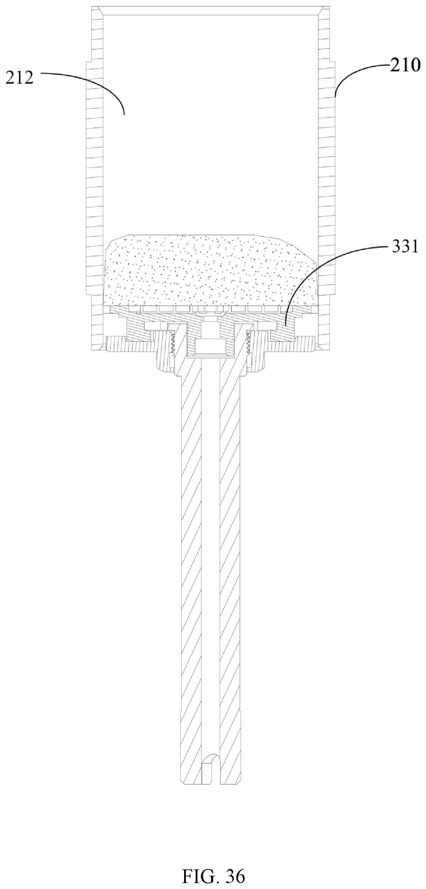

Referring to FIG. 29 to FIG. 37, the brewing module provided by the present invention for a beverage preparation device includes a brewing device 320 and a first driving mechanism 320. The brewing device 320 is provided with an inlet and a brewing chamber 211 for receiving and brewing the powdered material. The powdered material enters the brewing chamber 211 via the inlet. A movable component is arranged in the brewing device 320 to push the powdered material to move reciprocally in the vertical direction, thereby spreading the powdered material evenly within the brewing chamber 211 during its vertical movement. The first driving mechanism 320 is drivingly connected to the movably arranged part of the brewing device 320.

In other embodiments, the first driving mechanism may drive the brewing device to reciprocate relative to a moving part inside the brewing device, or the first driving mechanism may drive the brewing device and the moving part to move simultaneously.

In the technical solution provided by the present invention, after the ground powder discharged by the grinding device enters the brewing chamber 211 through the inlet, it accumulates in a conical shape within the chamber. During the process of the brewing chamber 211 receiving the powder, and/or after the brewing chamber 211 completes the operation of receiving the required amount of powder, and/or before the compacting mechanism 330 performs the pressing operation on the powder, due to the movable part being capable of reciprocating vertically, its vertical movement accelerates the sliding of the powder located at a top of the conical shape. This causes the coffee powders to spread more evenly on a bottom wall of the brewing chamber 211, forming a relatively flat surface to be pressed, which is more conducive to the balanced pressing by the subsequent compacting mechanism 330. At the same time, it also helps the coffee powders to stabilize on the bottom wall of the brewing chamber 211, preventing the powder from flying or falling off, thereby enhancing the overall reliability of the subsequent compacting mechanism 330 and ultimately optimizing the quality of coffee preparation.

In the present invention, the beverage preparation device can be an intelligent fully automatic or semi-automatic beverage device, such as a coffee machine, a soymilk machine, etc. Correspondingly, the granular materials involved in the present invention can be bean materials like coffee beans, soybeans, etc. For ease of understanding, in the following embodiments, the beverage preparation device is exemplified as the coffee machine, where the granular materials refers to coffee beans and the powdered material refers to coffee powders.

It is understandable that a beverage processing machine generally includes a grinding device and a brewing device. The grinding device uses tools such as blades to grind and break the coffee beans, resulting in coffee powders. A brewing module in the brewing device receives the ground powder from the grinding device and evenly spreads the powder that is piled in a conical shape. An additional preset compacting mechanism 330 in the brewing device compresses the scattered powder in the brewing chamber 211 into a cake. An additional preset liquid supply mechanism in the brewing device provides sufficient and desired types of liquid (such as hot water) to the compressed coffee cake, ultimately achieving the extraction and brewing of coffee.

Given the above, the present invention primarily focuses on structural improvements to the brewing module within the brewing device. The remaining components, such as the compacting mechanism 330 and the liquid supply mechanism, can refer to existing technologies and are not described in detail herein.

In the present invention, the brewing module applied to the beverage preparation device may further include a base 100. The base 100 can be used for mounting the aforementioned brewing device and the first driving mechanism. It is understandable that the base 100 may be a plate-like structure, a block-like structure, a box-like structure, a frame-like structure, or other suitable structure specifically designed for the brewing module to accommodate, for example, the brewing device 320 and the first driving mechanism 320. Alternatively, the base 100 may also be a structure shared with a certain component of the beverage preparation device as a whole (such as a casing) or with other components within the beverage preparation device (such as the grinding device), which will not be described in detail in the present invention.

The base 100 defines a powder-receiving position 110 and a brewing position 120, with a horizontal interval maintained between the powder-receiving position 110 and the brewing position 120. The brewing device 320 is arranged to move reciprocally between the powder-receiving position 110 and the brewing position 120. An outlet of the grinding device can be positioned above the powder-receiving position 110, while an inlet of the brewing chamber 211 in the brewing device 320 can be located at or below the powder-receiving position 110, allowing the coffee powders ground by the grinding device to fall into the brewing chamber 211 under gravity. Typically, the inlet of the brewing device 320 is set on a top wall of the brewing chamber 211, causing the coffee powders entering the brewing chamber 211 to naturally accumulate on a bottom wall, forming a tapered shape with a smaller cross-sectional area at the top and larger at the bottom. The compacting mechanism 330 and the liquid supply mechanism primarily operate at the brewing position 120, so that when the brewing device 320 moves to the brewing position 120, the compacting mechanism 330 compresses the coffee powders inside, forming it into a cake. The liquid supply mechanism acts on the coffee powders in the brewing device 320 to extract and brew the coffee powders.

Under the drive of the first driving mechanism 320, the moving part reciprocates along the vertical direction. On one hand, during the vertical movement of the moving part, it can cause the coffee powders with a pointed conical top on a bottom cavity wall of the brewing device 320 to slide down, thereby making a stacking area of the coffee powders uniform and flat. On the other hand, the vertical movement of the moving part does not affect the alignment accuracy between the feeding port of the brewing chamber 211 and the discharge port of the grinding device, thereby reducing the loss of coffee powders during the receiving process and not occupying horizontal space.

In one embodiment, the brewing device 320 includes a brewing container 322 and a first piston component 331. The brewing container 322 defines a material-receiving channel vertically extending therethrough. The first piston component 331 is sealingly arranged in the material-receiving channel and, together with the material-receiving channel, defines the brewing chamber 211. An upper surface of the first piston component 331 constitutes a bottom wall of the brewing chamber 211. The first piston component 331 is capable of reciprocating vertically within the brewing chamber. The first piston component 331 constitutes the aforementioned movable component.

The brewing container 322 is essentially a hollow cylinder extending vertically, with its upper end open to form an inlet. A lower end of the brewing container 322 is also open, allowing the first piston component 331 to extend inside and move up and down reciprocally within the material-receiving channel. The shape of the first piston component 331 matches the inner chamber of the material-receiving channel to minimize an installation gap formed therebetween. Additionally, at least an outer periphery of the first piston component 331 is made of elastic sealing material, or an elastic sealing ring layer is arranged on its outer periphery, ensuring that the outer wall of the first piston component 331 is sealed against the inner chamber wall of the material-receiving channel. This achieves dynamic sealing during the vertical movement of the first piston component 331 relative to the brewing container 322, preventing coffee powders or brewed coffee beverages from overflowing.

Before the brewing container 322 receives the powder, the first driving mechanism 320 drives the first piston component 331 to move in the material-receiving channel to a preset position. At any time after the powder receiving operation of the brewing container 322 and before the compacting mechanism 330 performs the powder pressing operation on the powder inside the brewing container 322, the first driving mechanism 320 can drive the first piston component 331 to reciprocate vertically at a preset speed for a preset number of times before stopping. During this process, the coffee powders can be evenly spread on the bottom cavity wall of the brewing chamber 211.

For ease of understanding, the vertical movement stroke of the first piston component 331 is elaborated below.

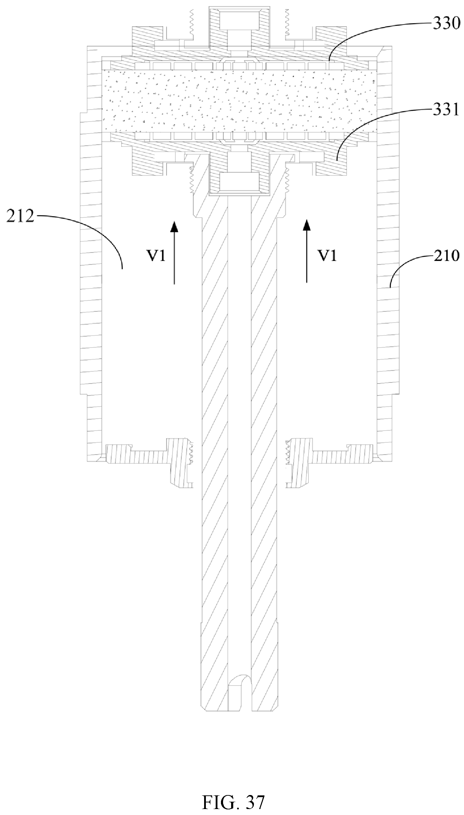

Referring to FIG. 37, in one embodiment, the vertical movement stroke of the first piston component 331 includes a first stroke H1 in the brewing cylinder 211, which is used in conjunction with the compacting mechanism 330 to press the coffee powders for brewing and extraction. During this stroke, the brewing device 320 is at the brewing position 120. The pressing component (e.g., another first piston component) in the compacting mechanism 330 moves vertically downward. The first piston component 331 can move vertically upward, causing the pressing component and the first piston component 331 to approach each other, thereby compressing the coffee powders into a cake. The entire process of the vertical upward movement of the first piston component 331 constitutes the first stroke H1.

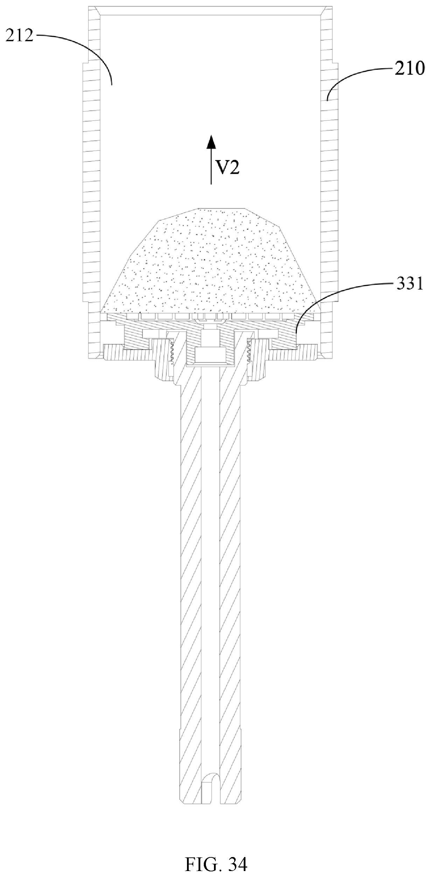

Referring to FIG. 34 to FIG. 36, in one embodiment, the vertical movement stroke of the first piston component 331 further includes a second stroke H2 used for evenly spreading the powder in the brewing cylinder 211. During this stroke, the brewing device 320 can be positioned at the brewing position 120. Before the pressing component moves vertically downward, the first piston component 331 may perform at least one vertical upward movement to evenly spread the powder accumulated thereon. At this time, the entire vertical movement of the first piston component 331 constitutes the second stroke H2.

It is understandable that the first stroke H1 is used for powder compaction, requiring a larger stroke. The second stroke H2 is used for vibrating loose powder, where the amplitude does not need to be set too high, meaning a relatively smaller stroke is sufficient. Therefore, in practical applications, the second stroke H2 can be set to be shorter than the first stroke H1.

Besides, in practical applications, if a speed of the first piston component 331 during the first stroke H1 is defined as V1, and a speed of the first piston component 331 during the second stroke H2 is defined as V2, where V1 is less than V2. As a result, by appropriately increasing the speed V2 of the second stroke H2, the vibration and powder dispersion process of the first piston component 331 achieves a relatively higher vibration frequency, which helps to more efficiently achieve the goal of uniform powder spreading.

In a preferred embodiment, the first piston component 331 is rapidly raised to a preset high shaking position at the speed V2, then quickly returns to a preset low shaking position at the same speed V2, completing one shaking stroke. The second stroke H2 consists of at least one shaking stroke. In specific applications, the second stroke H2 can be composed of, for example, two consecutive shaking strokes. Then, the first piston component 331 pushes the powder upwardly to the pressing position at the speed V1 to cooperate with the upper piston in compressing the powder into a power cake, where V1 is less than V2.

In one embodiment, the vertical movement stroke of the first piston component 331 further includes a third stroke H3 in the brewing cylinder 211, used to push the coffee powders upwardly out of the brewing cylinder 211 after extraction, where H3 is greater than H1. During this stroke, the brewing device 320 is in the brewing position 120. When the pressing component moves vertically downward and the first piston component 331 moves vertically upward, the coffee powders are compacted into a cake. After the liquid supply assembly completes the extraction and brewing operation of the coffee cake and dispenses the coffee beverage externally, residues may remain on the inner wall of the brewing cylinder 211 and the upper surface of the first piston component 331. At this time, the first piston component 331 moves vertically upward, pushing the residues on the inner wall of the brewing cylinder 211 and the upper surface of the first piston component 331 upward out of the brewing cylinder 211. The entire process of the first piston component 331 moving vertically upward at this stage constitutes the third stroke H3. The third stroke H3 is set to be greater than the first stroke H1, ensuring that the first piston component 331 can fully move upwardly to at least partially extend outside the brewing cylinder 211.

There are multiple schemes for the first driving mechanism 320 to achieve the aforementioned purpose.

In one embodiment, the first driving mechanism 320 includes a first driver. The first driver is arranged on the base 100 and has a telescopic output shaft capable of reciprocating movement in the vertical direction. The telescopic output shaft is connected to the first piston component 331. Specifically, the first driver is, for example, a linear cylinder. The linear cylinder can be entirely positioned below or beside the brewing container 322. When the linear cylinder is placed beside the brewing container 322, the first driving mechanism 320 may also include a transmission component. The transmission component can transmit the telescopic movement of the output shaft to the first piston component 331, thereby driving the vertical movement of the first piston component 331.

Besides, in another embodiment, the first driving mechanism 320 includes a driver 322, a drive rod 320, and a guide component 330. The driver 322 is mounted on the base 100 and has a rotatable output shaft arranged along a vertical axis. The drive rod 320 is rotatably mounted about a vertical axis and translatably mounted along the vertical direction on the base 100. The drive rod 320 is connected to the rotary output shaft so as to be driven by the rotary output shaft to rotate about the vertical axis. The drive rod 320 is also linked to the first piston component 331. The guide component 330 is fixed relative to the brewing container 322 and connected to the drive rod 320. At a junction of the guide component 330 and the drive rod 320, one of the guide component 330 and the drive rod 320 is provided with a guide groove 321, and a remaining one of the guide component 330 and the drive rod 320 has a guiding protrusion that slides and connects with the guide groove 321. The vertical movement stroke of the first piston component 331 includes a first stroke H1 in the brewing cylinder 211 for pressing the powder in conjunction with the compacting mechanism 330 to brew and extract, a second stroke H2 in the brewing cylinder 211 for evenly spreading the powder, and a third stroke H3 in the brewing cylinder 211 for pushing the spent coffee powders upwardly out of the brewing cylinder 211 after extraction.

Specifically, the drive device 322 is, for example, a motor, which can be positioned on an upper side, a lower side, or a lateral side of the brewing container 322. The rotary output shaft of the motor extends vertically, enabling it to rotate about its own axis when activated. The drive rod 320 also extends vertically, and is directly or indirectly connected to the rotary output shaft, allowing it to convert the rotation of the output shaft into a vertical movement along its own axis. The connection between the drive rod 320 and the first piston component 331 can also be direct or indirect. The guide component 330 is fixed relative to the brewing container 322, so that when the guide protrusion slides along the guide groove 321 and is guided, it drives the drive rod 320 to move relative to the brewing container 322.

In one embodiment, the guide groove 321 includes a third groove segment 321c extending along the vertical direction, so that when the guiding protrusion slides along the third groove segment 321c, the rotational motion of the drive rod 320 about the vertical axis is converted into a translational motion of the first piston component 331 along the vertical direction. The first stroke H1, the second stroke H2, and the third stroke H3 are all formed by the vertical sliding stroke of the guiding protrusion in the third groove segment 321c. The third groove segment 321c is arranged to extend vertically, enabling the conversion of the rotational motion of the drive rod 320 about the vertical axis into the vertical translational motion during the sliding of the guiding protrusion along the third groove segment 321c, ultimately achieving the purpose of driving the vertical translational motion of the first piston component 331.

In a specific embodiment, the third groove segment 321c can be configured to extend spirally along both the vertical direction and the circumferential direction of the drive rod 320, achieving the purpose of converting the rotational motion of the drive rod 320 into the up-and-down translational motion of the first piston component 331. Alternatively, in one embodiment, the first driving mechanism 320 further includes a driving gear 340 and a driven gear 350. The driving gear 340 is coaxially mounted on the rotary output shaft. The driven gear 350 is positioned adjacent to the driving gear 340 and meshes with the driving gear 340. The driven gear 350 is provided with internal threads, while the drive rod 320 is provided with external threads, and the internal threads and the external threads engage with each other. As a result, by adjusting the gear ratio between the driving gear 340 and the driven gear 350, rotational deceleration or acceleration from the rotary output shaft to the drive rod 320 can be correspondingly achieved. The arrangement of the internal threads and the external threads facilitates, under the drive of the first driver, the driving gear 340 and the driven gear 350, the conversion of the composite motion of the drive rod 320, which includes both rotation about the vertical axis and translation along the vertical direction, into a helical translation of the drive rod 320. In this case, the third groove segment 321c can be set to extend approximately parallel to the axial direction of the drive rod 320, making it easier to process and form.

Based on any of the aforementioned embodiments, referring to FIG. 5, the guide groove 321 further includes a second groove segment 321b extending along the circumferential direction of the drive rod 320, and a first groove segment 321a extending in the vertical direction. The second groove segment 321b has a first end and a second end which are oppositely arranged along the circumferential direction of the drive rod 320. The first end is connected to the third groove segment 321c, and the second end is connected to the first groove segment 321a, such that when the guiding protrusion slides to the first end, it drives the brewing container 322 to the brewing position 120, and when the guiding protrusion is at the second end, the brewing container 322 moves to the powder-receiving position 110. In another embodiment, the first travel H1, the second travel H2 and the third travel H3 are all formed by the vertical sliding travel of the guiding protrusion in the third groove segment 321c.

Specifically, the guide groove 321 further includes an entry groove segment 321e. It is understandable that, taking the guide groove 321 being disposed on the outer peripheral side wall of the drive rod 320 as an example, the drive rod 320 includes a threaded rod segment and a guide rod segment which are connected sequentially from top to bottom. The threaded rod segment is formed with external threads and engages in threaded connection with the internal threads of the driven gear 350. The guide groove 321 is located at the guide rod segment. An outer diameter of the guide rod segment is greater than that of the threaded rod segment, forming a step surface at a junction between the guide rod segment and the threaded rod segment. The entry groove segment 321e extends downwardly from the step surface to connect with the third groove segment 321c or the second groove segment 321b, allowing the guide protrusion to slide down into the entry groove segment 321e and directly position at the third groove segment 321c, or move to the third groove segment 321c via the second groove segment 321b.

The entry groove segment 321e is connected to the first end of the second groove segment 321b. When the guide protrusion enters from the entry groove segment 321e and slides to the first end of the second groove segment 321b, the brewing container 322 is in the brewing position 120. Furthermore, in the circumferential direction of the drive rod 320, the second groove segment 321b gradually tilts and extends toward one axial end of the drive rod 320, which helps to decelerate the rotational speed of the brewing container 322 when switching between the powder-receiving position 110 and the brewing position 120, making the rotation process of the brewing container 322 smoother.

When the guiding protrusion moves in the third groove segment 321c, its vertical reciprocating sliding action drives the first piston component 331 to move vertically in the brewing chamber, executing the aforementioned first stroke H1, second stroke H2, and third stroke H3, respectively.

Furthermore, in one embodiment, the guide groove 321 further includes a fourth groove segment 321d. The fourth groove segment 321d extends circumferentially along the drive rod 320, and connects respectively to the ends of the first groove segment 321a and the third groove segment 321c that are away from the second groove segment 321b. The first groove segment 321a, the second groove segment 321b, the third groove segment 321c and the fourth groove segment 321d are essentially enclosed to form an annular shape. Based on this, when the guiding protrusion slides from the third groove segment 321c along the fourth groove segment 321d and finally into the first groove segment 321a, the brewing container 322 resets from the brewing position 120 back to the powder-receiving position 110.

When the guide protrusion moves in the third groove segment 321c, the brewing container 322 is at the brewing position 120. By sliding the guide protrusion vertically back and forth in the third groove segment 321c, the first piston component 331 can be driven to move vertically in the brewing chamber 211. This adjusts the position of the first piston component 331 in the brewing chamber 211, enabling either a pressing stroke or pushing the coffee powders upward out of the brewing chamber 211.

Given the above, in a specific embodiment, the guide protrusion is fixedly arranged in the guide component 330, and the guide component 330 is relatively fixedly arranged with respect to the base 100. The driver 322 is used to drive the drive rod 320, causing the guide groove 321 of the drive rod 320 to slide along the guide protrusion. The guide protrusion moves from the first end of the second groove segment 321b along the third groove segment 321c to the fourth groove segment 321d until it reaches the junction of the fourth groove segment 321d and the first groove segment 321a. At this time, the driver 322 rotates the drive rod 320 in a first rotational direction. When moving from the junction of the fourth groove segment 321d and the first groove segment 321a to the second end of the second groove segment 321b, and further to the first end of 328b, the driver 322 rotates the drive rod 320 in a second rotational direction opposite to the first rotational direction. In order to prevent the driver 322 from reversing direction at the first end of the second groove segment 321b and the junction between the fourth groove segment 321d and the first groove segment 321a, causing the second groove segment 321b to reverse toward its second end or the guide protrusion to move backward toward the third groove segment 321c when at the junction, limit stops are provided at the second groove segment 321b and the junction between the fourth groove segment 321d and the first groove segment 321a. This ensures that even if the driver 322 reverses direction at these two positions, it will not retrace its original path.

The third groove segment 321c is provided with a brewing position point along its travel path. When the guide protrusion is at this brewing position, the first piston component 331 and the second piston component 332 are positioned in the brewing container 322 to carry out extraction. As the third groove segment 321c continues its upward movement and the guide protrusion reaches the junction between the third groove segment 328c and the fourth groove segment 321d, the first piston component 331 moves upwardly to push the extracted coffee powders out of the brewing container 322.

Additionally, in one embodiment, the driver 322 and the drive rod 320 are positioned beside the brewing container 322, which can reduce the spatial occupancy of the driver 322 and the drive rod 320 in the vertical direction of the brewing container 322. At this time, the first driving mechanism 320 further includes a piston rod 360 and a linkage component 370. The piston rod 360 is fixedly connected to the first piston component 331 and arranged side by side with the drive rod 320 at intervals. The linkage component 370 connects the drive rod 320 and the piston rod 360 in a coordinated manner. The linkage component 370 may be a connecting rod extending horizontally, fixedly connected to both the piston rod 360 and the drive rod 320, enabling the accurate transmission of the vertical movement of the drive rod 320 to the piston rod 360, thereby driving the piston rod 360 to move vertically and ultimately achieving the drive for the vertical movement of the first piston component 331.

Additionally, in one embodiment, the guide component 330 is configured in a cylindrical shape and is movably sleeved over an outer side of the drive rod 320. An annular installation groove is circumferentially provided on the outer peripheral side wall of the guide component 330. The brewing module applied to the beverage preparation device further includes at least two connecting components 380 and a stop member 390. The connecting component 380 includes a first ring portion 381, a second ring portion 382, and a support portion 383 connecting the first ring portion 381 and the second ring portion 382. The first ring portion 381 is fixedly sleeved over an outer side of the brewing container 322. The second ring portion 382 is fixedly sleeved in the annular installation groove. Each of the connecting components 380 is arranged at intervals along the vertical direction in the annular installation groove. The stop member 390 is configured in a cylindrical shape. The stop member 390 is fixedly sleeved in the annular installation groove. The stop member 390 is positioned between each adjacent the connecting components 380 to cooperate with the side walls of the annular installation groove in limiting the connecting components 380. The arrangement of at least two connecting components 380 can enhance the connection strength to the brewing container 322. The first ring portion 381 is adapted to secure the brewing container 322, while the second ring portion 382 is adapted to secure the guide component 330. The support portion 383 can separate the first ring portion 381 and the second ring portion 382, thereby isolating the brewing container 322 from the guide component 330 to prevent mutual interference. The stop member 390 can fill the gaps between the connecting components 380 and press each connecting component 380 against the side walls of the annular installation groove, aiding in the fixed positioning of the connecting components 380 on the guide component 330.

Besides, in one embodiment, the brewing container 322 is made of ceramic material. The ceramic material offers good stiffness and hardness, as well as enhanced wear resistance, which helps prolong the service life of the brewing container 322. Moreover, the ceramic material has excellent thermal insulation properties, reducing heat exchange between the coffee beverage in the brewing chamber 211 and the external environment during the extraction process, thereby preventing the coffee from cooling down and preserving its flavor. In this embodiment, users can input the desired number of cups for the beverage they wish to prepare via a control panel, a button, etc. After obtaining this desired cup count, the control system compares it with a preset cup number. If the desired cup count is not less than the preset number, the high-efficiency intelligent beverage device automatically initiates the multi-brew mode. If the desired cup count is less than the preset number, and the user has no specific preference for the brewing mode, the device automatically starts the single-brew mode, enhancing brewing efficiency and making the overall operation of the high-efficiency intelligent beverage device more intelligent.

The above description is only a preferred embodiment of the present invention and does not limit the patent scope of the present invention. Any equivalent structural modifications made under the inventive concept of the present invention, using the content of the specification and drawings, or direct/indirect application in other related technical fields, are included within the scope of patent protection for the present invention.

## Claims

1. A beverage preparation device, **characterized by** comprising:
a grinding device, configured to grind granular materials to form powder;
a brewing device, comprising at least one brewing container, the grinding device and the brewing container being independently arranged and having a powder-receiving state; and
a control device, configured to control the grinding device to pre-start grinding to form a powder amount not less than a required brewing weight before determining that the brewing container and the grinding device are in the powder-receiving state; and to control the grinding device to deliver the powder into the brewing container when determining that the brewing container and the grinding device are in the powder-receiving state.

2. The beverage preparation device according to claim 1, wherein the grinding device comprises a grinding portion and a discharge portion; the grinding portion is configured to grind the granular materials to form the powder; and the discharge portion is configured to discharge the powder outward;
the discharge portion and the brewing container are arranged such that at least one of the discharge portion and the brewing container is movable relative to a remaining one of the discharge portion and the brewing container.

3. The beverage preparation device according to claim 2, wherein the powder-receiving state is defined as a positional state when the brewing container and the discharge portion are close to each other.

4. The beverage preparation device according to claim 2, further comprising a first driving mechanism; wherein the control device is electrically connected to the first driving mechanism, so as to control the grinding portion to pre-form the powder amount not less than the required brewing weight before the first driving mechanism drives the brewing container and the discharge portion to the powder-receiving state; and to control the discharge portion to deliver the powder into the brewing container when the brewing container and the discharge portion are in the powder-receiving state.

5. The beverage preparation device according to claim 2, wherein the discharge portion is relatively fixed, and the brewing container is movably arranged in directions approaching and moving away from the discharge portion.

6. The beverage preparation device according to any one of claims 2 to 5, wherein the grinding device further comprises:
a grinding container, forming a grinding chamber;
a grinding mechanism, configured to grind the granular materials entering the grinding chamber to form the powder; and
a transfer container, forming a transfer chamber, the transfer chamber being in communication with the grinding chamber to store the powder discharged outward from the grinding chamber;
wherein the grinding container and the grinding mechanism together constitute the grinding portion, and the transfer container constitutes the discharge portion.

7. The beverage preparation device according to claim 6, wherein the transfer container is provided with a transfer outlet;
an opening-closing component is movably arranged at the transfer outlet; the opening-closing component is configured to movably open and close the transfer outlet; wherein when the grinding container drops the powder into the transfer container, the control device controls the opening-closing component to close the transfer outlet; and when the transfer container transfers the powder to the brewing container, the control device controls the opening-closing component to open the transfer outlet.

8. The beverage preparation device according to claim 6, wherein the grinding container and the transfer container are integrally formed.

9. The beverage preparation device according to claim 6, wherein the grinding container and the transfer container are independently and separately arranged.

10. The beverage preparation device according to any one of claims 2 to 5, wherein at least two brewing containers are provided, the at least two brewing containers are both movable relative to the discharge portion, and positions of the at least two brewing containers when in the powder-receiving state are the same;
the at least two brewing containers are configured to move to the powder-receiving state alternately and sequentially.

11. The beverage preparation device according to claim 10, wherein the control device controls the grinding portion to remain activated, so that the grinding portion continuously provides the powder to the discharge portion in the powder-receiving state.

12. The beverage preparation device according to claim 10, further comprising a grinding container and/or a transfer container, and a grinding mechanism;
wherein the grinding container forms a grinding chamber and a grinding outlet;
wherein the grinding mechanism is disposed in the grinding chamber and configured to grind the granular materials entering the grinding chamber to form the powder;
wherein the transfer container defines a transfer chamber, and the transfer chamber is in communication with the grinding chamber to store the powder discharged outward from the grinding chamber; and
wherein at least a portion of the grinding container is provided with the grinding outlet; and/or the transfer container constitutes the discharge portion, and the grinding mechanism constitutes the grinding portion.

13. A control method for the beverage preparation device according to any one of claims 1 to 12, **characterized by** comprising:
controlling the grinding device to start operating upon receiving a work instruction; and
controlling the brewing container and the grinding device to switch to the powder-receiving state to receive the powder, upon determining that the powder ground by the grinding device is not less than a preset required weight value.

14. A control method for the beverage preparation device according to claim 6, **characterized by** comprising:
controlling the grinding mechanism to start operating and driving the opening-closing component to close the transfer outlet upon receiving a work instruction; and
controlling the brewing container and/or the transfer container to move to the powder-receiving state, and controlling the opening-closing component to open the transfer outlet to receive the powder, upon determining that the powder stored in the transfer container is not less than a preset required weight value or that the grinding mechanism has operated for a preset time.

15. A control method for the beverage preparation device according to claim 10, **characterized by** comprising:
controlling the grinding device to start operating upon receiving a work instruction; and
controlling each brewing container to alternately switch between the powder-receiving state and a brewing state, so that when one brewing container moves to the brewing state, another brewing container moves to the powder-receiving state.

16. A control method for a beverage preparation device, wherein the beverage preparation device comprises a grinding device and a brewing device, the control method for the beverage preparation device comprising:
powering on and starting the beverage preparation device;
controlling the grinding device to start grinding powder when the brewing device and the grinding device are located at initial positions;
after transferring the ground powder from the grinding device to the brewing device, controlling the brewing device to extract a material;
while the brewing device is extracting the material, controlling the grinding device to continue grinding the powder needed for a next extraction, and completing grinding and storing before the brewing device completes extraction;
after the brewing device completes the extraction, pouring out residue from the brewing device and then transferring the ground powder into the brewing device to perform a next extraction work.

17. The control method for the beverage preparation device according to claim 16, wherein an extraction time for each brew by the brewing device is T1, and a time required for the grinding device to grind the powder for a single brew is T2, wherein T1 is greater than or equal to 2 times T2.

18. The control method for the beverage preparation device according to claim 16, wherein the beverage preparation device further comprises a transfer container disposed between the grinding device and the brewing device; and the ground powder from the grinding device is first stored in the transfer container and then transferred into the brewing device.

19. The control method for the beverage preparation device according to claim 18, wherein the transfer container is arranged on the grinding device or independently of the grinding device, and the transfer container is configured to have a relative displacement with respect to the brewing device.

20. The control method for the beverage preparation device according to claim 18, wherein two brewing devices are provided, and before the brewing devices execute an extraction work, it is ensured that the transfer container has the ground powder delivered into the brewing devices.

21. The control method for the beverage preparation device according to claim 20, wherein a system of the beverage preparation device is preset with a single-brew mode and a multi-brew mode; wherein a user is able to independently choose to start the single-brew mode or the multi-brew mode.

22. The control method for the beverage preparation device according to claim 21, after a step of powering on and starting the beverage preparation device, further comprising:
controlling the beverage preparation device to automatically start the multi-brew mode upon determining that the number of beverage cups input by the user reaches a preset number.

23. A beverage preparation device, **characterized by** comprising:
a base, provided with a powder-receiving position and a brewing position which are spaced apart from each other; and
a brewing device, arranged on the base, the brewing device comprising a brewing container and a first piston component disposed in the brewing container; and the first piston component being configured to move up and down in the brewing container;
wherein the first piston component is non-separably arranged to move up and down in the brewing container, and remains in the brewing device when the brewing container reciprocates between the powder-receiving position and the brewing position.

24. The beverage preparation device according to claim 23, wherein the brewing container defines a material-receiving channel extending therethrough in a top-bottom direction, the first piston component is installed in the material-receiving channel from bottom to top, and an upper surface of the first piston component is configured to receive the powder in the material-receiving channel.

25. The beverage preparation device according to claim 23, further comprising a first driving mechanism; wherein the first driving mechanism comprises a drive rod, a piston rod connected to the first piston component, and a linkage component connecting the drive rod and the piston rod; one end of the piston rod is connected to the first piston component, and another end of the piston rod extends downwardly out of the brewing container and is fixedly connected to the linkage component.

26. The beverage preparation device according to claim 25, wherein axes of the drive rod and the piston rod are vertically parallel to each other; and an up and down movement of the drive rod drives the piston rod to further drive the first piston component to move up and down in the brewing container.

27. The beverage preparation device according to claim 25, wherein the brewing container and the first piston component rotate around an axis of the drive rod; when rotating from the brewing position to the powder-receiving position, the first piston component is located at an upper end in the brewing container; and when rotating from the powder-receiving position to the brewing position, the first piston component is located at a lower end in the brewing container.

28. The beverage preparation device according to claim 23, wherein the brewing device further comprises a second piston component; the second piston component is movably installed on the base in an up-down movable manner; and the second piston component is located above the brewing container and cooperates with the first piston component by moving close to each other when the brewing container is at the brewing position.

29. The beverage preparation device according to claim 28, wherein the first piston component moves vertically in the brewing container; and when the second piston component moves upwardly away from the brewing container, the first piston component continues to move upwardly to push a compacted powder cake upwardly out of the brewing container.

30. The beverage preparation device according to claim 25, wherein the first driving mechanism further comprises a guide component, and the guide component is sleeved around a periphery of the drive rod to constrain an up-down movement and a horizontal movement of the drive rod.

31. The beverage preparation device according to claim 28, wherein when the brewing container is at the brewing position, axes of the first piston component and the second piston component overlap each other.

32. The beverage preparation device according to claim 28, wherein the first piston component is configured for inputting liquid, the second piston component is configured for outputting liquid, and the liquid flows from the first piston component toward the second piston component.

33. A beverage preparation device, **characterized by** comprising:
a base, provided with a powder-receiving position and a brewing position which are spaced apart from each other;
a brewing device, arranged below the base, the brewing device comprising at least one brewing container reciprocally movable between the powder-receiving position and the brewing position, and at least one first piston component movable up and down in the brewing container; the first piston component entering the brewing container from one end and closing a lower end of the brewing container; and
a drive component, comprising a first driving mechanism, the first driving mechanism being configured to drive the first piston component to move up and down in the brewing container;
wherein a reciprocal movement of the brewing device between the powder-receiving position and the brewing position is driven by a driving force of the first driving mechanism driving the first piston component.

34. The beverage preparation device according to claim 33, wherein the brewing container is provided with a vertically penetrating material-receiving channel, and a second piston component; the second piston component is configured to move up and down in the material-receiving channel when the brewing container is at the brewing position; and the second piston component is configured to enter and exit the brewing container from an upper end of the brewing container.

35. The beverage preparation device according to claim 34, wherein the brewing device comprises a residue scraper arranged below the base, and the residue scraper is arranged on a movement path of the brewing container between the powder-receiving position and the brewing position.

36. The beverage preparation device according to claim 35, wherein when the brewing container is at the brewing position, the second piston component moves upwardly away from the brewing container, and the first piston component continues to move upwardly to push a powder cake in the material-receiving channel upwardly out of the brewing container.

37. The beverage preparation device according to claim 36, wherein after the first piston component pushes residue upwardly, the brewing container together with the first piston component moves toward the powder-receiving position, and when passing by the residue scraper again, the residue scraper scrapes off the residue.

38. A high-efficiency driving mechanism, **characterized by** comprising:
a drive rod, provided with external threads and a guide groove;
a driven gear, sleeved on the external threads of the drive rod and driving the drive rod to rotate;
a driver, configured to drive the driven gear; and
a guide component, sleeved around a periphery of the drive rod, the guide component comprising a guide protrusion; the guide protrusion extending into the guide groove of the drive rod to constrain a movement path of the drive rod;
wherein the guide groove comprises a first groove segment and a third groove segment which are vertically parallel and spaced apart from each other; and when the guide protrusion is located in the first groove segment or the third groove segment, the guide protrusion constrains the drive rod to move up and down.

39. The high-efficiency driving mechanism according to claim 38, wherein the guide groove comprises a transverse groove segment; the transverse groove segment comprises a second groove segment connecting an upper end of the first groove segment and an upper end of the third groove segment; the second groove segment has a first end and a second end which are oppositely arranged in a circumferential direction of the drive rod; the first end is connected to the third groove segment, the second end is connected to the first groove segment, and the guide protrusion passes from the upper end of the first groove segment through the second groove segment into the third groove segment.

40. The high-efficiency driving mechanism according to claim 39, wherein the second groove segment extends obliquely upward along the circumferential direction of the drive rod.

41. The high-efficiency driving mechanism according to claim 38, wherein a top end of the third groove segment is higher than a top end of the first groove segment.

42. The high-efficiency driving mechanism according to claim 38, wherein the transverse groove segment comprises a fourth groove segment connecting a lower end of the first groove segment and a lower end of the third groove segment, and the guide protrusion passes from the lower end of the third groove segment through the fourth groove segment into the first groove segment.

43. The high-efficiency driving mechanism according to claim 42, wherein the fourth groove segment is perpendicular to an extending direction of an axis of the drive rod.

44. The high-efficiency driving mechanism according to claim 38, further comprising a driving gear arranged on the driver, and the driven gear is arranged beside the driving gear and driven by the driving gear.

45. The high-efficiency driving mechanism according to claim 38, further comprising a piston rod arranged vertically parallel to the drive rod, and a linkage component horizontally connecting the drive rod and the piston rod.

46. The high-efficiency driving mechanism according to claim 39, wherein the guide groove further comprises an entry groove segment, the entry groove segment is connected to and in communication with the first end of the second groove segment, and the guide protrusion enters from the entry groove segment and slides to the first end of the second groove segment.

47. A beverage preparation device, **characterized by** comprising:
a base, provided with a powder-receiving position and a brewing position which are spaced apart from each other;
a brewing device, arranged on the base, the brewing device comprising a brewing container and a first piston component arranged in the brewing container; the first piston component being configured to move up and down in the brewing container; and
a driving mechanism, comprising a piston rod connected to the first piston component, a drive rod arranged on the base, a linkage component connecting the piston rod and the drive rod, and a guide component sleeved around a periphery of the drive rod; the piston rod and the drive rod being vertically parallel;
wherein the drive rod defines a guide groove; the guide component is provided with a guide protrusion extending inwardly into the guide groove; the guide groove comprises a first groove segment and a third groove segment which are vertically parallel; when the guide protrusion slides in the first groove segment and the third groove segment, the guide protrusion causes the piston rod to move up and down, further driving the first piston component to move up and down in the brewing container between the powder-receiving position and the brewing position.

48. The beverage preparation device according to claim 47, wherein the guide groove comprises a second groove segment connecting an upper end of the first groove segment and an upper end of the third groove segment, and a fourth groove segment connecting a lower end of the first groove segment and a lower end of the third groove segment; and the first groove segment, the second groove segment, the third groove segment and the fourth groove segment together form an annular shape.

49. The beverage preparation device according to claim 47, wherein the guide groove comprises a fourth groove segment perpendicularly connecting a lower end of the first groove segment and a lower end of the third groove segment, and a second groove segment obliquely connecting an upper end of the first groove segment and an upper end of the third groove segment; and a top end of the third groove segment is higher than a top end of the first groove segment.

50. The beverage preparation device according to claim 49, wherein the brewing container is rotatably arranged on the guide component, and the brewing container is rotatable around the guide component driven by the first piston component.

51. A beverage preparation device, **characterized by** comprising:
a brewing device, comprising a brewing container and a first piston component disposed in the brewing container, the first piston component being configured to move up and down in the brewing container; and
a driving mechanism, comprising a drive rod configured to drive the first piston component to move in the brewing container, and a guide component sleeved around a periphery of the drive rod;
wherein the drive rod defines a guide groove; the guide component is provided with a guide protrusion extending inwardly into the guide groove; the guide groove comprises at least two vertical groove segments parallel to and spaced apart from each other along an axis of the drive rod, and at least one transverse groove segment connected between the at least two vertical groove segments.

52. The beverage preparation device according to claim 51, wherein the vertical groove segments comprise a first groove segment and a third groove segment which are parallel to each other, and a top end of the third groove segment extends upwardly beyond a top end of the first groove segment.

53. The beverage preparation device according to claim 52, wherein the transverse groove segment comprises a second groove segment connected between the top end of the first groove segment and the top end of the third groove segment; and the second groove segment is inclined.

54. The beverage preparation device according to claim 53, wherein the transverse groove segment comprises a fourth groove segment connected between a lower end of the first groove segment and a lower end of the third groove segment; and the fourth groove segment is perpendicular to a vertical axis of the drive rod.

55. The beverage preparation device according to claim 54, wherein the first groove segment, the second groove segment, the third groove segment, and the fourth groove segment are sequentially connected to form an annular shape.

56. The beverage preparation device according to claim 51, further comprising a brewing position and a powder-receiving position which are spaced apart from each other; wherein the first piston component is arranged in the brewing container and driven by the drive rod, and further by a movement of the guide protrusion in the transverse groove segment to drive the brewing container to move between the powder-receiving position and the brewing position.

57. The beverage preparation device according to claim 52, wherein the top end of the third groove segment is higher than the top end of the first groove segment; and when the guide protrusion moves from the first groove segment toward the third groove segment along the second groove segment, the drive rod produces a horizontal movement and a vertical movement simultaneously.

58. A high-efficiency driving mechanism, **characterized by** comprising:
a drive rod, provided with external threads and a guide groove recessed inwardly;
a driven gear, provided with internal threads matching the external threads, to drive the drive rod to rotate;
a guide component, fixedly covering a periphery of the drive rod, the guide component comprising a guide protrusion extending into the guide groove; the guide protrusion guiding a movement path of the drive rod in the guide groove; and
a driver, configured to drive the driven gear;
wherein the guide groove comprises a first groove segment and a third groove segment which are arranged along a vertical direction, and at least one transverse groove segment horizontally connecting the first groove segment and the third groove segment; the driver controls the driven gear to rotate forwardly and reverse to drive the drive rod to move horizontally between the first groove segment and the third groove segment when the guide protrusion is located in the transverse groove segment, or to achieve a vertical displacement when the guide protrusion is located in the first groove segment or the third groove segment.

59. The high-efficiency driving mechanism according to claim 58, wherein the transverse groove segment comprises a second groove segment horizontally connecting a top end of the first groove segment and a top end of the third groove segment, and/or a fourth groove segment horizontally connecting a lower end of the first groove segment and a lower end of the third groove segment.

60. The high-efficiency driving mechanism according to claim 59, wherein a connection between the second groove segment and the third groove segment, and a connection between the fourth groove segment and the first groove segment are provided with limit portions.

61. The high-efficiency driving mechanism according to claim 59, wherein the guide protrusion moves sequentially and cyclically along the first groove segment, the fourth groove segment, the third groove segment, and the second groove segment in the guide groove.

62. The high-efficiency driving mechanism according to claim 59, wherein the second groove segment extends obliquely upward from the first groove segment toward the top end of the third groove segment; when the guide protrusion is in the second groove segment and moves from the first groove segment toward the third groove segment, the drive rod moves horizontally while displacing downwardly for a distance.

63. The high-efficiency driving mechanism according to claim 59, wherein when the guide protrusion is at a connection between the second groove segment and the third groove segment, and at a connection between the first groove segment and the fourth groove segment, the driver drives the driven gear to reverse direction.

64. The high-efficiency driving mechanism according to claim 58, wherein the first groove segment and the third groove segment are parallel in the vertical direction, and the guide protrusion is configured to drive the drive rod to move up and down along the vertical direction by reversing the driven gear when in the first groove segment or in the third groove segment.

65. The high-efficiency driving mechanism according to claim 59, wherein a rotation direction of the driven gear when the guide protrusion moves in the first groove segment and the second groove segment is opposite to a rotation direction when the guide protrusion moves in the third groove segment and the fourth groove segment.

66. The high-efficiency driving mechanism according to claim 59, wherein the guide groove further comprises an entry groove segment, and the entry groove segment is in communication with a connection of the second groove segment and the third groove segment.

67. A beverage preparation device according to any one of claims 58 to 66, **characterized by** comprising:
a base, defining a powder-receiving position and a brewing position which are spaced apart from each other;
a brewing device, comprising a brewing container and a first piston component arranged in the brewing container; the drive rod being connected to the first piston component; the brewing container being rotatably fixed on the guide component; when the guide protrusion moves up and down in the first groove segment and the third groove segment, the first piston component also moves up and down in the brewing container; when the guide protrusion moves in the second groove segment and the fourth groove segment, the first piston component drives the brewing container to rotate horizontally, causing the brewing container to cycle between the powder-receiving position and the brewing position.

68. The beverage preparation device according to claim 67, wherein when the guide protrusion moves from the first groove segment toward the third groove segment in the second groove segment, the brewing container moves from the powder-receiving position to the brewing position.

69. The beverage preparation device according to claim 67, wherein when the guide protrusion moves from the third groove segment toward the first groove segment in the fourth groove segment, the brewing container moves from the brewing position to the powder-receiving position.

70. The beverage preparation device according to claim 67, further comprising a second piston component arranged on the base; wherein when the brewing container is at the brewing position, the second piston component moves downwardly into the brewing container.

71. The beverage preparation device according to claim 68, wherein when the brewing container moves from the powder-receiving position to the brewing position, the first piston component is located at a lower end position in the brewing container.

72. The beverage preparation device according to claim 69, wherein when the brewing container moves from the brewing position to the powder-receiving position, the first piston component is located at an upper end position in the brewing container.

73. The beverage preparation device according to claim 70, wherein a brewing position point is provided on a path in the third groove segment; when the guide protrusion moves to the brewing position point, the first piston component and the second piston component cooperate with each other.

74. The beverage preparation device according to claim 73, wherein after the second piston component moves upwardly away from the brewing container, the guide protrusion continues to move toward the fourth groove segment in the third groove segment, causing the first piston component to move close to an upper end of the brewing container.

75. A control method for the beverage preparation device according to any one of claims 58 to 74, **characterized by** comprising:
rotating the driven gear in a first direction, causing the guide protrusion to rotate toward the first groove segment in a fourth groove segment, and causing the brewing container to move to a powder-receiving position driven by a first piston component;
reversing the driven gear to rotate in a direction opposite to the first direction; under an action of the limit portions, the guide protrusion moving upwardly along the first groove segment, and at this time the first piston component moving to a bottom of a brewing container in the brewing container, and powder being received at this time;
continuing to rotate the driven gear to drive the guide protrusion to move toward the third groove segment in a second groove segment, and at this time the first piston component drives the brewing container to rotate and move to a brewing position;
again reversing the driven gear to rotate in the first direction; under the action of the limit portions, the guide protrusion moving downwardly along the third groove segment to a brewing position point in the third groove segment; at this time the first piston component moving upwardly in the brewing container; and a second piston component moving downwardly into the brewing container to perform extraction; and
after the extraction is completed, the second piston component moving upwardly away from the brewing container, and the guide protrusion continuing to move toward a lower end of the third groove segment, pushing residue in the brewing container upwardly out of the brewing container.

76. The control method for the beverage preparation device according to claim 75, wherein a fixed residue scraper is arranged on the beverage preparation device; after the extraction is completed, entering a next cycle; and when the brewing container rotates to the powder-receiving position, the residue pushed out by the first piston component is removed by the residue scraper.

77. The control method for the beverage preparation device according to claim 75, wherein when the guide protrusion moves to the brewing position point of the third groove segment, the driven gear quickly switches an operating direction in a cycle, to drive the first piston component to move up and down in the brewing container.

78. A self-cleaning brewing system, **characterized by** comprising:
a brewing container, forming a brewing chamber, and one end of the brewing chamber being open in a first direction;
a first cleaning component, arranged on one side of the brewing chamber, at least one of the first cleaning component and the brewing container being movable relative to a remaining one of the first cleaning component and the brewing container, to remove contaminants at an open end; and
a second cleaning component, arranged on one side of the first cleaning component, at least one of the second cleaning component and the first cleaning component being movable relative to a remaining one of the second cleaning component and the first cleaning component, driving the second cleaning component to slidingly abut against at least one side surface of the first cleaning component to remove the contaminants on a side surface of the first cleaning component.

79. The self-cleaning brewing system according to claim 78, wherein a relative movement direction of the first cleaning component and the second cleaning component is the first direction, a relative movement direction of the first cleaning component and the brewing container is a second direction, and the first direction and the second direction are not parallel to each other.

80. The self-cleaning brewing system according to claim 79, wherein the brewing container has a powder-receiving position and a brewing position which are spaced apart from each other in the second direction; the first cleaning component is located on one side of the brewing position in the second direction;
the self-cleaning brewing system further comprises a lower driving mechanism and an upper driving mechanism; under a drive of the lower driving mechanism, the brewing container is movably arranged between the powder-receiving position and the brewing position to remove the contaminants at the open end; under a drive of the upper driving mechanism, the second cleaning component is movably arranged along the first direction to drive the second cleaning component to slidingly abut against at least one side surface of the first cleaning component.

81. The self-cleaning brewing system according to claim 80, further comprising a first piston component; wherein the first piston component is arranged at the brewing position and is movably arranged along the first direction; the first piston component extends into the brewing chamber from the open end during a movement thereof to compact powder in the brewing chamber;
the second cleaning component is fixedly arranged on a side of the first piston component close to the first cleaning component, and the upper driving mechanism is drivingly connected to the first piston component.

82. The self-cleaning brewing system according to claim 81, wherein the second cleaning component is arranged around a periphery of the first piston component.

83. The self-cleaning brewing system according to claim 78, wherein a softness of the second cleaning component is not greater than a softness of the first cleaning component.

84. The self-cleaning brewing system according to claim 83, wherein the second cleaning component is configured as a brush body.

85. The self-cleaning brewing system according to claim 78, wherein during a relative movement of the second cleaning component and the first cleaning component, the second cleaning component is in interference contact with the first cleaning component.

86. The self-cleaning brewing system according to claim 78, wherein the first cleaning component is arranged adjacent to a brewing position, the first cleaning component is adapted to a shape of the brewing container and extends along a circumferential direction of the brewing container;
the second cleaning component is adapted to extend along a shape of an adjacent side surface of the first cleaning component.

87. The self-cleaning brewing system according to claim 78, wherein the brewing container comprises:
a cylinder body, provided with a channel penetrating in the first direction;
a second piston component, reciprocally movably arranged in the channel along the first direction; the second piston component being sealingly connected to an inner wall of the channel; the second piston component being provided with a plurality of water inlet holes for introducing external liquid into the channel; and
a third driving mechanism, drivingly connected to the second piston component;
wherein an end surface of the cylinder body close to the first cleaning component is a first end surface; the first end surface defines a to-be-cleaned area for cleaning by the first cleaning component, and/or when the second piston component moves to extend out of the first end surface, the end surface of the second piston component defines a to-be-cleaned area for cleaning by the first cleaning component.

88. A beverage preparation device, **characterized by** comprising the self-cleaning brewing system according to any one of claims 78 to 87.

89. A brewing device, **characterized by** comprising:
a brewing container, forming a to-be-cleaned area;
a cleaning component, comprising a first cleaning unit and a second cleaning unit; at least one of the cleaning component and the brewing container being movable relative to a remaining one of the cleaning component and the brewing container; the cleaning component slidingly abutting against the to-be-cleaned area to remove contaminants on the to-be-cleaned area; and
a driving mechanism, drivingly connected to the cleaning component and/or the brewing container;
wherein during a relative movement stroke of the cleaning component and the brewing container, the cleaning component has a proximal end close to the to-be-cleaned area and a distal end away from the to-be-cleaned area; the proximal end of the second cleaning unit is arranged closer to the to-be-cleaned area than the proximal end of the first cleaning unit, and a softness of the second cleaning unit is greater than a softness of the first cleaning unit.

90. The brewing device according to claim 89, wherein the driving mechanism comprises a first driving mechanism; under a drive of the first driving mechanism, the brewing container has a powder-receiving position and a brewing position located on a movement stroke thereof;
wherein the cleaning component is fixedly arranged between the powder-receiving position and the brewing position; and/or, the cleaning component is arranged closer to the brewing position than the powder-receiving position.

91. The brewing device according to claim 89, wherein the first cleaning unit and the second cleaning unit are arranged sequentially along a direction from far to near.

92. The brewing device according to claim 89, wherein the driving mechanism comprises a first driving mechanism; under a drive of the first driving mechanism, the brewing container has a powder-receiving position and a brewing position located on a movement stroke thereof;
the first cleaning unit and the second cleaning unit are arranged sequentially along a direction from the brewing position to the powder-receiving position.

93. The brewing device according to claim 89, wherein the first cleaning unit is configured in a plate shape; the first cleaning unit is made of elastic material; during the relative movement stroke of the cleaning component and the brewing container, at least a proximal end surface of the first cleaning unit slidingly abuts against the to-be-cleaned area.

94. The brewing device according to claim 93, wherein the softness of the first cleaning unit increases along a direction from far to near; and/or
a thickness of at least a proximal segment of the first cleaning unit decreases along the direction from far to near.

95. The brewing device according to claim 89, wherein the second cleaning unit is configured as a brush body; at least a bristle portion of the second cleaning unit is made of flexible material; and during the relative movement stroke, bristles of the second cleaning unit is in interference contact with the to-be-cleaned area.

96. The brewing device according to any one of claims 89 to 95, wherein the brewing container comprises:
a cylinder body, provided with a channel penetrating in directions toward and away from the cleaning component;
a first piston component, reciprocally movably arranged in the channel along an extending direction of the channel; the first piston component being sealingly connected to an inner wall of the channel; the first piston component being provided with a plurality of water inlet holes for introducing external liquid into the channel; and
a second driving mechanism, drivingly connected to the first piston component;
wherein an end surface of the cylinder body close to the cleaning component is a first end surface; the first end surface defines the to-be-cleaned area, and/or when the first piston component moves to extend out of the first end surface, the end surface of the first piston component defines the to-be-cleaned area.

97. The brewing device according to claim 89, wherein a plane where the to-be-cleaned area is located is a reference plane;
the cleaning component has a projected area on the reference plane; along another direction perpendicular to the relative movement direction between the cleaning component and the brewing container, the projected area at least covers the to-be-cleaned area.

98. A beverage preparation device, **characterized by** comprising the brewing device according to any one of claims 89 to 97.

99. A brewing device, **characterized by** comprising:
a base;
a brewing container, movably arranged below the base, the brewing container comprising a cylinder body provided with a to-be-cleaned area and a first piston component arranged in the cylinder body to move up and down to close one end of the cylinder body;
a cleaning component, fixedly arranged below the base, and located between a location below the base and a location above the brewing container;
wherein the movement of the brewing container defines a powder-receiving position and a brewing position which are spaced apart from each other; the first piston component moves close to the to-be-cleaned area of the cylinder body and drives the brewing container to further move toward the cleaning component; when the brewing container moves between the powder-receiving position and the brewing position, the cleaning component at least partially contacts a to-be-cleaned surface of the brewing container and a surface of the first piston component.

100. The brewing device according to claim 99, wherein a space for the cleaning component to pass through is provided between the brewing container and the base.

101. The brewing device according to claim 99, wherein the first piston component is disposed at a lower end of the cylinder body when moving from the powder-receiving position to the brewing position; and the first piston component is disposed at an upper end of the cylinder body when moving from the brewing position to the powder-receiving position.

102. The brewing device according to claim 99, wherein the brewing device comprises a driving mechanism, and the brewing container is driven by the driving mechanism to pass by the cleaning component.

103. The brewing device according to claim 99, wherein the cleaning component is closer to the brewing position than to the powder-receiving position.

104. The brewing device according to claim 99, wherein the first piston component is arranged in the cylinder body from bottom to top, and moves up and down along the cylinder body.

105. The brewing device according to claim 104, further comprising a driving mechanism, wherein the driving mechanism is configured to drive the first piston component to move up and down and further drive the brewing container to move.

106. The brewing device according to claim 99, wherein the brewing container of a cylindrical configuration, and the cleaning component is configured to extend along a circumference of the brewing container in an arc shape, and an arc length of the arc shape is not less than half the circumference of the brewing container.

107. The brewing device according to claim 99, wherein the cleaning component is configured as an extending linear shape, and a length of the linear shape is not less than a maximum width of a cross-section of the brewing container.

108. The brewing device according to claim 99, wherein the cleaning component comprises a first cleaning unit and a second cleaning unit; a softness of the second cleaning unit is greater than a softness of the first cleaning unit; and the second cleaning unit contacts the to-be-cleaned surface of the brewing container and the surface of the first piston component.

109. A brewing device, **characterized by** comprising:
a base;
a brewing container, movably arranged below the base, the brewing container forming a to-be-cleaned area; and
a cleaning component, fixedly arranged below the base, and located between a location below the base and a location above the brewing container;
wherein the brewing container moves toward the cleaning component, causing the cleaning component to at least partially abut against a to-be-cleaned surface of the brewing container.

110. The brewing device according to claim 109, wherein a movement path of the brewing container defines a powder-receiving position and a brewing position which are spaced apart from each other; and the cleaning component is located between the powder-receiving position and the brewing position.

111. The brewing device according to claim 109, wherein the brewing container comprises a cylinder body and a first piston component; one end surface of the cylinder body is a first end surface; the first piston component is configured to extend upwardly to the first end surface; and the first piston component and the first end surface together define the to-be-cleaned surface.

112. The brewing device according to claim 111, wherein the first piston component is arranged in the cylinder body and moves up and down along the cylinder body; when the brewing container moves from the brewing position to the powder-receiving position, the first piston component is located adjacent to the first end surface of the cylinder body.

113. The brewing device according to claim 111, wherein the brewing device comprises a driving mechanism, and the driving mechanism is configured to drive the first piston component to move up and down and further drive the brewing container to move.

114. The brewing device according to claim 109, wherein the brewing container is of a cylindrical configuration; the cleaning component is configured to extend along a circumference of the brewing container in an arc shape, and an arc length of the arc shape is not less than half the circumference of the brewing container.

115. The brewing device according to claim 109, wherein the brewing container is configured to perform a linear translation, or a curved translation, or a rotational movement around an axis between a powder-receiving position and a brewing position.

116. A brewing device, **characterized by** comprising:
a base;
a brewing container, movably arranged below the base, the brewing container forming a to-be-cleaned area; and
a cleaning component, fixedly arranged below the base, and located between a location below the base and a location above the brewing container;
wherein the brewing container moves toward the cleaning component, causing the cleaning component to at least partially overlap with a to-be-cleaned surface of the brewing container in a vertical direction.

117. The brewing device according to claim 116, wherein the brewing container is of a cylindrical configuration, and the cleaning component is configured to extend along a circumference of the brewing container in an arc shape, and an arc length of the arc shape is not less than half the circumference of the brewing container.

118. The brewing device according to claim 115, wherein the cleaning component is configured as an extending linear shape, and a length of the linear shape is not less than a maximum width of a cross-section of the brewing container.

119. The brewing device according to claim 115, wherein the brewing container and the cleaning component are arranged independently of each other.

120. A brewing device, **characterized by** comprising:
a base;
a brewing container, arranged below the base, the brewing container comprising a cylinder body and a first piston component movably arranged up and down in the cylinder body; one end of the cylinder body and a surface of the first piston component together forming a to-be-cleaned area;
a second piston component, the second piston component being configured to extend into the brewing container or move away from the brewing container toward the base; and
a cleaning component, movably arranged below the base, and located between a location below the base and a location above the brewing container;
wherein the cleaning component is movable toward the brewing container and scrape the to-be-cleaned area and a surface of the second piston component simultaneously.

121. The brewing device according to claim 120, wherein the second piston component is located above the brewing container in an axial direction.

122. The brewing device according to claim 120, wherein a space for the cleaning component to pass through is formed between the second piston component and the brewing container.

123. The brewing device according to claim 120, wherein the cleaning component comprises a first cleaning unit, and a second cleaning unit and a third cleaning unit which are located at lower and upper ends of the first cleaning unit, respectively.

124. The brewing device according to claim 123, wherein the third cleaning unit scrapes the surface of the second piston component, and the second cleaning unit scrapes the to-be-cleaned surface.

125. The brewing device according to claim 123, wherein a softness of the second cleaning unit is greater than a softness of the first cleaning unit, and a softness of the third cleaning unit is greater than the softness of the first cleaning unit.

126. The brewing device according to claim 124, wherein the surface of the second piston component is flush with a lower surface of the base.

127. The brewing device according to claim 120, wherein the cleaning component has a projected area on the to-be-cleaned area, and the projected area at least covers the to-be-cleaned area.

128. The brewing device according to claim 120, wherein the brewing container has a powder-receiving position and a brewing position; and the cleaning component scrapes the to-be-cleaned surface of the brewing container before the brewing container moves from the brewing position to the powder-receiving position.

129. The brewing device according to claim 128, wherein the second piston component and the first piston component press together inside the brewing container when the brewing container is at the brewing position.

130. A brewing module applied to a beverage preparation device, **characterized by** comprising:
a brewing device, defining an inlet and a brewing chamber for receiving and brewing powder; the powder entering the brewing chamber via the inlet; wherein the brewing device is provided with a movable component configured to push the powder to reciprocate in a vertical direction, to drive the powder to spread evenly in the brewing chamber during a vertical movement thereof; and
a first driving mechanism, drivingly connected to the movable component.

131. The brewing module applied to the beverage preparation device according to claim 130, wherein the movable component is configured as a first piston component vertically movable in the brewing chamber; and the first piston component is sealingly arranged in the brewing chamber, constituting a closed bottom chamber wall of the brewing chamber.

132. The brewing module applied to the beverage preparation device according to claim 131, wherein a vertical movement stroke of the first piston component includes a first stroke H1 for cooperating with a compacting mechanism to compact the powder for brewing and extraction in the brewing cylinder.

133. The brewing module applied to beverage preparation device according to claim 132, wherein the vertical movement stroke of the first piston component further includes a second stroke H2 for evenly spreading the powder in the brewing cylinder, wherein H2 is smaller than H1.

134. The brewing module applied to the beverage preparation device according to claim 132, wherein the vertical movement stroke of the first piston component further includes a third stroke H3 for pushing residue upwardly out of the brewing cylinder after powder extraction, wherein the H3 is greater than H1.

135. The brewing module applied to the beverage preparation device according to claim 133, wherein a speed of the first piston component during the first stroke H1 is V1, and a speed of the first piston component during the second stroke H2 is V2, wherein V1 is less than V2.

136. The brewing module applied to the beverage preparation device according to claim 131, wherein the first driving mechanism comprises a first driver, the first driver has a telescopic output shaft configured to reciprocate a telescopic movement in the vertical direction, and the telescopic output shaft is connected to the first piston component.

137. The brewing module applied to the beverage preparation device according to claim 131, wherein the first driving mechanism comprises:
a drive rod, the drive rod being arranged to be rotatable about a vertical axis and translatable along the vertical direction, the drive rod being connected to the first piston component; and
a guide component, fixed relative to the brewing container, and connected to the drive rod; one of connections between the guide component and the drive rod is provided with a guide groove, and a remaining one of connections between the guide component and the drive rod is provided with a guide protrusion slidingly connected and cooperating with the guide groove;
wherein a vertical movement stroke of the first piston component includes a first stroke H1 for cooperating with a compacting mechanism to compact the powder for brewing and extraction in the brewing cylinder, a second stroke H2 for evenly spreading the powder in the brewing cylinder, and a third stroke H3 for pushing grounds upwardly out of the brewing cylinder after powder extraction.

138. The brewing module applied to the beverage preparation device according to claim 137, wherein the first driving mechanism further comprises:
a driver, having a rotary output shaft rotatable about a vertical axis, the drive rod being connected to the rotary output shaft to be driven by the rotary output shaft to rotate about the vertical axis;
a driving gear, coaxially installed on the rotary output shaft; and
a driven gear, arranged beside the driving gear and meshing with the driving gear;
wherein the driven gear is provided with internal threads, the drive rod is provided with external threads, and the internal threads and the external threads are threadedly connected and cooperate with each other.

139. The brewing module applied to the beverage preparation device according to claim 137, wherein the driver and the drive rod are arranged beside the brewing container; and the first driving mechanism further comprises:
a piston rod, fixedly connected to the first piston component, and arranged side by side and spaced apart from the drive rod; and
a linkage component, linking the drive rod and the piston rod.

140. The brewing module applied to the beverage preparation device according to claim 138, wherein the guide component is configured in a tubular shape and movably sleeved on an outside of the drive rod; a peripheral side wall of the guide component defines an annular installation groove;
the brewing module applied to the beverage preparation device further comprises:
at least two connecting components, the at least two connecting component comprising a first ring portion, a second ring portion and a support portion connecting the first ring portion and the second ring portion; the first ring portion being fixedly sleeved on an outside of the brewing container; the second ring portion being fixedly sleeved in the annular installation groove; the at least two connecting components being arranged spaced apart in the annular installation groove along the vertical direction; and
a stopper member, configured in a tubular shape, the stopper member being fixedly sleeved in the annular installation groove and abutted between the connecting components to limit the connecting components together with a side groove wall of the annular installation groove.

141. The brewing module applied to the beverage preparation device according to claim 131, wherein a manufacturing material of the brewing container is a ceramic material.

142. The brewing module applied to the beverage preparation device according to claim 137, wherein the guide groove comprises a third groove segment extending along the vertical direction, so that when the guide protrusion slides along the third groove segment, a rotational motion of the drive rod about a vertical axis is converted into a translational motion of the first piston component along the vertical direction; the first stroke H1, the second stroke H2 and the third stroke H3 are all formed by a vertical sliding stroke of the guide protrusion in the third groove segment.

143. The brewing module applied to the beverage preparation device according to claim 141, further comprising a base for installing the brewing device and driving mechanisms; wherein the base defines a powder-receiving position and a brewing position which are spaced apart from each other in a horizontal direction, and the brewing container is reciprocally movably arranged between the powder-receiving position and the brewing position.

144. The brewing module applied to the beverage preparation device according to claim 142, wherein the guide groove further comprises a second groove segment extending along a circumferential direction of the drive rod, and a first groove segment extending along the vertical direction; the second groove segment has a first end and a second end which are oppositely arranged in the circumferential direction of the drive rod; the first end is connected to the third groove segment, and the second end is connected to the first groove segment, so that when the guide protrusion slides to the first end, the guide protrusion drives the brewing container to move to the brewing position, and when the guide protrusion moves to the second end, the brewing container is located at the brewing position.

145. The brewing module applied to the beverage preparation device according to claim 143, wherein in the circumferential direction of the drive rod, the second groove segment gradually extends obliquely toward one axial end of the drive rod; and/or
the guide groove further comprises a fourth groove segment, and the fourth groove segment extends along the circumferential direction of the drive rod, and connects ends of the first groove segment and the third groove segment that are away from the second groove segment, respectively.
